# EUROPEAN PATENT APPLICATION

(11) **EP 4 645 051 A1**
(43) Date of publication of application: **05.11.2025**
(21) Application number: 24810255.0
(22) Date of filing: 13.05.2024
(51) Int. Cl.: G06F 3/0486

(54) **DATA TRANSMISSION METHOD, SYSTEM AND RELATED APPARATUS**

(30) Priority: 19.05.2023 CN 202310577009
(71) Applicant: Huawei Technologies Co., Ltd., Shenzhen, Guangdong 518129 (CN)
(72) Inventor: HAN, Zhengshi, Shenzhen, Guangdong 518129 (CN); CHEN, Ning, Shenzhen, Guangdong 518129 (CN); CHENG, Shasha, Shenzhen, Guangdong 518129 (CN); GUO, Xiaoning, Shenzhen, Guangdong 518129 (CN)
(74) Representative: MERH-IP Matias Erny Reichl Hoffmann Patentanwälte PartG mbB
(86) International application number: PCT/CN2024/092927
(87) International publication number: WO 2024/240008

(57) **Abstract**

This application discloses a data transmission method and system, and a related apparatus. An electronic device detects a first operation for a first control, and creates a first dragged object by using a view module. The first dragged object is used to carry dragging data of the first control, and the dragging data includes one or more of an image, a text, and a hyperlink. The electronic device transmits the first dragged object to a transfer station by using a drag framework, and transmits the first dragged object to a second application by using the transfer station. The electronic device displays, based on the first dragged object, the first control on a second interface by using the second application. In this way, cross-application data transmission can be implemented, an operation is simple, and no application adaptation is required.

## Description

This application claims priority to Chinese Patent Application No. 202310577009.8, filed with the China National Intellectual Property Administration on May 19, 2023 and entitled "DATA TRANSMISSION METHOD AND SYSTEM, AND RELATED APPARATUS", which is incorporated herein by reference in its entirety.

### TECHNICAL FIELD

This application relates to the field of communication technologies, and in particular, to a data transmission method and system, and a related apparatus.

### BACKGROUND

With development of communication technologies, electronic devices are more closely related to life. In a process of using an electronic device, a user often needs to share data such as an image or a text in an application with another application.

The electronic device needs to receive and respond to a plurality of operations of the user, to transmit data of one application to another application. For example, in an image transmission scenario, the electronic device may store an image in an application 1 to a local album, start an album application, and transmit the image to an application 2 by using a sharing function of the album application. For another example, in a text transmission scenario, the electronic device may copy a text in an application 1 to a clipboard. After closing the application 1 and starting an application 2, the electronic device may paste the text in the clipboard to the application 2.

In this way, cross-process transmission of data such as an image and a text can be implemented, but operation steps are complex and efficiency is low.

### SUMMARY

This application provides a data transmission method and system, and a related apparatus, to implement cross-process, cross-application, and even cross-device data transmission.

According to a first aspect, this application provides a data transmission method, applied to a first electronic device, including: displaying a first interface of a first application, where the first interface includes a first control; receiving a first operation of a user for the first control; creating, in response to the first operation, a first dragged object by using a view module, where the first dragged object is used to carry dragging data of the first control, and the dragging data includes any one or more of a text, an image, or a hyperlink; drawing, based on the first dragged object, a first drag layer of the first control by using a drag framework, where display content of the first drag layer is the same as display content of the first control; displaying a transfer station icon and the first drag layer; when the first drag layer moves to the transfer station icon, storing the first dragged object by using the transfer station; displaying a first thumbnail of the first control on the transfer station icon; displaying a second interface of a second application, where a transfer station sidebar is displayed on the second interface, and the first thumbnail is displayed in the transfer station sidebar; receiving a second operation of dragging the first thumbnail to the second interface by the user; sending, in response to the second operation, the first dragged object to the second application by using the transfer station; and displaying, based on the first dragged object, the first control on the second interface by using the second application.

In this way, the first electronic device may obtain the first dragged object of the first control by using a module like the view module at a framework layer, and implement cross-process transmission of the first dragged object by using the transfer station. An operation is simple, and no application adaptation is required.

In a possible implementation, creating the first dragged object by using the view module specifically includes: obtaining a type of the first control by using the view module; obtaining, based on the type of the first control, the dragging data of the first control by using the view module; and generating, based on the type of the first control and the dragging data of the first control, the first dragged object by using the view module, where a type of the first dragged object is the same as the type of the first control.

In a possible implementation, the view module includes a first module and a second module. Generating, based on the type of the first control and the dragging data of the first control, the first dragged object by using the view module specifically includes: when the type of the first control is a first type, generating, based on the dragging data of the first control and the first type, the first dragged object by using the first module; or when the type of the first control is a second type, generating, based on the dragging data of the first control and the second type, the first dragged object by using the second module.

In this way, when the type of the first control is an image type, the first electronic device may generate the first dragged object by using an image view module. When the type of the first control is a text type, the first electronic device may generate the first dragged object by using a text view module. When the type of the first control is a web view (webview) type, the first electronic device may generate the first dragged object by using a web view module.

In a possible implementation, obtaining the dragging data of the first control by using the view module specifically includes: when the type of the first control is the first type, obtaining the dragging data of the first control by using the first module; or when the type of the first control is the second type, obtaining the dragging data of the first control by using the second module.

In this way, when the type of the first control is an image type, the first electronic device may obtain the dragging data of the first control by using the image view module. When the type of the first control is a text type, the first electronic device may obtain the dragging data of the first control by using the text view module. When the type of the first control is a web view (webview) type, the first electronic device may obtain the dragging data of the first control by using the web view module.

In a possible implementation, the first operation is a combined operation, and the first operation includes a third operation and a fourth operation. Creating, in response to the first operation, the first dragged object by using the view module specifically includes: obtaining, in response to the third operation, a type of the first control by using the view module; creating, based on the type of the first control, an empty dragged object by using the view module, where a type of the empty dragged object is the same as the type of the first control; obtaining, in response to the fourth operation, the dragging data of the first control by using the view module; and filling, by using the view module, the dragging data of the first control into the empty dragged object, to obtain the first dragged object.

In a possible implementation, the first control is a web view (webview) control. Before displaying the second interface of the second application, the method further includes: receiving a fifth operation of the user for the first control; and displaying a third interface in response to the fifth operation. After displaying, based on the first dragged object, the first control on the second interface by using the second application, the method further includes: receiving a sixth operation of the user for the first control; and
displaying the third interface in response to the sixth operation, where the fifth operation is the same as the sixth operation.

In a possible implementation, storing the first dragged object by using the transfer station specifically includes: storing, based on a correspondence between the first dragged object and the first thumbnail, the first dragged object by using the transfer station.

In a possible implementation, the type of the first control is a third type. The type of the first dragged object is the third type, and the first dragged object is empty. The method further includes: obtaining, in response to the first operation, an image of the first control by using the view module. Drawing, based on the first dragged object, the first drag layer of the first control by using the drag framework specifically includes: drawing, based on the image of the first control and the first dragged object, the first drag layer of the first control by using the drag framework. After displaying the transfer station icon and the first drag layer, the method further includes: obtaining, based on the image of the first control, a text of the first control by using the transfer station. Storing the first dragged object by using the transfer station specifically includes: storing, based on a relationship between the first thumbnail and the text of the first control, the text of the first control and the first dragged object by using the transfer station.

According to a second aspect, this application provides a data transmission system, including: a first electronic device, a server, and a second electronic device. The first electronic device is configured to display a first interface of a first application, where the first interface includes a first control. The first electronic device is configured to receive a first operation of a user for the first control. The first electronic device is configured to create, in response to the first operation, a first dragged object by using a view module, where the first dragged object is used to carry dragging data of the first control, and the dragging data includes any one or more of a text, an image, and a hyperlink. The first electronic device is configured to draw, based on the first dragged object, a first drag layer of the first control by using a drag framework, where display content of the first drag layer is the same as display content of the first control. The first electronic device is configured to display a transfer station icon and the first drag layer. When the first drag layer moves to the transfer station icon, the first electronic device is configured to store the first dragged object by using the transfer station. The first electronic device is configured to display a first thumbnail of the first control on the transfer station icon. After storing the first dragged object by using the transfer station, the first electronic device is configured to send the first dragged object to the server by using the transfer station. The second electronic device is configured to obtain the first dragged object from the server by using a transfer station of the second electronic device. The second electronic device is configured to display a fourth interface of a third application, where a transfer station sidebar is displayed on the fourth interface, and the first thumbnail is displayed in the transfer station sidebar. The second electronic device is configured to receive a seventh operation of dragging the first thumbnail to the fourth interface by the user. The second electronic device is configured to send, in response to the seventh operation, the first dragged object to the third application by using the transfer station of the second electronic device. The second electronic device is configured to display, based on the first dragged object, the first control on the second interface by using the third application.

In this way, the first electronic device may implement cross-device data transmission by using the transfer station and the server, and does not need to perform application adaptation. An operation is simple.

According to a third aspect, this application provides an electronic device. The electronic device is a first electronic device and includes one or more processors and one or more memories. The one or more memories are coupled to the one or more processors. The one or more memories are configured to store computer program codes, and the computer program code includes computer instructions. When the one or more processors execute the computer instructions, a communication apparatus is enabled to perform the data transmission method according to any one of the possible implementations of the foregoing aspects.

According to a fourth aspect, an embodiment of this application provides a computer storage medium, including computer instructions. When the computer instructions are run on a first electronic device, the first electronic device is enabled to perform the data transmission method according to any possible implementation of any one of the foregoing aspects.

According to a fifth aspect, an embodiment of this application provides a computer program product. When the computer program product runs on the foregoing first electronic device, the first electronic device is enabled to perform the data transmission method in any possible implementation of any one of the foregoing aspects.

For beneficial effect brought by the third aspect to the fifth aspect, refer to beneficial effect brought by the first aspect.

### BRIEF DESCRIPTION OF DRAWINGS

FIG. 1A is a diagram of a hardware structure of an electronic device 100 according to an embodiment of this application;
FIG. 1B is a diagram of a hardware structure of a server 3000 according to an embodiment of this application;
FIG. 2A to FIG. 2M are diagrams of a group of interfaces of cross-application transmission of an image according to an embodiment of this application;
FIG. 3A to FIG. 3L are diagrams of a group of interfaces of cross-application transmission of a text according to an embodiment of this application;
FIG. 4A to FIG. 4L are diagrams of a group of interfaces of cross-application transmission of a web view control according to an embodiment of this application;
FIG. 5A to FIG. 5H are diagrams of a group of interfaces for simultaneously dragging a plurality of controls to a transfer station according to an embodiment of this application;
FIG. 6A to FIG. 6L are diagrams of a group of interfaces for dragging an interface element including a plurality of text controls to a transfer station according to an embodiment of this application;
FIG. 7A to FIG. 7M are diagrams of a group of interfaces for dragging an interface element including a plurality of image controls to a transfer station according to an embodiment of this application;
FIG. 8A and FIG. 8B are a diagram of a module interaction procedure of transmitting data in an application 1 to a transfer station according to an embodiment of this application;
FIG. 9A to FIG. 9C are diagrams of three module interaction procedures of generating a dragged object of a control based on a type of the control according to an embodiment of this application;
FIG. 10 is a diagram of determining execution logic based on a drag operation of a user by a decorview according to an embodiment of this application;
FIG. 11A and FIG. 11B are a diagram of a module interaction procedure of transmitting a custom text control in an application 1 to a transfer station according to an embodiment of this application;
FIG. 12 is a diagram of a module interaction procedure of transmitting data in a transfer station to an application 2 according to an embodiment of this application;
FIG. 13A and FIG. 13B are a schematic flowchart of simultaneously dragging a plurality of controls by using a data transmission method according to an embodiment of this application;
FIG. 14A to FIG. 14C are a schematic flowchart of dragging an interface element including a plurality of controls by using a data transmission method according to an embodiment of this application;
FIG. 15A is a diagram of a software architecture of an electronic device 100 according to an embodiment of this application;
FIG. 15B is a diagram of a structure of a decorview according to an embodiment of this application;
FIG. 16 is a diagram of a structure of a data transmission system 10 according to an embodiment of this application; and
FIG. 17 is a schematic flowchart of a data transmission method according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a Widget that is displayed on a display of the electronic device.

The following describes a cross-process transmission manner of an image provided in an embodiment of this application.

When an electronic device displays an image control of an application 1, the application 1 may receive a touch-and-hold and drag operation of a user for the image control, and in response to the touch-and-hold and drag operation, obtain an image of the image control, and transmit the image to a transfer station by using a drag framework. The transfer station may receive and transmit the image to the application 2 in response to an operation of the user. In this way, cross-process transmission of the image can be implemented.

However, because the application needs to respond to the touch-and-hold and drag operation of the user, when the foregoing manner is used to perform cross-process transmission of the image, adaptation of a third-party application is required. In addition, data (for example, a parameter of the image) transmitted by the application 1 by using the drag framework may be inconsistent with data that the user actually wants to transmit, which affects user experience.

This application provides a data transmission method. An electronic device may include a view (view), a drag framework, and a transfer station. When an interface 1 (including a control 1) of an application 1 is displayed, an operation 1 (for example, a touch-and-hold and drag operation) of a user for the control 1 is detected. The view may obtain a type and dragging data of the control 1, create a dragged object of the control 1 based on the type and the dragging data of the control 1, and initiate drag by using the drag framework, to transmit the dragged object of the control 1 to the transfer station. The dragging data includes one or more of an image, a text, and a hyperlink. The transfer station may display a thumbnail 1 of the control 1 based on the dragging data and/or the type of the control 1. When an interface of an application 2 is displayed, and the transfer station displays the thumbnail 1 on the interface, the transfer station detects an operation 2 (for example, a touch-and-hold and drag operation) of the user for the thumbnail 1, and may transmit the dragged object of the control 1 to the application 2 by using the drag framework, and display the control 1 in the application 2. In embodiments of this application, a thumbnail of a control is an image whose display content is the same as display content of the control and whose display size is less than or equal to a display size of the control. The display content of the control may include an image and/or a text.

In this way, data such as an image control, a text control, and a web view control may be transmitted from the application 1 to the application 2, to implement cross-process data transmission. An operation is convenient and efficient. In addition, according to the data transmission method provided in this application, the view may obtain the type and the dragging data of the control 1 when the operation 1 of the user for the control 1 is detected, and the application 1 does not need to send the dragging data and the type of the control 1. Therefore, adaptation of the application 1 is not required.

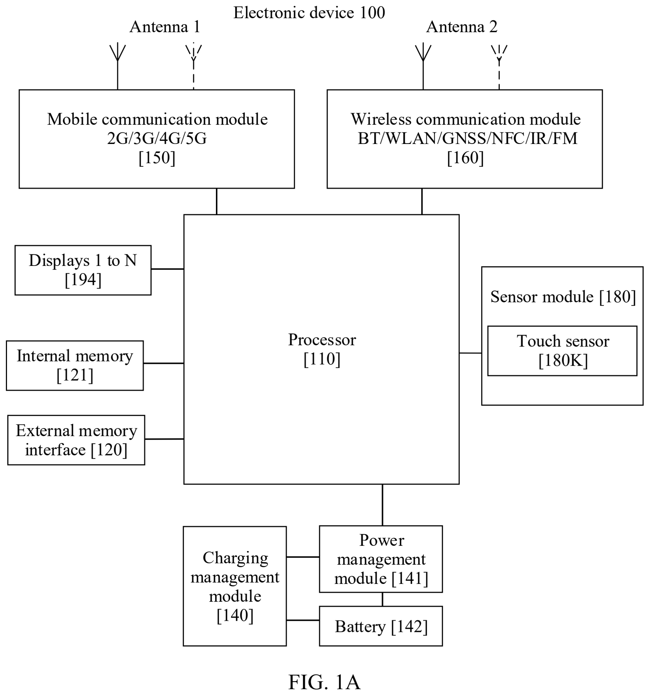

FIG. 1A is a diagram of a structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 100 may include a processor 110, an external memory interface 120, an internal memory 121, a charging management module 140, a power management module 141, a battery 142, a sensor module 180, a display 194, and the like. The sensor module 180 may include a touch sensor 180K, and optionally, may further include one or more of the following sensors: a pressure sensor, a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, and the like. In some embodiments, the electronic device 100 may further include the following communication modules, for example, an antenna 1, an antenna 2, a mobile communication module 150, and a wireless communication module 160, configured to implement wireless communication.

It may be understood that the structure shown in this embodiment of the present invention does not constitute a specific limitation on the electronic device 100. In other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments in which the charger is a wired charger, the charging management module 140 may receive a charging input from the wired charger through the USB interface. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. The mobile communication module 150 may provide a solution that includes wireless communication such as 2G, 3G, 4G, and 5G and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute instructions to generate or change display information.

The display 194 is configured to display an image, a video, and the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may include one or more random access memories (random access memory, RAM) and one or more non-volatile memories (non-volatile memory, NVM). The random access memory may be directly read and written by using the processor 110. The random access memory may be configured to store executable programs (such as machine instructions) in an operating system or another running program, and may be further configured to store data of a user, data of an application, and the like. The non-volatile memory may store an executable program, data of a user and an application, and the like, and may be loaded into the random access memory in advance, so that the processor 110 directly performs reading and writing.

The external memory interface 120 may be configured to connect to an external non-volatile memory, to expand a storage capability of the electronic device 100. The external non-volatile memory communicates with the processor 110 through the external memory interface 120, to implement a data storage function. For example, a file such as music or a video is stored in the external nonvolatile memory.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor, to determine a type of a touch event. A visual output related to the touch operation may be provided on the display 194. In some other embodiments, the touch sensor 180K may alternatively be disposed on a surface of the electronic device 100 at a location different from that of the display 194.

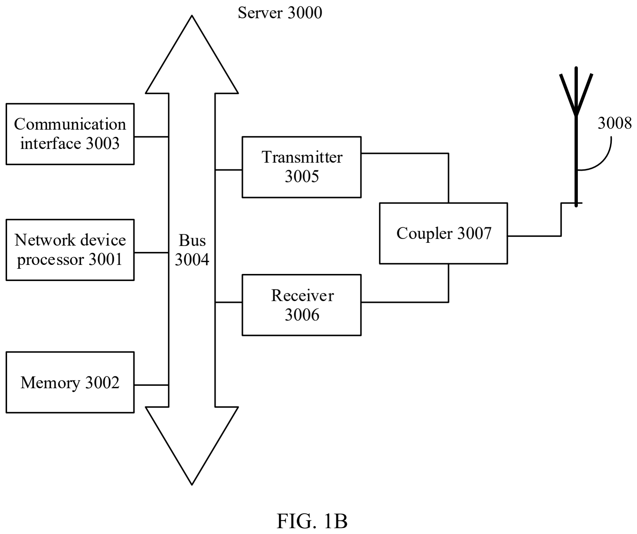

FIG. 1B is a diagram of a hardware structure of a server 3000 according to an embodiment of this application.

As shown in FIG. 1B, the server 3000 may include one or more network device processors 3001, a memory 3002, a communication interface 3003, a transmitter 3005, a receiver 3006, a coupler 3007, and an antenna 3008. These components may be connected through a bus 3004 or in another manner. In FIG. 1B, for example, the components are connected through the bus. Specifically,
the communication interface 3003 may be used by the server 3000 to communicate with another communication device, for example, an electronic device used by a consumer of a project. Specifically, the communication interface 3003 may be a 3G communication interface, a long term evolution (LTE) (4G) communication interface, a 5G communication interface, a WLAN communication interface, a WAN communication interface, or the like. In addition to a wireless communication interface, the server 3000 may further configure a wired communication interface 3003 to support wired communication.

In some embodiments of this application, the transmitter 3005 and the receiver 3006 may be considered as a wireless modem. The transmitter 3005 may be configured to perform transmission processing on a signal output by the network device processor 3001. The receiver 3006 is configured to receive a signal. In the server 3000, there may be one or more transmitters 3005 and receivers 3006. The antenna 3008 may be configured to: convert electromagnetic energy in a transmission line into an electromagnetic wave in free space, or convert an electromagnetic wave in free space into electromagnetic energy in a transmission line. The coupler 3007 may be configured to: divide the mobile communication signal into a plurality of signals, and distribute the plurality of signals to a plurality of receivers 3006. It may be understood that the antenna 3008 of the network device may be implemented as a large-scale antenna array.

The memory 3002 is coupled to the network device processor 3001, and is configured to store various software programs and/or a plurality of sets of instructions. Specifically, the memory 3002 may include a high-speed random access memory, or may include a nonvolatile memory, for example, one or more disk storage devices, a flash memory device, or another nonvolatile solid-state storage device.

The memory 3002 may store an operating system (referred to as a system below), for example, an embedded operating system such as uCOS, VxWorks, or RTLinux. The memory 3002 may further store a network communication program, and the network communication program may be used to perform communication with another communication device.

In embodiments of this application, the memory 3002 may store a program for implementing the data transmission method according to an embodiment of this application, and the like.

In this embodiment of this application, the network device processor 3001 may be configured to: read and execute computer-readable instructions. Specifically, the network device processor 3001 may be configured to: invoke a program stored in the memory 3002, for example, an implementation program of the data transmission method provided in one or more embodiments of this application, and execute instructions included in the program.

It should be noted that the server 3000 shown in FIG. 1B is merely an implementation in embodiments of this application. During actual application, the server 3000 may alternatively include more or fewer components. This is not limited herein.

The following describes, with reference to an application scenario, a data transmission method provided in embodiments of this application.

In some application scenarios, the electronic device 100 displays an interface 1 of an application 1 (for example, a chat application). The interface 1 may include a control 1, and the control 1 is an image control. The electronic device 100 may receive an operation 1 (for example, a touch-and-hold and drag operation) of a user for the control 1, and may display a transfer station icon and a drag layer of the control 1 on the interface 1 in response to the operation 1, where the drag layer moves along a track of the operation 1. After detecting a release operation of the user in an area in which the transfer station icon is located, the electronic device 100 may disable displaying of the drag layer, and display a thumbnail of the control 1 on the transfer station icon. A thumbnail of a control is an image whose display content is the same as display content of the control and whose display size is less than or equal to a display size of the control.

In this way, the electronic device 100 may drag the image control in the application 1 to a transfer station through dragging or the like, so that the image control is subsequently transmitted to another process (for example, another application) by using the transfer station.

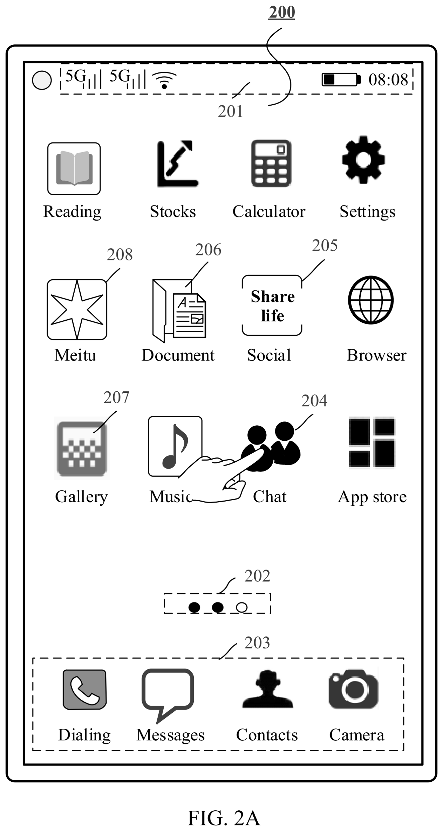

For example, as shown in FIG. 2A, the electronic device 100 displays a home screen 200. A page on which an application icon is placed is displayed on the home screen 200. The page includes a plurality of application icons (for example, a reading application icon, a settings application icon, a browser application icon, a chat application icon 204, a social application icon 205, a document application icon 206, a gallery application icon 207, and a Meitu application icon 208). Optionally, a page indicator 202 is further displayed on and included in a lower part of the page on which the application icon is placed, to indicate a total quantity of pages on the home screen and a position relationship between a currently displayed page and another page. For example, the home screen 200 may include three pages. A white dot in the page indicator is located in a third position from left, indicating that the currently displayed page is the third page from left of the three pages. Optionally, a status bar 201 is further displayed on an upper part of the page on which the application icon is placed. The status bar 201 may include information such as a strength indicator of a communication signal, a battery level value, and time. Further optionally, there may be a dock (dock) area 203 on a lower side of the page indicator. The dock area 203 may include one or more dock icons (for example, a dialing application icon, a messages application icon, a contacts application icon, and a camera application icon). The one or more dock icons in the dock area can remain displayed during page switching.

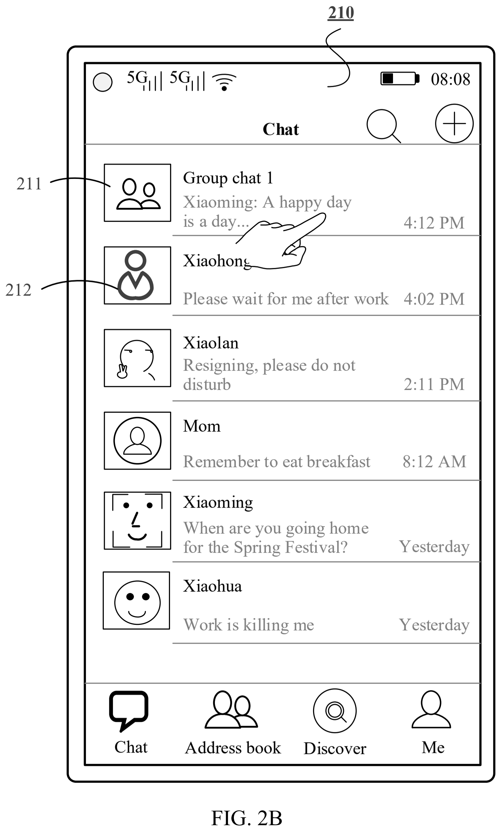

The electronic device 100 may receive a tap operation of the user for the chat application icon 204, and display, in response to the tap operation, a chat application interface 210 shown in FIG. 2B. The chat application interface 210 may be used to display one or more chat entries.

As shown in FIG. 2B, the chat application interface 210 may include the one or more chat entries and one or more auxiliary controls, for example, a chat control, a discovery control, an address book control, and a search control. The one or more chat entries may include a group chat entry 211, a private chat entry 212, and the like. Each chat entry may be used to trigger the electronic device 100 to display a chat interface corresponding to the chat entry.

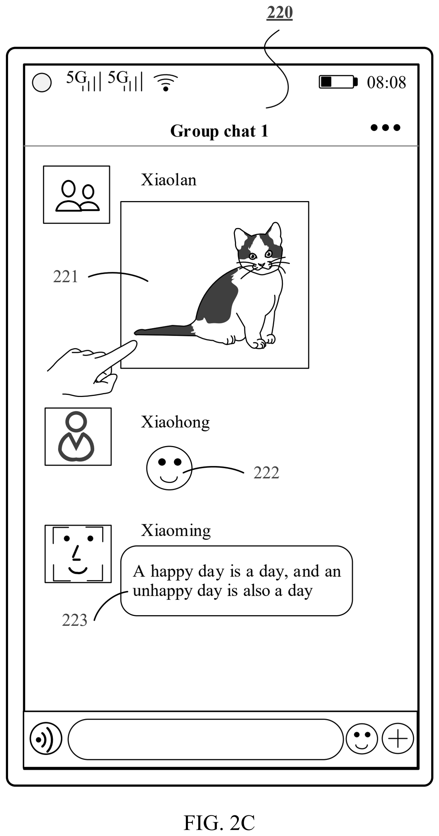

The electronic device 100 may receive a tap operation of the user for the group chat entry 211, and display, in response to the tap operation, a group chat interface 220 shown in FIG. 2C. The group chat interface 220 may be used to display one or more pieces of group chat content.

As shown in FIG. 2C, the group chat interface 220 may include the one or more pieces of group chat content, and the group chat content may be content such as an image (including a sticker), a text, a voice, or a video that is sent by a group chat member. The one or more pieces of group chat content may include an image control 221, an image control 222, a text control 223, and the like. A profile picture and a name may be further displayed next to each piece of group chat content, to indicate that the group chat content is sent by a group chat member corresponding to the profile picture and the name.

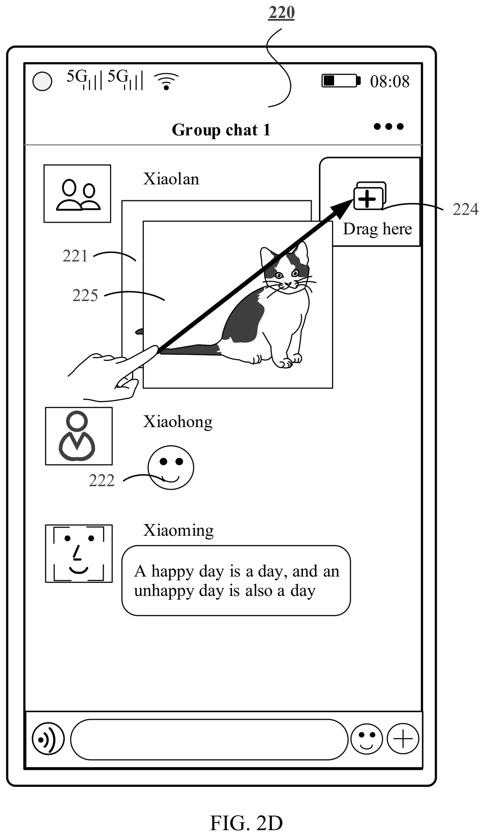

The electronic device 100 may receive a touch-and-hold and drag operation (including a touch and hold operation and a drag operation) of the user for the image control 221, and display a transfer station icon 224 and a drag layer 225 of the image control 221 on the group chat interface 220 in response to the touch-and-hold and drag operation, as shown in FIG. 2D.

As shown in FIG. 2D, the electronic device 100 displays the transfer station icon 224 and the drag layer 225 on the group chat interface 220. The transfer station icon 224 indicates, to the user, that the electronic device 100 has started the transfer station. A text and/or a pattern may be further displayed on the transfer station icon 224. For example, the text displayed on the transfer station icon 224 may be "Drag here". Display content of the drag layer 225 is the same as display content (namely, an image) of the image control 221, and a display size of the drag layer 225 may be the same as or different from a display size of the image control 221. In some embodiments, the drag layer 225 and the image control 221 may be completely the same. To be specific, parameters such as the display content, the display size, and definition of the drag layer 225 and the image control 221 are the same. This is not limited herein in this application. It should be noted that the drag layer 225 may move along a track of a drag operation of the user.

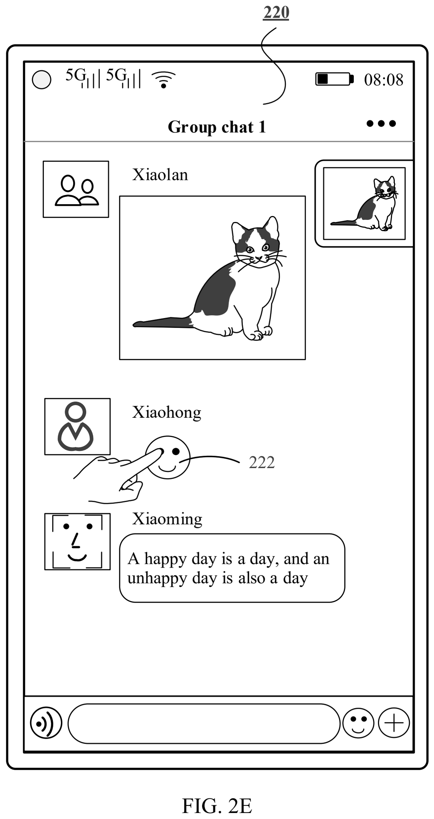

The electronic device 100 may receive the drag operation of the user for the drag layer 225, to enable, in response to the drag operation, the drag layer 225 to move toward the transfer station icon 224 along the track of the drag operation. When detecting a release operation of the user in an area in which the transfer station icon 224 is located, as shown in FIG. 2E, the electronic device 100 may disable displaying of the drag layer 225, and display a thumbnail 226 of the image control 221 on the transfer station icon 224, where a display size of the thumbnail 226 is less than a display size of the transfer station icon 224.

As shown in FIG. 2E, display content of the thumbnail 226 is the same as display content of the image control 221, the display size of the thumbnail 226 is less than the display size of the transfer station icon 224, and the display size of the thumbnail 226 is less than or equal to the display size of the image control 221. In some embodiments, if the display size of the image control 221 is less than the display size of the transfer station icon 224, the display size of the thumbnail 226 may alternatively be the same as the display size of the image control.

In some embodiments, the electronic device 100 may alternatively sequentially drag a plurality of image controls to the transfer station.

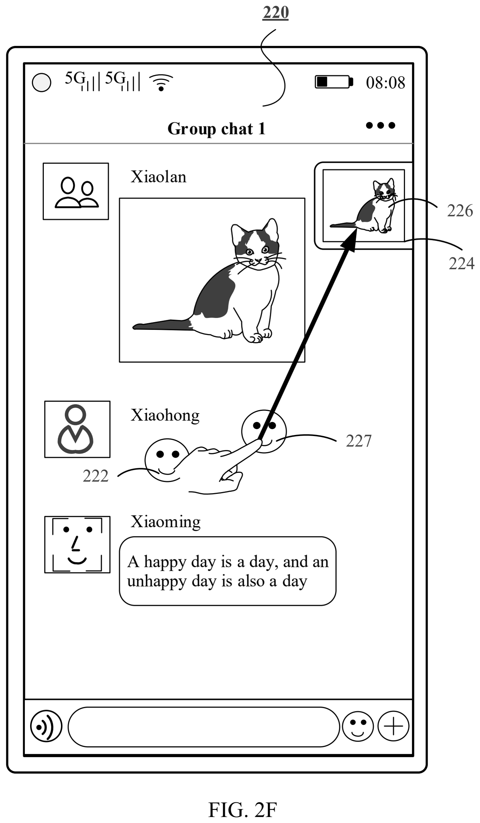

For example, as shown in FIG. 2E, the electronic device 100 displays the group chat interface 220, and the electronic device 100 may receive and respond to a touch-and-hold and drag operation of the user for the image control 222. As shown in FIG. 2F, the electronic device 100 may display a drag layer 227 of the image control 222.

As shown in FIG. 2F, display content of the drag layer 227 is the same as display content of the image control 222. The drag layer 227 may move along a track of a drag operation of the user. For other content of the drag layer 227, refer to related descriptions of the drag layer 225 shown in FIG. 2D. Details are not described herein again.

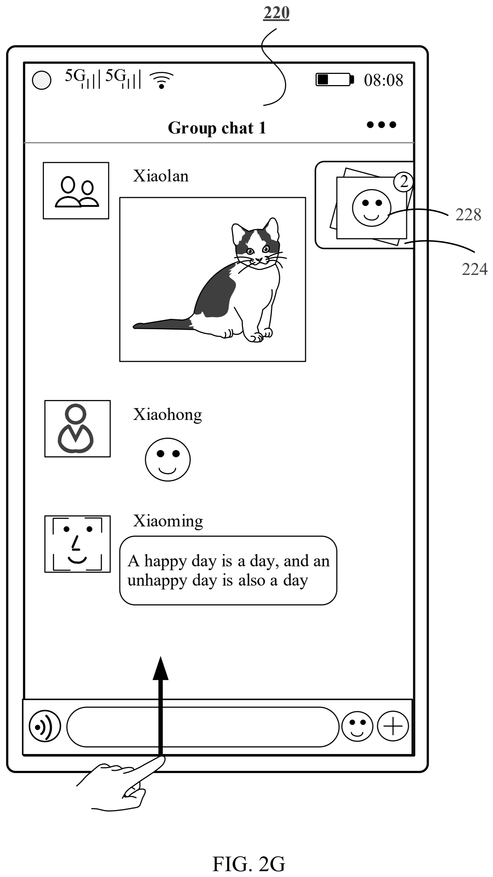

The electronic device 100 may receive the drag operation of the user for the drag layer 227, to enable, in response to the drag operation, the drag layer 227 to move toward the transfer station icon 224 along the track of the drag operation. When receiving a release operation of the user in the area in which the transfer station icon 224 is located, as shown in FIG. 2G, the electronic device 100 may disable displaying of the drag layer 227, and display a thumbnail 228 on the transfer station icon 224.

As shown in FIG. 2G, display content of the thumbnail 228 is the same as the display content of the image control 222. Because a display size of the image control 222 is less than the display size of the transfer station icon 224, a display size of the thumbnail 228 may be the same as the display size of the image control 222. In some embodiments, the thumbnail 228 may be displayed on the thumbnail 226 in an overlay manner. In some other embodiments, the electronic device 100 may alternatively disable displaying of the thumbnail 226, and display the thumbnail 228 on the transfer station icon 224. Optionally, a number identifier, for example, "2", may be further displayed on the thumbnail 228 (for example, at a position like an upper right corner or an upper left corner of the thumbnail 228), and the number identifier may indicate, to the user, a quantity of controls that are dragged to the transfer station.

After the image control is dragged to the transfer station, the electronic device 100 may store the image control in the transfer station. When the electronic device 100 displays an interface 2 of an application 2, and the transfer station icon is displayed on the interface 2, the electronic device 100 may receive an operation 2 (for example, a touch-and-hold and drag operation) of the user for the transfer station icon, and display all controls in the transfer station on the interface 2 in response to the operation 2.

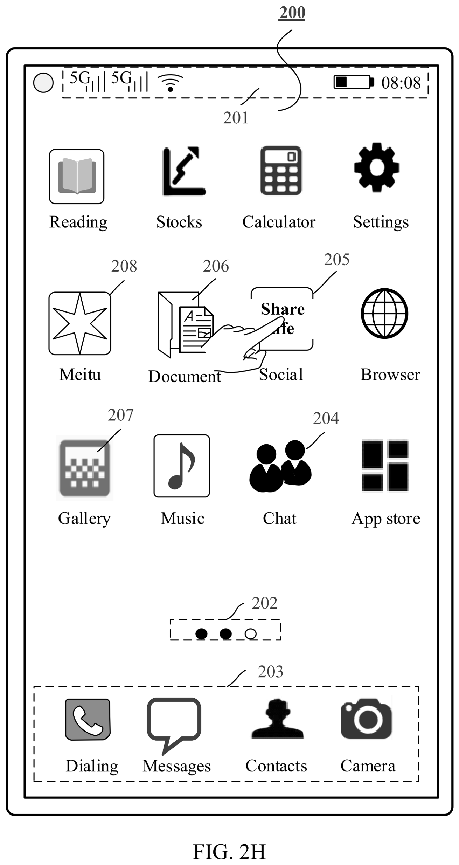

For example, when the electronic device 100 displays the group chat interface 220 shown in FIG. 2G, the electronic device 100 may receive an operation of sliding upward from a lower edge of a display by the user, and in response to the operation, disable displaying of the group chat interface 220, and display the home screen 200 shown in FIG. 2H.

As shown in FIG. 2H, the social application icon 205 may be displayed on the home screen 200. For other specific descriptions about the home screen 200, refer to related content shown in FIG. 2A. Details are not described herein again.

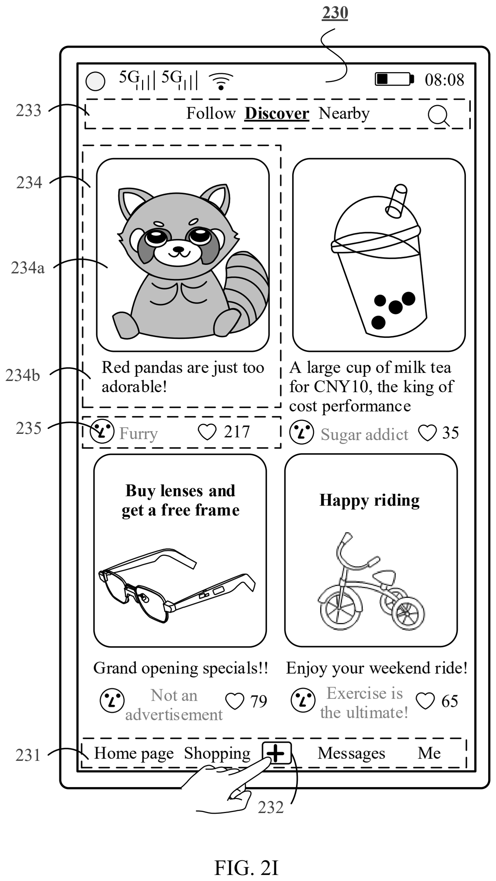

The electronic device 100 may receive a tap operation of the user for the social application icon 205, and display, in response to the tap operation, a social application interface 230 shown in FIG. 2I.

As shown in FIG. 2I, the social application interface 230 may include a bottom control area 231, a top control area 233, and one or more web view controls. The bottom control area 231 may include one or more controls (or options), for example, a new image and text control 232, a messages option, or a home page option. The one or more controls (or options) may be used to trigger the electronic device 100 to display a corresponding interface. For example, the new image and text control 232 may be used to trigger the electronic device 100 to display an image and text editing interface. The top control area 233 may include one or more controls (or options), for example, a search control, a discovery option, a follow option, a nearby option, and the like. The one or more controls (or options) are used to trigger the electronic device 100 to change the one or more web view controls displayed on the social application interface 230. The one or more web view controls may include a web view control 234, and the web view control 234 may be configured to trigger the electronic device 100 to display a corresponding web view interface. The web view control 234 may include an image control 234a and a text control 234b. Both the image control 234a and the text control 234b may be used to trigger the electronic device 100 to display the web view interface corresponding to the web view control 234. In some embodiments, auxiliary controls such as a publisher control 235 and a like control may be further displayed next to the web view control 234. The publisher control 235 may be configured to trigger the electronic device 100 to display a profile of or information about a publisher of the web view interface.

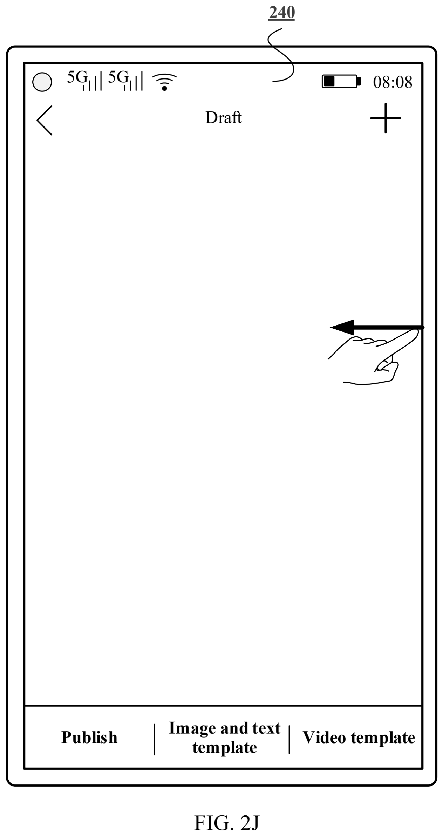

The electronic device 100 may receive a tap operation of the user for the new image and text control 232, and display, in response to the tap operation, an image and text editing interface 240 shown in FIG. 2J.

As shown in FIG. 2J, the image and text editing interface 240 may include one or more options, for example, a publish option, an image and text template option, and a video template option. The publish option may be used to trigger the electronic device 100 to publish image and text content of the image and text editing interface 240. The image and text template option may be used to trigger the electronic device 100 to display one or more image and text templates. The video template option may be used to trigger the electronic device 100 to display one or more video templates.

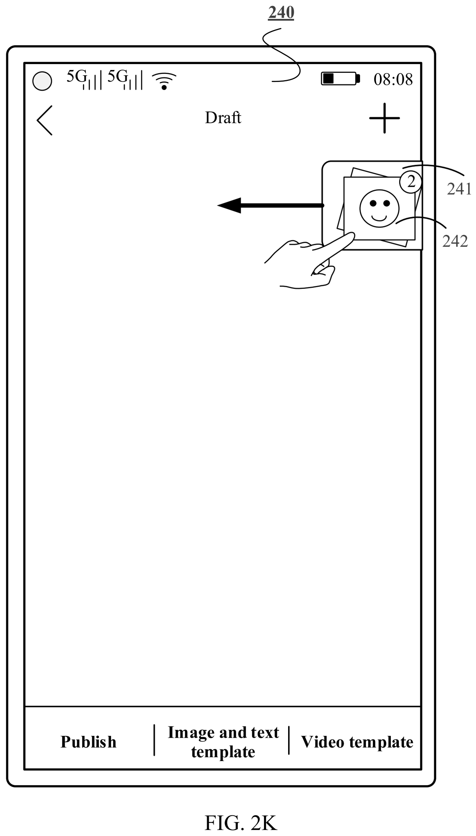

The electronic device 100 may receive an operation of sliding leftward from a right edge of the display (or an operation of sliding rightward from a left edge of the display) of the user, and display a transfer station icon 241 on the image and text editing interface 240 in response to the operation, as shown in FIG. 2K.

As shown in FIG. 2K, a thumbnail 242 may be displayed on the transfer station icon 241, and the thumbnail 242 may be the thumbnail 228 in the embodiment shown in FIG. 2G. In addition, a number identifier "2" may be further displayed in an upper right corner of the thumbnail 242, indicating that a quantity of controls currently stored in the transfer station is 2.

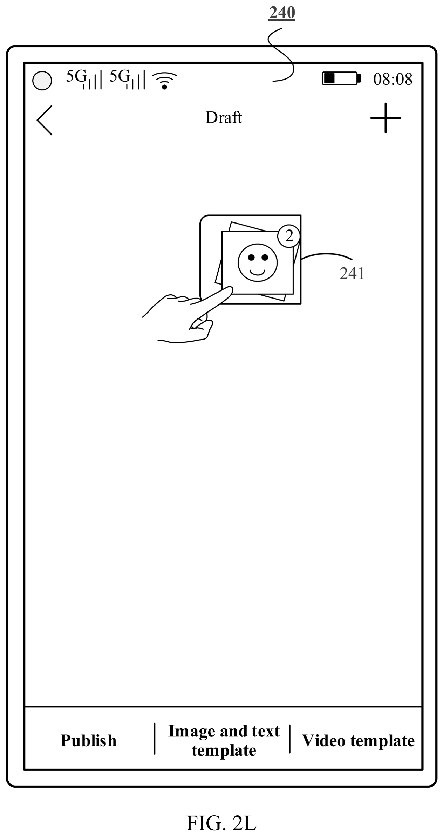

The electronic device 100 may receive a touch-and-hold and drag operation of the user for the transfer station icon 241, to enable, in response to the touch-and-hold and drag operation, the transfer station icon 241 to move along a track of the drag operation of the user, as shown in FIG. 2L.

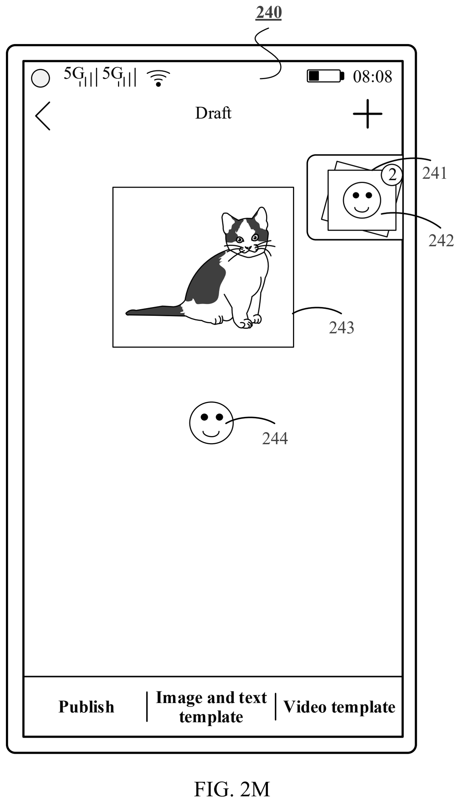

When the electronic device 100 detects a release operation of the user, in response to the release operation, the electronic device 100 may display all controls in the transfer station on the image and text editing interface 240, and redisplay the transfer station icon 241 at a position before dragging, as shown in FIG. 2M.

As shown in FIG. 2M, when controls that are dragged to the transfer station include the image control 221 and the image control 222 shown in FIG. 2C, the electronic device 100 may display an image control 243 and an image control 244 on the image and text editing interface 240, and redisplay the transfer station icon 241 at the position before dragging, and the thumbnail 242 is still displayed on the transfer station icon 241. The image control 243 is the same as the image control 221 shown in FIG. 2C, and the image control 244 is the same as the image control 222 shown in FIG. 2C. In some embodiments, display positions of the image control 243 and the image control 244 may be related to a position of the release operation of the user. For example, the electronic device 100 may display the image control 243 and the image control 244 by using the position of the release operation of the user as a center. It may be understood that a relationship between the display positions of the image control 243 and the image control 244 and the position of the release operation of the user may alternatively be another relationship. This is not limited in this application.

In some embodiments, after the electronic device 100 displays the transfer station icon on the interface 2 of the application 2, the electronic device 100 may alternatively receive a tap operation of the user for the transfer station icon, and display a transfer station sidebar in response to the tap operation, where one or more thumbnails are displayed in the transfer station sidebar. The electronic device 100 may receive a touch-and-hold and drag operation of the user for one of the thumbnails, and display, on the interface 2 in response to the touch-and-hold and drag operation, an image control (or another type of control) corresponding to the thumbnail. For a specific operation step, refer to related content in the following embodiment. Details are not described herein in this application.

It may be understood that the embodiment shown in FIG. 2A to FIG. 2M is merely an example. In embodiments of this application, the application 1 and the application 2 may alternatively be applications different from those in the foregoing embodiment, and the user may alternatively drag more or fewer image controls than those in the foregoing embodiment to the transfer station. This is not limited in this application. In some embodiments, the transfer station icon may alternatively be displayed in a form of floating bubble, top floating bar, or the like. This is not limited in this application.

In some application scenarios, the electronic device 100 displays an interface 1 of an application 1 (for example, a chat application). The interface 1 may include a control 1, and the control 1 is a text control. The electronic device 100 may receive an operation 1 (for example, a touch-and-hold and drag operation) of a user for the control 1, and display a transfer station icon and a drag layer of the control 1 on the interface 1 in response to the operation 1, where the drag layer moves along a track of the drag operation. After detecting a release operation of the user in an area in which the transfer station icon is located, the electronic device 100 may disable displaying of the drag layer, and display a thumbnail of the control 1 on the transfer station icon. It should be noted that, the control 1 is a text control, and a thumbnail of the text control may be an image whose display content is the same as display content of the text control and whose display size is less than or equal to a display size of the text control. In some embodiments, a thumbnail of a text control may alternatively be a preset document pattern, and the document pattern may indicate that a control dragged to a transfer station is a text control.

In this way, the electronic device 100 may drag a text control in the application 1 to the transfer station through dragging or the like, so that the text control is subsequently transmitted to another process (for example, another application) by using the transfer station.

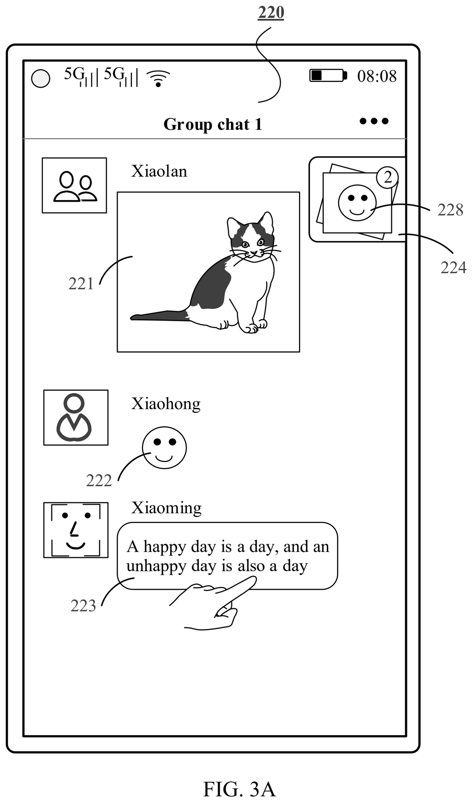

For example, the electronic device 100 may display a group chat interface 220 shown in FIG. 3A. The group chat interface 220 may include an image control 221, an image control 222, a text control 223, and a transfer station icon 224. A thumbnail 228 may be further displayed on the transfer station icon 224, and the thumbnail 228 may be an image whose display content is the same as display content of the image control 222. The transfer station icon 224 may indicate, to the user, that the electronic device 100 has started the transfer station and a control that is dragged to the transfer station exists. For other content of the group chat interface 220, refer to related descriptions in the embodiment shown in FIG. 2M. Details are not described herein again.

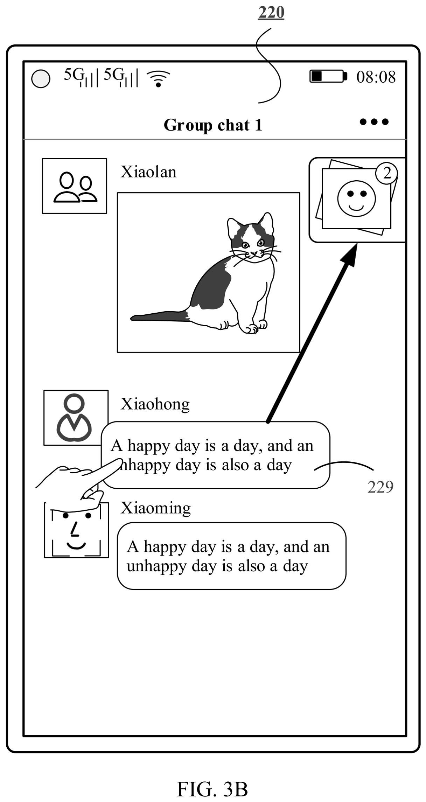

The electronic device 100 may receive a touch-and-hold and drag operation of the user for the text control 223, and display a drag layer 229 on the group chat interface 220 in response to the touch-and-hold and drag operation, as shown in FIG. 3B.

As shown in FIG. 3B, display content of the drag layer 229 is the same as display content of the text control 228, and a display size of the drag layer 229 may be the same as or different from a display size of the text control 228. The drag layer 229 may move along a track of a drag operation of the user.

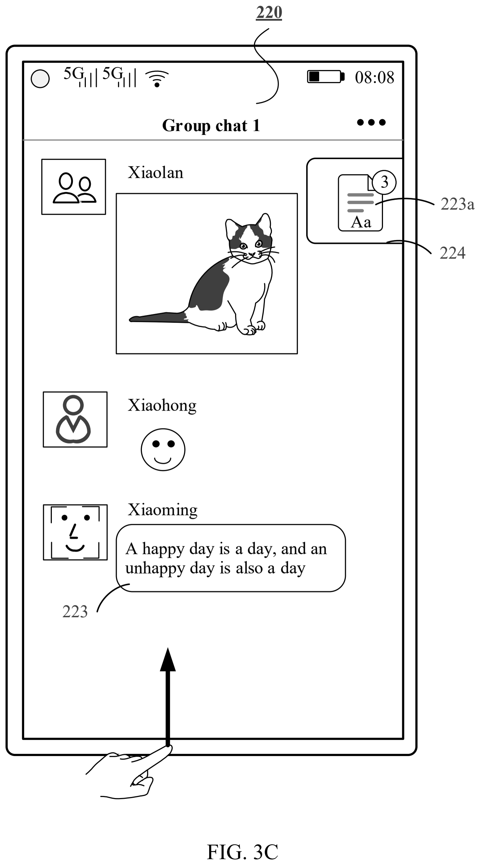

The electronic device 100 may receive the drag operation of the user for the drag layer 229, to enable, in response to the drag operation, the drag layer 229 to move toward the transfer station icon 224 along the track of the drag operation. When detecting a release operation of the user in an area in which the transfer station icon 224 is located, as shown in FIG. 3C, the electronic device 100 may disable displaying of the drag layer 229, and display a text thumbnail 223a on the transfer station icon 224.

As shown in FIG. 3C, the text thumbnail 223a may be a document pattern, and the text thumbnail 223a may indicate, to the user, that a control that is just dragged to the transfer station is a text control. In addition, a number identifier, for example, "3", may be further displayed on an upper right corner (or an upper left corner) of the text thumbnail 223a, to indicate, to the user, that a quantity of controls that are dragged to the transfer station is 3. In some other embodiments, the text thumbnail 223a may alternatively be an image whose display content is the same as display content of the text control 223 and whose display size is less than a display size of the transfer station icon 224. This is not limited in this application.

In this way, the electronic device 100 may drag the text control in the application 1 to the transfer station.

After the control 1 (where the control 1 is a text control) is dragged to the transfer station, the electronic device 100 may store a text of the control 1 in the transfer station. When the electronic device 100 displays an interface 2 of an application 2, a transfer station sidebar is displayed on the interface 2, and the thumbnail of the control 1 is displayed in the transfer station sidebar, the electronic device 100 may receive an operation 2 (for example, a touch-and-hold and drag operation) of the user for the thumbnail, and display the control 1 (or the text of the control 1) on the interface 2 in response to the operation.

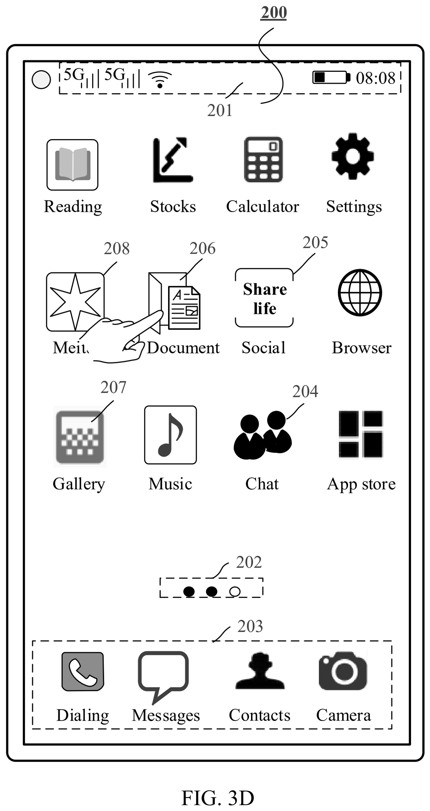

For example, when the electronic device 100 displays the group chat interface 220 shown in FIG. 3C, the electronic device 100 may receive an operation of sliding upward from a lower edge of a display by the user, and in response to the operation, disable displaying of the group chat interface 220, and display a home screen 200 shown in FIG. 3D. For specific content of the home screen 200, refer to related descriptions in the embodiment shown in FIG. 2A.

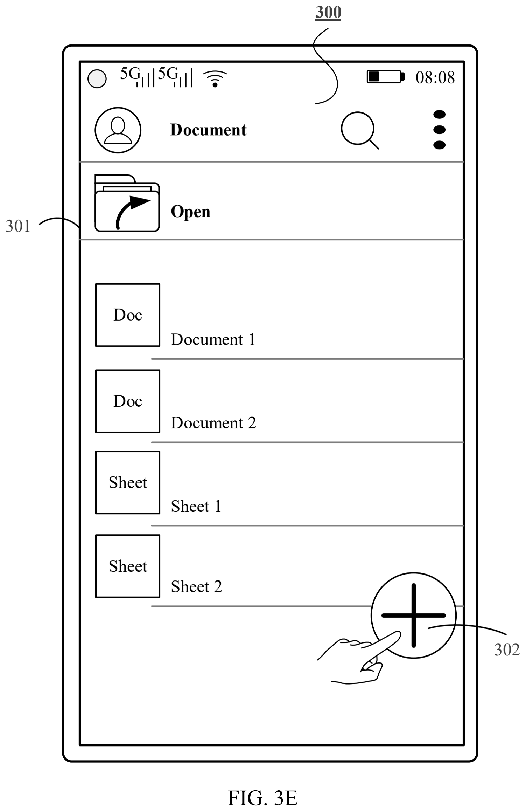

The electronic device 100 may receive a tap operation of the user for a document application icon 206 on the home screen 200, and display, in response to the tap operation, a document application interface 300 shown in FIG. 3E.

As shown in FIG. 3E, the document application interface 300 may include one or more controls, for example, an open control 301 and a new file control 302. The open control 301 may be used to trigger the electronic device 100 to display a list of files stored in the electronic device 100, and the new file control 302 may be used to trigger the electronic device 100 to create a new file. A file list may be further displayed on the document application interface 300, and the file list includes one or more stored files, and may be used to trigger the electronic device 100 to open a corresponding file and display specific content of the file.

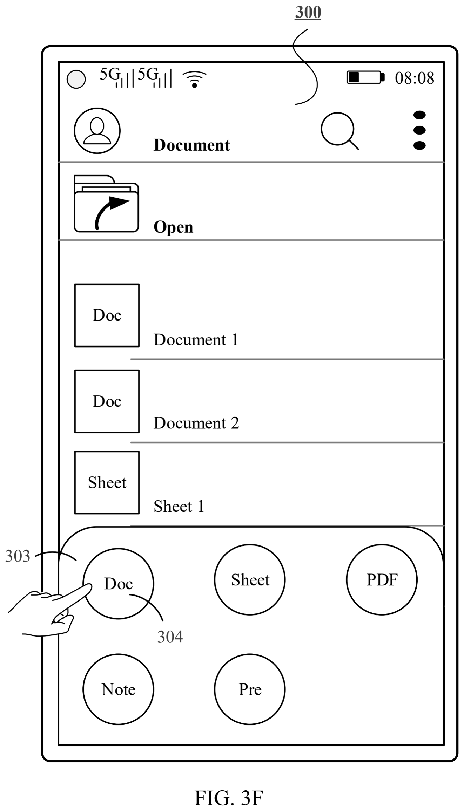

The electronic device 100 may receive a tap operation of the user for the new file control 302, and display a type selection window 303 on the document application interface 300 in response to the tap operation, as shown in FIG. 3F.

As shown in FIG. 3F, the type selection window 303 may display one or more type options, such as a document option 304, a sheet option, a note option, and a presentation option. Any type option may be used to trigger the electronic device 100 to create a file of a corresponding type.

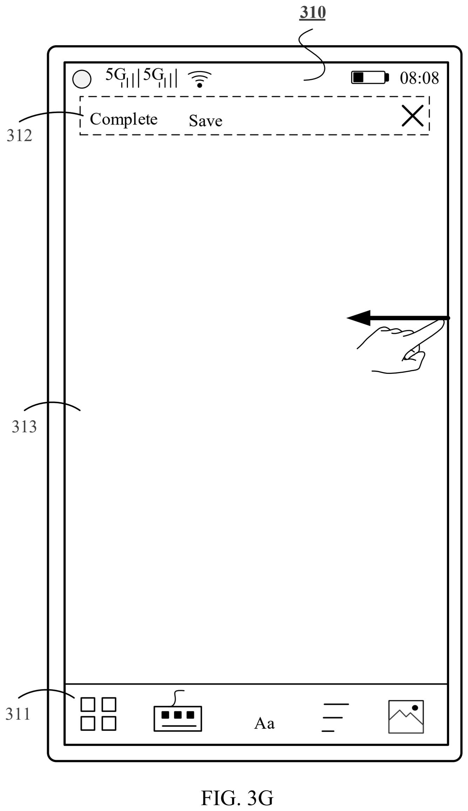

The electronic device 100 may receive a tap operation of the user for the document option 304, and display, in response to the tap operation, a document editing interface 310 shown in FIG. 3G.

As shown in FIG. 3G, the document editing interface 310 may include an auxiliary control area 311, a status control area 312, and a document editing area 313. One or more auxiliary controls, for example, an image control, a typesetting format control, and a text control, may be displayed in the auxiliary control area 311. The auxiliary controls may be used to assist in editing a document. One or more status controls, for example, a complete control, a save control, and a close control, may be displayed in the status control area 312. The status controls may be used to trigger the electronic device 100 to end an editing state of a document or save the document, disable displaying of the document editing interface 310, or the like. The document editing area 313 may be used to display content of the document, and the user may edit, by using the auxiliary control in the auxiliary control area 311, the content displayed in the document editing area 313.

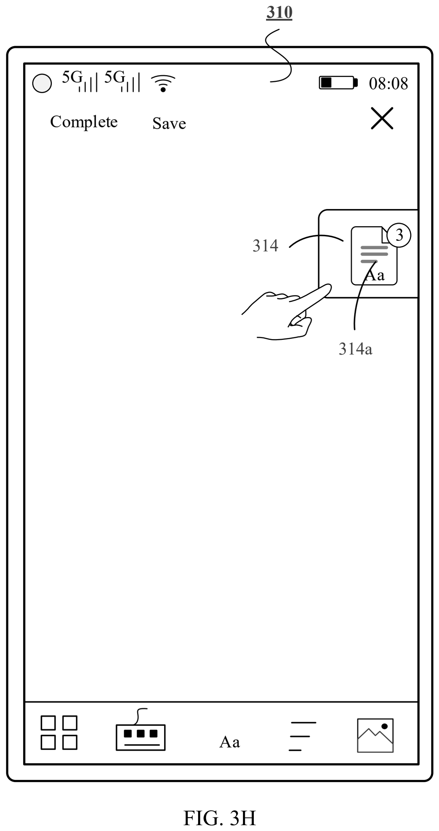

The electronic device 100 may receive an operation of sliding leftward from a right edge of the display (or an operation of sliding rightward from a left edge of the display) of the user, and display a transfer station icon 314 on the document editing interface 310 in response to the operation, as shown in FIG. 3H.

As shown in FIG. 3H, a text thumbnail 314a may be displayed on the transfer station icon 314. For specific content of the text thumbnail 314a, refer to related descriptions of the text thumbnail 223a in the embodiment shown in FIG. 3C. The text thumbnail 314a may indicate, to the user, that a control that is last dragged to the transfer station is a text control.

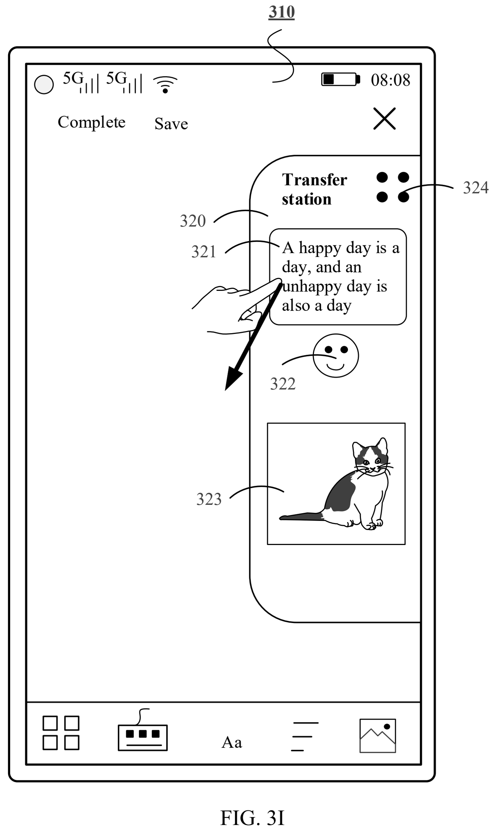

The electronic device 100 may receive a tap operation of the user for the transfer station icon 314, and in response to the tap operation, disable displaying of the transfer station icon, and display, on the document editing interface 310, a transfer station sidebar 320 shown in FIG. 3I.

As shown in FIG. 3I, one or more thumbnails may be displayed in the transfer station sidebar 320. In the transfer station, each thumbnail corresponds to an image and/or a text of a control. For example, a thumbnail 321, a thumbnail 322, and a thumbnail 323 may be displayed in the transfer station sidebar 320, where the thumbnail 321 may be a thumbnail of the text control 223 in the embodiment shown in FIG. 3A, the thumbnail 322 may be a thumbnail of the image control 222 in FIG. 3A, and the thumbnail 323 may be a thumbnail of the image control 221 in FIG. 3A. A thumbnail of a control displayed in the transfer station sidebar 320 is also an image whose display content is the same as display content of the control and whose display size is less than or equal to a display size of the control. It should be noted that the display size of the thumbnail displayed in the transfer station sidebar 320 may be greater than or equal to the display size of the thumbnail displayed on the transfer station icon in the foregoing embodiment. For example, the thumbnail 322 may be the same as the thumbnail 242 shown in FIG. 2K, and a display size of the thumbnail 323 may be greater than or equal to the display size of the thumbnail 226 shown in FIG. 2F. In some embodiments, a menu control 324 may be further displayed in the transfer station sidebar 320. The menu control 324 may be used to trigger the electronic device 100 to display a transfer station menu. The transfer station menu may be used to assist the user in adding or deleting an image or a text stored in the transfer station, or may be used to adjust an arrangement order of thumbnails in the transfer station, or the like.

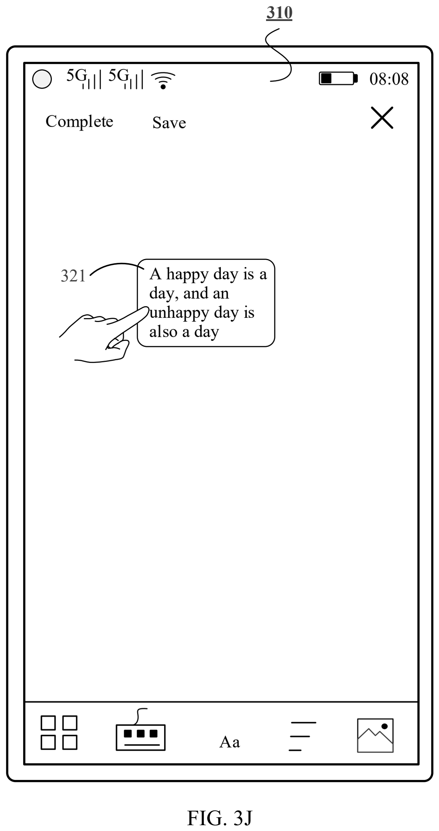

The electronic device 100 may receive a touch-and-hold and drag operation of the user for the thumbnail 321, to enable, in response to the touch-and-hold and drag operation, the thumbnail 321 to move along a track of the drag operation of the user, as shown in FIG. 3J.

As shown in FIG. 3J, the thumbnail 321 may move along the track of the drag operation of the user. In a process in which the user drags the thumbnail 321, the electronic device 100 may temporarily disable displaying of the transfer station sidebar 320.

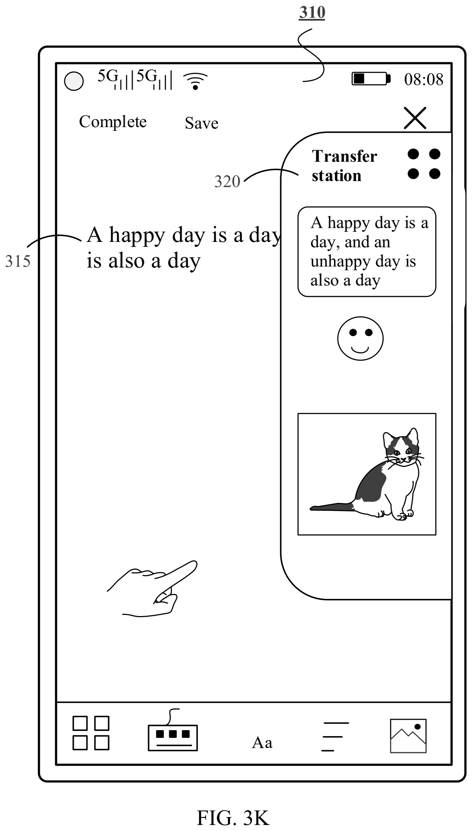

The electronic device 100 may receive a release operation of the user, and display a text control 315 on the document editing interface 310 and redisplay the transfer station sidebar 320 in response to the release operation, as shown in FIG. 3K.

As shown in FIG. 3K, after the user releases the thumbnail 321, the electronic device 100 may display the text control 315 on the document editing interface 310, where a text of the text control 315 is the same as a text of the text control 223 shown in FIG. 3A. A display size of the text control 315 may be different from a display size of the text control 223. In some embodiments, a font, a font size, and a typesetting manner of the text in the text control 315 may be determined based on a setting operation of the user for a related control in the auxiliary control area 311 performed before the drag operation. In some other embodiments, the text control 315 may be the same as the text control 223 shown in FIG. 3A. After displaying the text control 315, the electronic device 100 may redisplay the transfer station sidebar 320 on the document editing interface 310, where one or more thumbnails displayed in the transfer station sidebar 320 are the same as the one or more thumbnails displayed before the drag operation. In some embodiments, a position of the text control 315 on the document editing interface 310 may be further related to a position of the release operation of the user. For example, the text control 315 is displayed by using the position of the release operation of the user as a center, or the text control 315 is displayed by using the position of the release operation of the user as an upper left corner of the text control 315. This is not limited in this application.

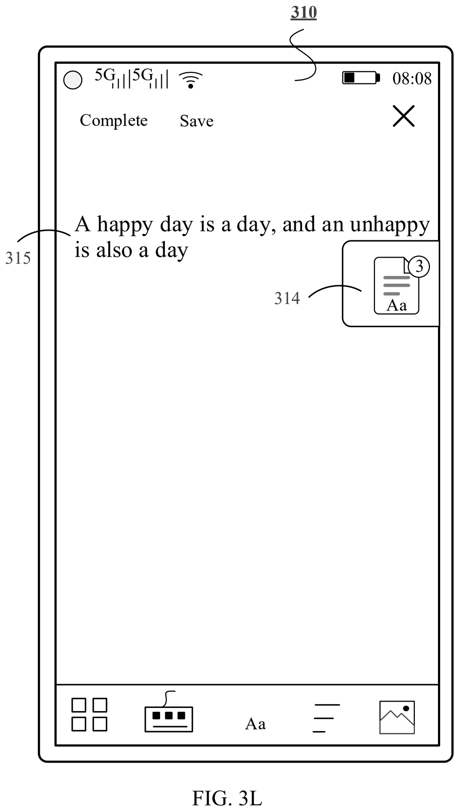

The electronic device 100 may receive a tap operation of the user in a blank area on the document editing interface 310, and the electronic device 100 may disable displaying of the transfer station sidebar 320 and redisplay the transfer station icon 314 in response to the tap operation, as shown in FIG. 3L. The transfer station icon 314 is the same as the transfer station icon 314 shown in FIG. 3H.

It may be understood that the embodiment shown in FIG. 3A to FIG. 3L is merely an example. In embodiments of this application, the application 1 and the application 2 may alternatively be applications different from those in the foregoing embodiment. The user may alternatively drag more or different text controls than those in the foregoing embodiments to the transfer station, or drag another type of control to the transfer station. This is not limited in this application. In some embodiments, the transfer station icon may alternatively be displayed in a form of floating bubble, top floating bar, or the like. This is not limited in this application.

In some application scenarios, the electronic device 100 displays an interface 1 of an application 1 (for example, a social application), the interface 1 may include a control 1, and the control 1 is a web view (webview) control. The electronic device 100 may receive an operation 1 (for example, a touch-and-hold and drag operation) of a user for the control 1, and display a transfer station icon and a drag layer of the control 1 on the interface 1 in response to the operation 1, where display content of the drag layer is the same as display content of the control 1. The electronic device 100 may enable, based on the operation 1 of the user, the drag layer move along a track of the operation 1. After detecting a release operation of the user in an area in which the transfer station icon is located, the electronic device 100 may disable displaying of the drag layer, and display a thumbnail of the control 1 on the transfer station icon. Display content of the thumbnail of the control 1 is the same as the display content of the control 1, and a display size of the thumbnail of the control 1 is less than or equal to a display size of the control 1.

In this way, the electronic device 100 may drag a web view control in the application 1 to the transfer station through dragging or the like, so that the web view control is subsequently transmitted to another process (for example, another application) by using the transfer station.

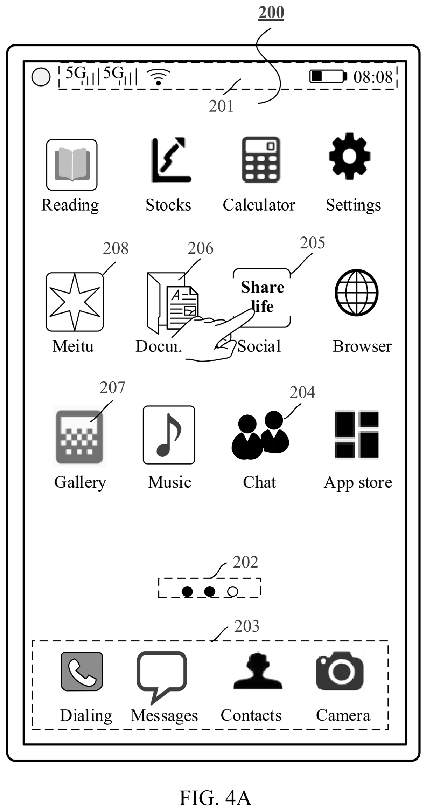

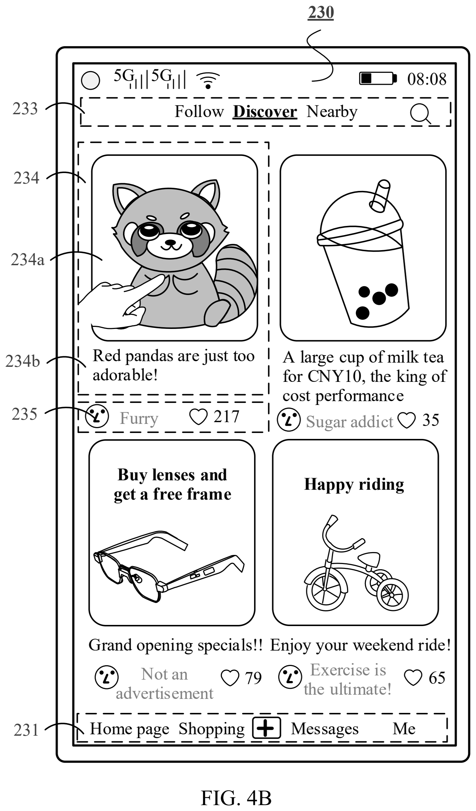

For example, as shown in FIG. 4A, the electronic device 100 displays a home screen 200. The electronic device 100 may receive a tap operation of the user for a social application icon 205, and display, in response to the tap operation, a social application interface 230 shown in FIG. 4B. For specific descriptions of the social application interface 230, refer to the related descriptions in the embodiment shown in FIG. 2I. Details are not described herein again.

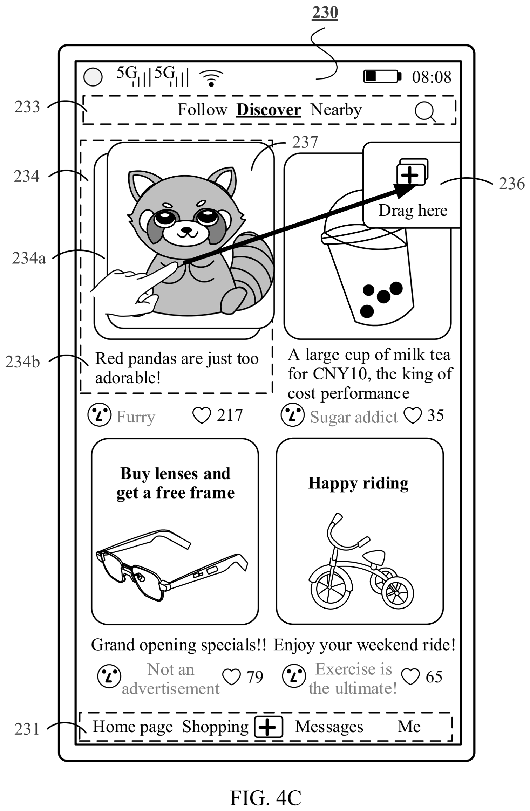

The electronic device 100 may receive a touch-and-hold and drag operation of the user for a web view control 234, and display a drag layer 237 and a transfer station icon 236 in response to the touch-and-hold and drag operation, as shown in FIG. 4C.

As shown in FIG. 4C, for specific descriptions of the transfer station icon 236, refer to the related descriptions in the embodiment shown in FIG. 2D. Display content of the drag layer 237 may be the same as display content of the web view control 234, or may be the same as display content of an image control 234a in the web view control 234. The drag layer 237 may move along a track of a drag operation of the user.

The electronic device 100 may receive the drag operation of the user for the drag layer 237, to enable, in response to the drag operation, the drag layer 237 to move toward the transfer station icon 236 along the track of the drag operation. When detecting a release operation of the user in an area in which the transfer station icon 236 is located, as shown in FIG. 3C, the electronic device 100 may disable displaying of the drag layer 237, and display a thumbnail 238 on the transfer station icon 236.

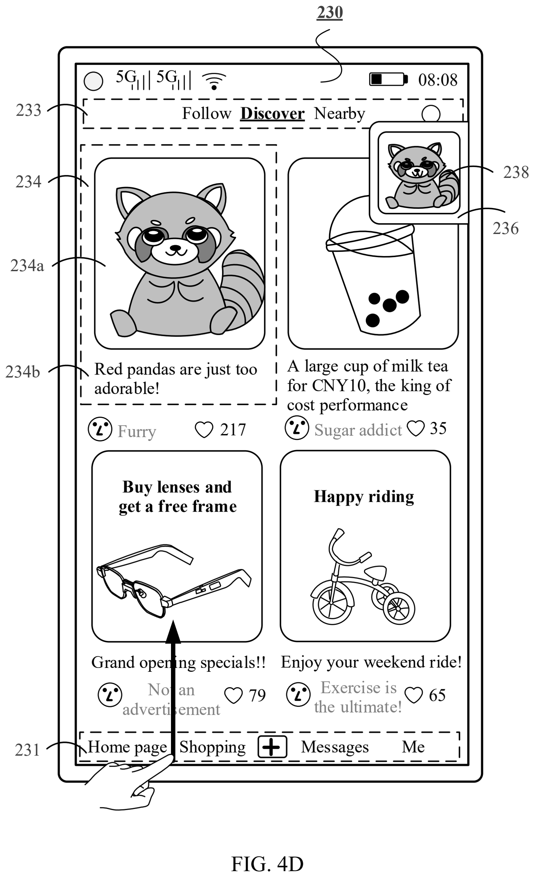

As shown in FIG. 4D, the thumbnail 238 may be a thumbnail of the web view control 234. Display content of the thumbnail 238 is the same as the display content of the image control 234a in the web view control 234. In some embodiments, display content of the thumbnail 238 may alternatively be the same as the display content of the web view control 234. A display size of the thumbnail 238 is less than or equal to a display size of the web view control 234, and is less than a display size of the transfer station icon 236.

In this way, the electronic device 100 may drag the web view control in the application 1 to the transfer station.

After the web view control is dragged to the transfer station, the electronic device 100 may store dragging data, including an image and a hyperlink, of the web view control in the transfer station. Optionally, if the web view control further includes a text, the dragging data may further include a text of the web view control. The electronic device 100 displays an interface 2 of an application 2, and a transfer station sidebar is displayed on the interface 2. One or more thumbnails are displayed in the transfer station sidebar, and one of the thumbnails is the thumbnail of the web view control. The electronic device 100 may receive an operation 2 (for example, a touch-and-hold and drag operation) of the user for the thumbnail, and display the web view control on the interface 2 in response to the operation 2.

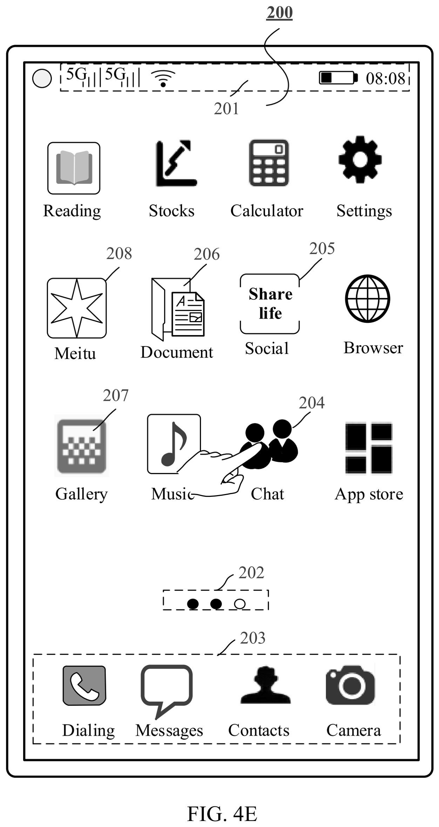

For example, when displaying the social application interface 230 shown in FIG. 4D, the electronic device 100 receives an operation of sliding upward from a lower edge of a display by the user, and in response to the operation, disables displaying of the social application interface 230, and displays the home screen 200 shown in FIG. 4E. For specific descriptions of the home screen 200, refer to the embodiment shown in FIG. 2A.

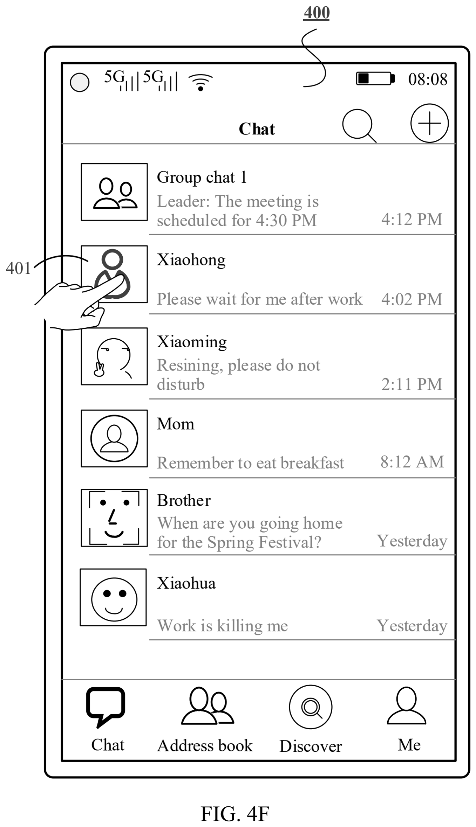

The electronic device 100 may receive a tap operation of the user for a chat application icon 204 on the home screen 200, and display, in response to the tap operation, a chat application interface 400 shown in FIG. 4F.

As shown in FIG. 4F, the chat application interface 400 may include one or more chat entries, for example, a chat entry 401. Each chat entry may be used to trigger the electronic device 100 to display a corresponding chat interface. For other content of the chat application interface 400, refer to the related descriptions of the chat application interface 210 shown in FIG. 2B. Details are not described herein again.

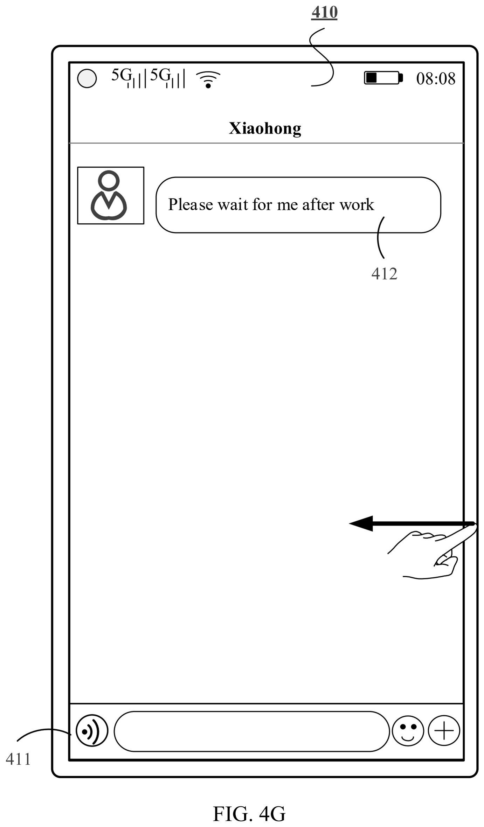

The electronic device 100 may receive a tap operation of the user for the chat entry 401, and display, in response to the tap operation, a chat interface 410 shown in FIG. 4G.

As shown in FIG. 4G, the chat interface 410 may include one or more chat records, for example, a text control 412. The chat interface 410 may further include a control area 411. One or more chat controls may be displayed in the control area 411. The chat controls may be used to assist the user in editing or sending a message like a text, an image, a voice, or a sticker.

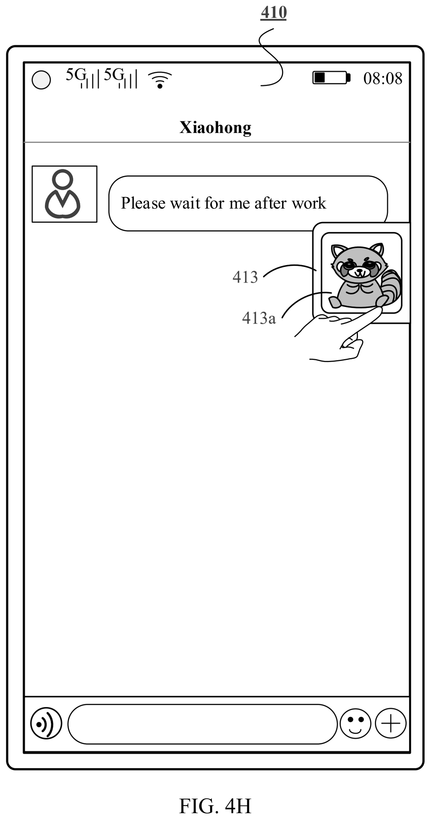

The electronic device 100 may receive an operation of sliding leftward from a right edge of the display by the user, and display a transfer station icon 413 on the chat interface 410 in response to the operation, as shown in FIG. 4H.

As shown in FIG. 4H, a thumbnail 413a may be displayed on the transfer station icon 413. The thumbnail 413a may be the same as the thumbnail 238 shown in FIG. 4D, and indicates, to the user, that a control that is finally dragged to the transfer station is the web view control 234 shown in FIG. 4D.

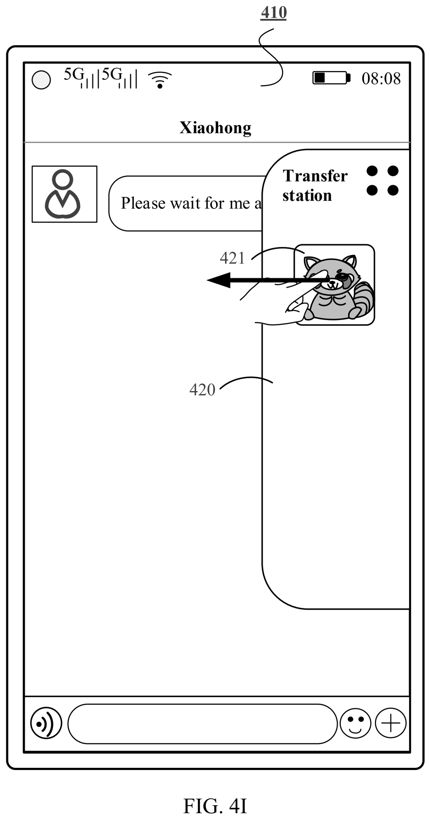

The electronic device 100 may receive a tap operation of the user for the transfer station icon 413, and display a transfer station sidebar 420 in response to the tap operation, as shown in FIG. 4I.

As shown in FIG. 4I, the transfer station sidebar 420 may include one or more thumbnails, for example, a thumbnail 421. The thumbnail 421 may be the same as the thumbnail 413a shown in FIG. 4H, and indicates, to the user, that a control that is dragged to the transfer station includes the web view control 234 shown in FIG. 4D. For other related content of the transfer station sidebar 420, refer to the related descriptions in the embodiment shown in FIG. 3I.

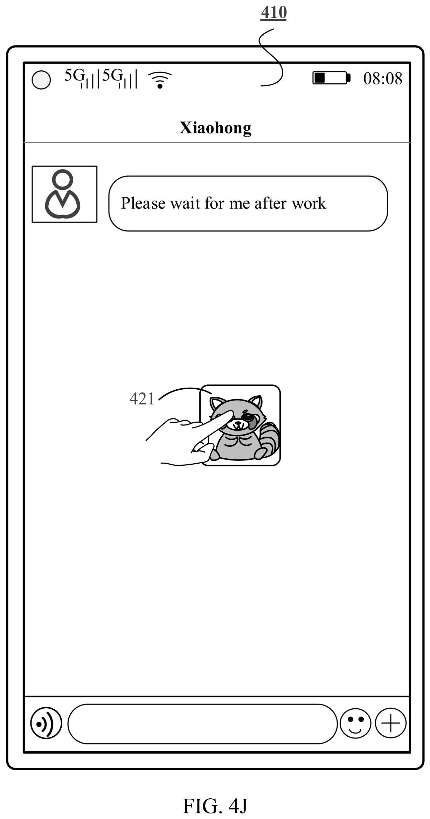

The electronic device 100 may receive a drag operation of the user for the thumbnail 421, to enable, in response to the drag operation, the thumbnail 421 to move along a track of the drag operation of the user, as shown in FIG. 4J. In a process in which the user drags the thumbnail 421 to move, the electronic device 100 may temporarily disable displaying of the transfer station sidebar 420.

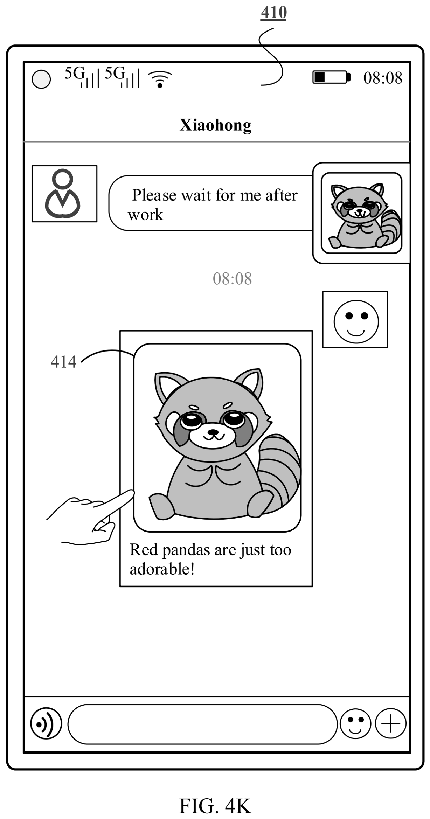

The electronic device 100 may receive a release operation of the user, and in response to the release operation, send dragging data (including an image and a hyperlink) corresponding to the thumbnail 421 to a chat object (namely, an electronic device used by Xiaohong) on the chat interface 410, and display, on the chat interface 410 based on the dragging data, a web view control 414 shown in FIG. 4K.

As shown in FIG. 4K, the web view control 414 is the same as the web view control 234 shown in FIG. 4D.

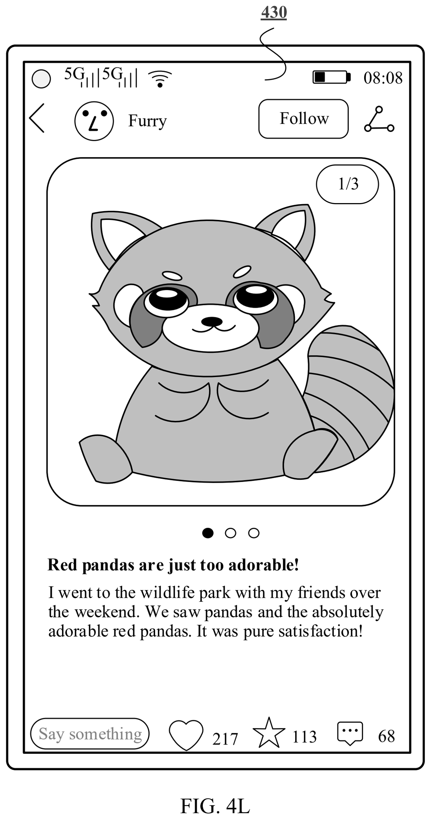

The electronic device 100 may receive a tap operation of the user for the web view control 414, and display, in response to the tap operation, a web view interface 430 shown in FIG. 4L.

As shown in FIG. 4L, graphic and text content, including one or more images and a text, may be displayed on the web view interface 430. The graphic and text content is used to describe in detail the image or the text displayed in the web view control 414. It should be noted that the web view control 234 shown in FIG. 4D may also be configured to trigger the electronic device 100 to display the web view interface 430.

It should be noted that, if the chat object (namely, the electronic device used by Xiaohong) is an electronic device 200, the electronic device 200 may also receive a tap operation of the user for the web view control 414 sent by the electronic device 100, and display, in response to the tap operation, the web view interface 430 shown in FIG. 4L.

It may be understood that the embodiment shown in FIG. 4A to FIG. 4K is merely an example. In embodiments of this application, the application 1 and the application 2 may be applications different from those in the foregoing embodiment, and controls for implementing cross-process transmission by using the transfer station may include more or fewer controls.

In this way, the web view control may be transmitted to another application by using the data transmission method provided in embodiments of this application.

In some embodiments, according to the data transmission method provided in embodiments of this application, an image or a text in the web view control may be further transmitted to the transfer station, then the image or the text is transmitted to another application by using the transfer station, and a corresponding image control or text control is displayed in the another application. The image control or the text control cannot trigger displaying of a web interface corresponding to the web view control. For specific diagrams of interfaces, refer to the foregoing embodiment. Details are not described herein again in this application.

The data transmission method provided in embodiments of this application may be further used to simultaneously drag a plurality of controls (an image control, a text control, a web view control, and the like) to the transfer station.

In some application scenarios, the electronic device 100 displays an interface 1 of an application 1 (for example, a chat application). The interface 1 may include a control 1 and a control 2. Types of the control 1 and the control 2 may be any one or more of the following: an image control, a text control, and a web view control. The electronic device 100 may receive an operation 3 (for example, a sliding operation whose start point is an edge of a display and whose track is L-shaped on the display, a sliding operation from an edge of the display to the left, the top, or the like, and a touch and hold operation after the sliding operation) of a user for enabling a drag mode, and display a drag mode interface in response to the operation 3. A transfer station icon and all dragable controls (including the control 1 and the control 2) on the interface 1 are displayed on the drag mode interface. The electronic device 100 may sequentially receive operations 4 (for example, a tap operation) of the user for the control 1 and the control 2 respectively and an operation 5 (for example, a touch-and-hold and drag operation) of the user for the drag mode interface, and display a drag layer on the drag mode interface in response to the operations 4 and the operation 5, so that the drag layer moves along a track of the drag operation of the user. Display content of the drag layer may be display content of the control 1 (or the control 2). After detecting a release operation of the user in an area in which the transfer station icon is located, the electronic device 100 may disable displaying of the drag layer, and display a thumbnail of the control 1 (or the control 2) on the transfer station icon, where a display size of the thumbnail is less than a display size of the transfer station icon.

In this way, a plurality of controls may be dragged to a transfer station through a single drag operation. An operation is convenient, and data transmission efficiency is improved.

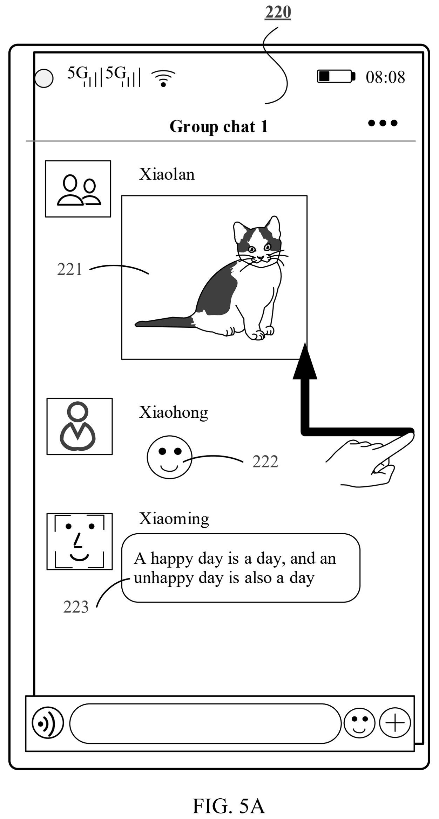

For example, as shown in FIG. 5A, the electronic device 100 displays a group chat interface 220. For specific descriptions of the group chat interface 220, refer to the embodiment shown in FIG. 2C.

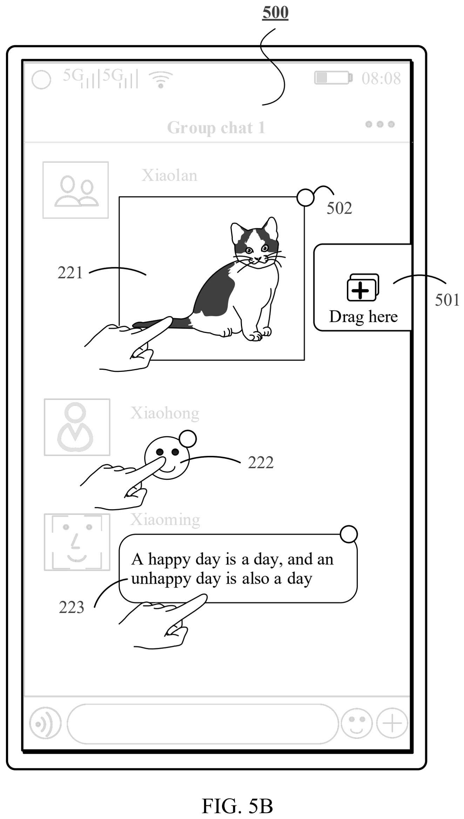

The electronic device 100 may receive a sliding operation whose start point is a right edge of the display and whose track is L-shaped on the display, and in response to the sliding operation, enable the drag mode, and display a drag mode interface 500 shown in FIG. 5B.

As shown in FIG. 5B, the drag mode interface 500 may include a transfer station icon 501, and may further include one or more dragable controls. The one or more controls are dragable controls on the group chat interface 220, for example, an image control 221, an image control 222, and a text control 223. A selection identifier 502 may be further displayed on each of the one or more dragable controls, and indicates whether the control is selected. In the embodiment shown in FIG. 5B, no control is selected. It should be noted that, in this embodiment of this application, the selection identifier 502 may be a circular identifier shown in FIG. 5B, or may be a square identifier or an identifier of another shape. This is not limited in this application.

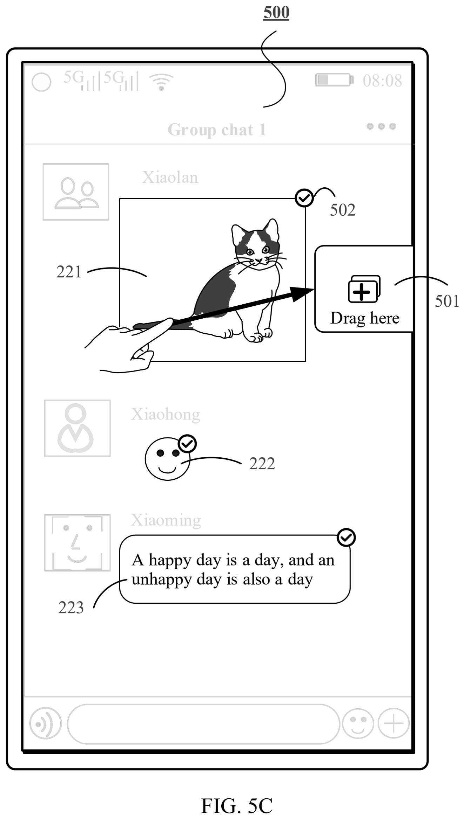

The electronic device 100 may receive tap operations of the user for the image control 221, the image control 222, and the text control 223 in sequence, and display check marks in selection identifiers 502 on the three controls in response to the tap operations, as shown in FIG. 5C.

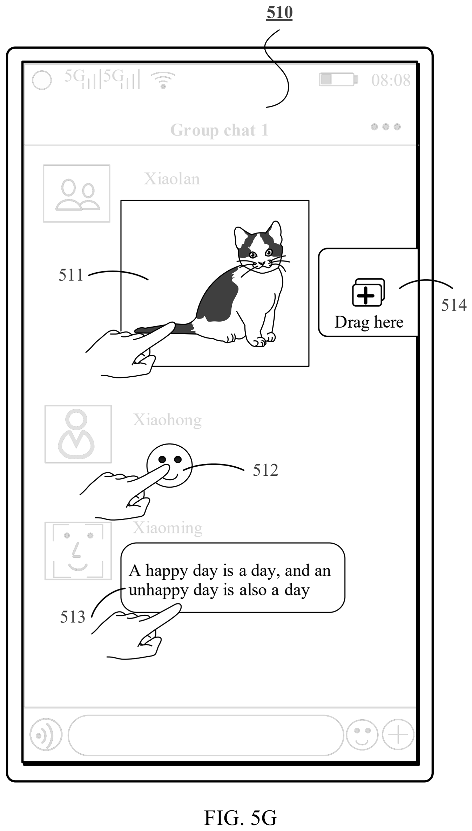

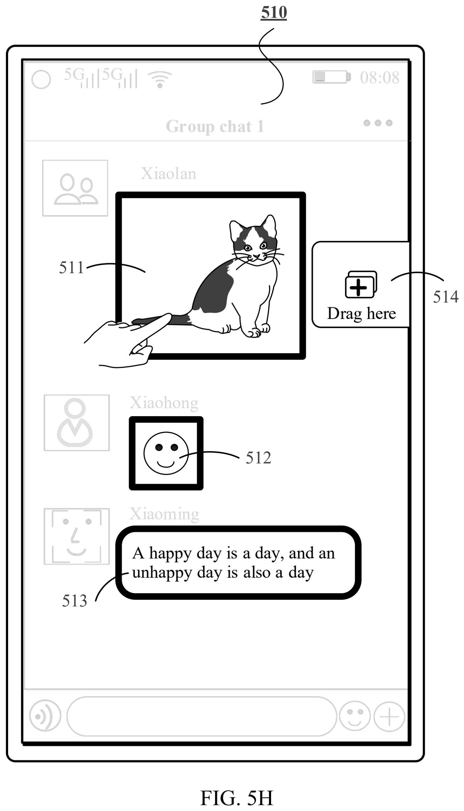

As shown in FIG. 5C, the check mark is displayed on each of the image control 221, the image control 222, and the text control 223. It should be noted that the check mark may be displayed in the selection identifier. In some other embodiments, whether the control is selected may alternatively be indicated in a prominent display manner (for example, a highlighting display manner, a heterochromatic display manner, or a bold display manner). In this case, the selection identifier and the check mark may not be displayed. For details, refer to content in the following embodiment shown in FIG. 5G and FIG. 5H.

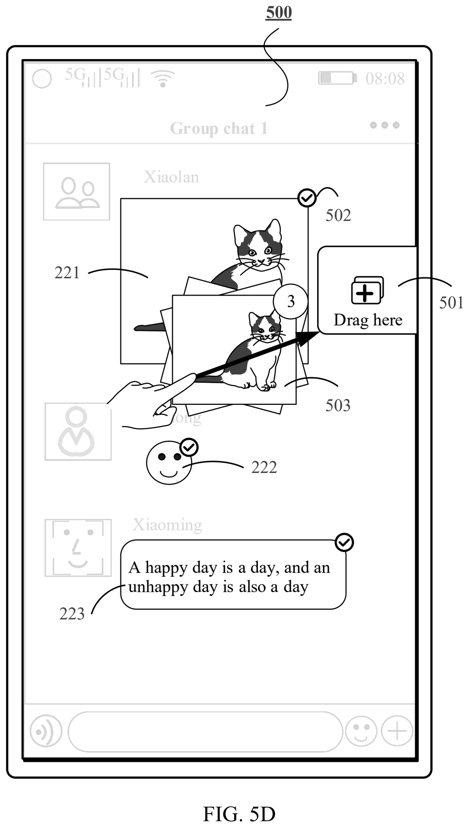

The electronic device 100 may receive a touch-and-hold and drag operation of the user for the drag mode interface 500, and display a drag layer 503 on the drag mode interface 500 in response to the touch-and-hold and drag operation, as shown in FIG. 5D.

As shown in FIG. 5D, display content of the drag layer 503 may be the same as display content of the image control 221. In some embodiments, display content of the drag layer 503 may alternatively be the same as display content of the image control 222 or the text control 223. A number mark, for example, a number "3", may be further displayed on the drag layer 503, and may indicate, to the user, that three controls are dragged. The drag layer 503 may move along a track of dragging of the user.

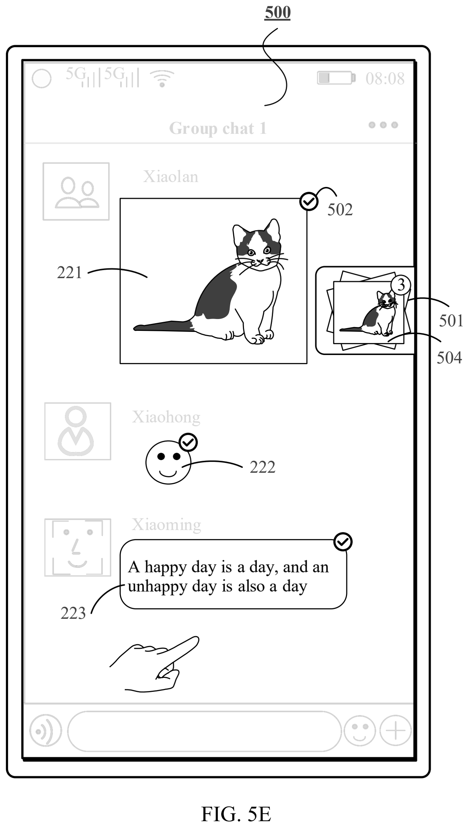

When detecting that the user drags the drag layer 503 to the area in which the transfer station icon 501 is located and detecting a release operation of the user in the area, as shown in FIG. 5E, the electronic device 100 may disable displaying of the drag layer 503, and display a thumbnail 504 on the transfer station icon 501.

As shown in FIG. 5E, the thumbnail 504 may be a thumbnail of the image control 221, or may be a thumbnail of another dragged control. A number mark "3" may be further displayed on the thumbnail 504, to indicate, to the user, that a quantity of controls that are dragged to the transfer station is 3.

The electronic device 100 may receive an operation of disabling the drag mode by the user (for example, a double-tap operation or a specific gesture operation for the drag mode interface 500), and in response to the operation, disable the drag mode, and redisplay the group chat interface 220 shown in FIG. 5A.

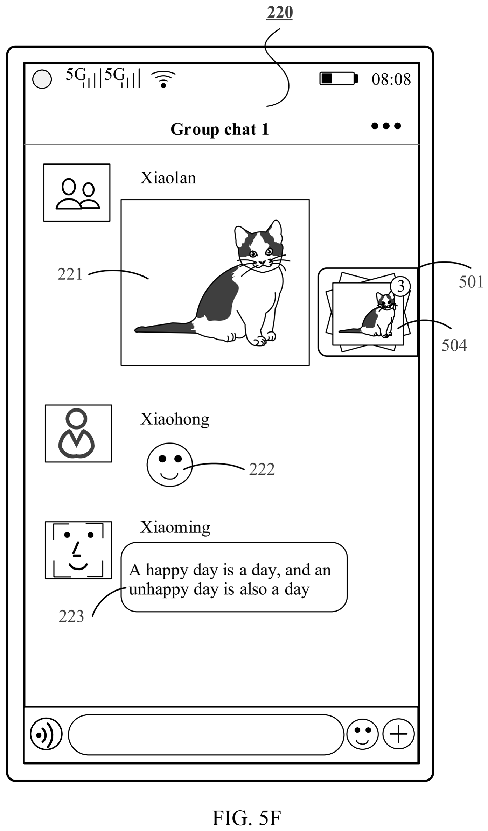

In some embodiments, alternatively, when detecting a release operation of the user in an area in which the transfer station icon 501 is located, the electronic device 100 may disable the drag mode, and display the group chat interface 220 shown in FIG. 5F. The transfer station icon 501 and the thumbnail 504 are displayed on the group chat interface 220. For specific descriptions of the thumbnail 504, refer to the embodiment shown in FIG. 5E. Details are not described herein again.

In this way, in the drag mode, a plurality of controls can be dragged to the transfer station at the same time. This can reduce operation steps and improve efficiency. After the plurality of controls are dragged to the transfer station, the electronic device 100 may also receive an operation of dragging the controls in the transfer station to an application 2 by the user, and display the one or more controls in the transfer station on an interface of the application 2 in response to the operation. For a specific step, refer to related descriptions in the foregoing embodiment. Details are not described herein again.

In some embodiments, on the drag mode interface, whether the control is selected may alternatively be indicated in a prominent display manner (for example, a highlighting display manner, a heterochromatic display manner, or a bold display manner). In this case, the selection identifier and the check mark may not be displayed.

For example, as shown in FIG. 5G, the electronic device 100 displays a drag mode interface 510, and the drag mode interface 510 may include an image control 511, an image control 512, a text control 513, and a transfer station icon 514. In addition, different from the drag mode interface 500 shown in FIG. 5B, no selection identifier is displayed on the image control and the text control.

The electronic device 100 may receive tap operations of the user for the image control 511, the image control 512, and the text control 513 in sequence, and highlight the image control 511, the image control 512, and the text control 513 in response to the tap operations, as shown in FIG. 5H.

In this way, the user may also determine whether a control is selected by observing whether the control on the drag mode interface is highlighted.

The data transmission method provided in embodiments of this application may also be used for cross-process transmission of an interface element including a plurality of controls. Types of the plurality of controls may include any one or more of the following: an image control, a text control, a web view control, and the like.

In some application scenarios, the electronic device 100 displays an interface 1 of an application 1. The interface 1 may include an interface element 1, the interface element 1 may include a control 1 and a control 2, and types of the control 1 and the control 2 may include any one or more of the following: an image control, a text control, and a web view control. The electronic device 100 may receive an operation 3 (for example, a sliding operation whose start point is an edge of a display and whose track is L-shaped on the display, a sliding operation from an edge of the display to the left, the top, or the like, and a touch and hold operation after the sliding operation) of a user for enabling a drag mode, and display a drag mode interface in response to the operation 3. A transfer station icon and the interface element 1 are displayed on the drag mode interface. Optionally, if the interface 1 further includes dragable controls, the drag mode interface may further include the one or more dragable controls. The electronic device 100 may sequentially receive an operation 4 (for example, a tap operation) of the user for the interface element 1 (for example, any point on the control 1 or the control 2), and display a check mark on the interface element 1 in response to the operation 4. The electronic device 100 receives an operation 5 (for example, a touch-and-hold and drag operation) of the user for the drag mode interface, and displays a drag layer on the drag mode interface in response to the operation 5, so that the drag layer moves along a track of the drag operation of the user. Display content of the drag layer may be display content of the interface element 1. After detecting a release operation of the user in an area in which the transfer station icon is located, the electronic device 100 may disable displaying of the drag layer, and display a thumbnail of the interface element 1 on the transfer station icon, where a display size of the thumbnail is less than a display size of the transfer station icon.

In this way, an interface element including a plurality of controls may be dragged to the transfer station through a single drag operation. An operation is convenient, and data transmission efficiency is improved.

In some embodiments, if an interface element includes a plurality of text controls, the electronic device 100 may also transmit the interface element from an application 1 (for example, a gallery application) to an application 2 (for example, a document application) by using the data transmission method provided in embodiments of this application.

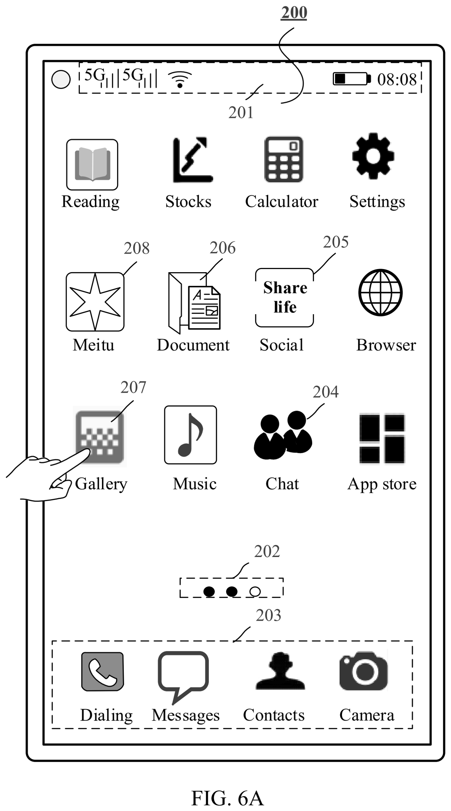

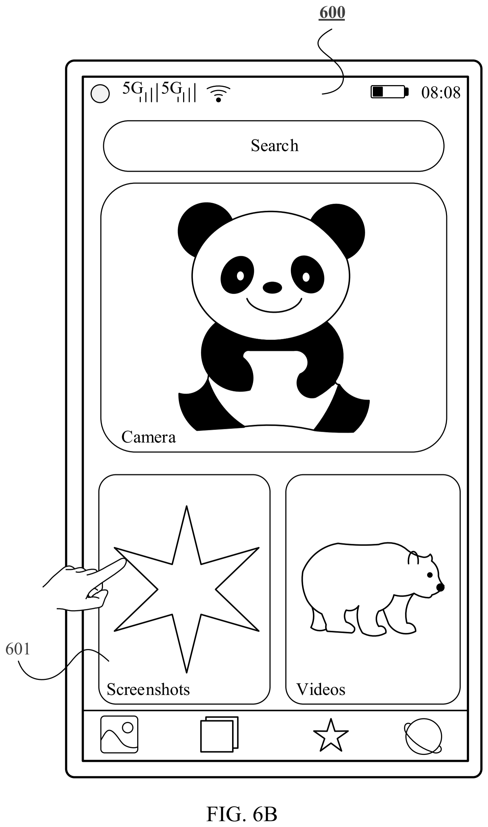

For example, as shown in FIG. 6A, the electronic device 100 displays a home screen 200. For specific descriptions of the home screen 200, refer to the specific descriptions in the embodiment shown in FIG. 2A. The electronic device 100 may receive a tap operation of a user for a gallery application icon 207, and display, in response to the tap operation, an album interface 600 shown in FIG. 6B.

As shown in FIG. 6B, one or more album icons, for example, a camera album icon, a screenshot album icon 601, and a videos album icon, may be displayed on the album interface 600.

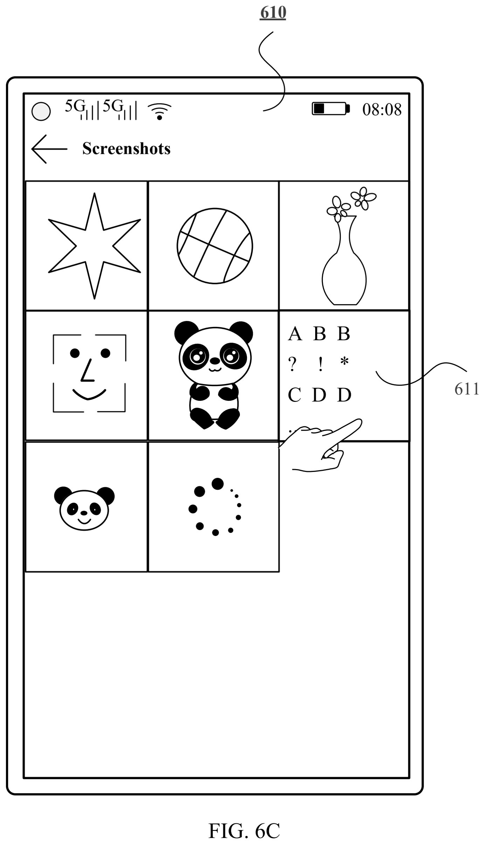

The electronic device 100 may receive a tap operation of the user for the screenshot album icon 601, and display, in response to the tap operation, a screenshot album interface 610 shown in FIG. 6C.

As shown in FIG. 6C, thumbnails of one or more images, for example, a thumbnail 611, may be displayed on the screenshot album interface 610. Each thumbnail may be used to trigger the electronic device 100 to display, on a display in full screen, an image corresponding to the thumbnail.

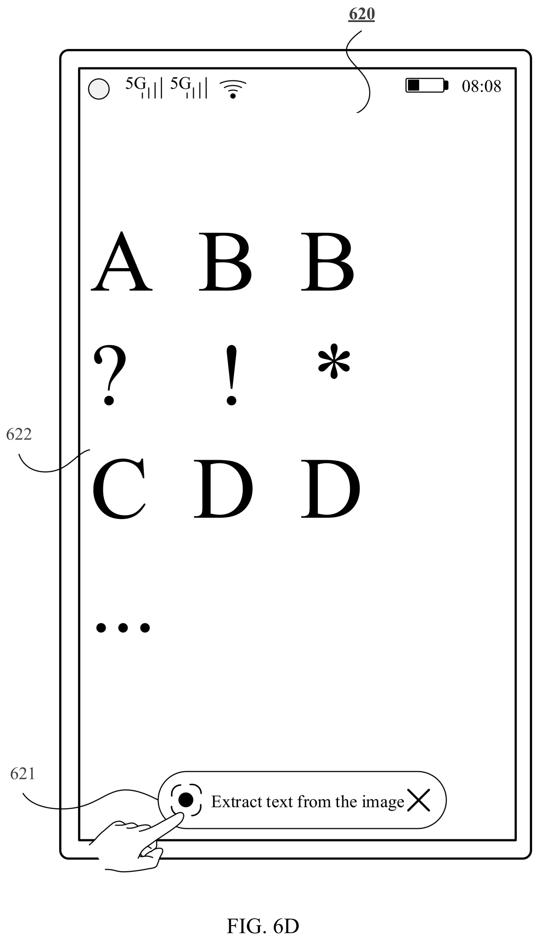

The electronic device 100 may receive a tap operation of the user for the thumbnail 611, and display, in response to the tap operation, an image browsing interface 620 shown in FIG. 6D.

As shown in FIG. 6D, an image 622 corresponding to the thumbnail 611 may be displayed on the image browsing interface 620, and text content such as "ABB", "?!*", and "CDD" is displayed in the image 622. On the image browsing interface 620, the image 622 is displayed in full screen, to be specific, a display area of the image is an entire area of the display. A text extraction control 621 may be further displayed on the image browsing interface 620, and the text extraction control 621 may be used to trigger the electronic device 100 to extract the text content in the image 622.

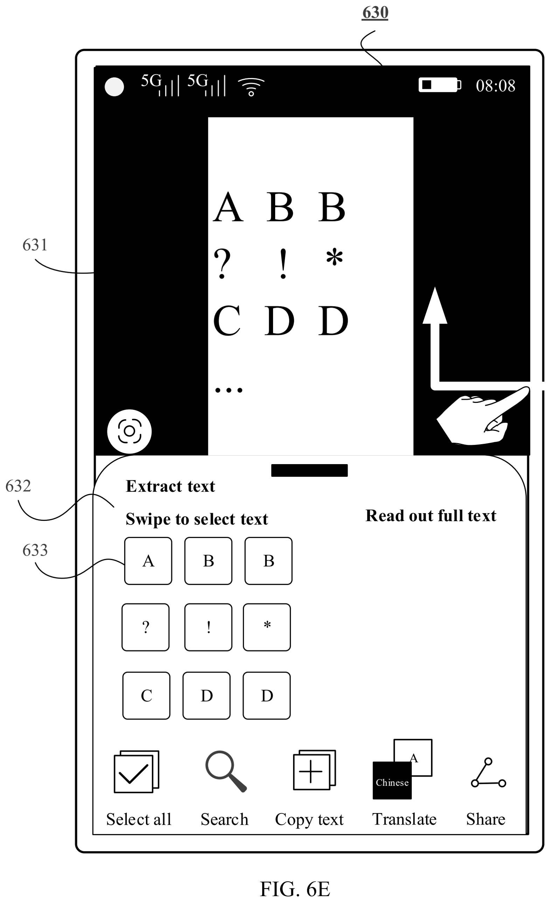

The electronic device 100 may receive a tap operation of the user for the text extraction control 621, and display, in response to the tap operation, a HiTouch interface 630 shown in FIG. 6E.

As shown in FIG. 6E, the HiTouch interface 630 may include an image 631 and an extraction result display area 632. The image 631 may be displayed on an upper part of the display, and the image 631 is the same as the image 622 in the embodiment shown in FIG. 6D. The extraction result display area 632 may be displayed on a lower part of the display, and the extraction result display area 632 may include an interface element 633. The interface element 633 indicates, to the user, the text content extracted by the electronic device 100 from the image 622. The interface element 633 may include a plurality of text controls, and each text control includes one text, for example, "A", "B", and "B". Texts in all the text controls in the interface element 633 may be combined into text content based on an arrangement order of the corresponding text controls on the HiTouch interface 630. The text content is the text content in the image 622 shown in FIG. 6D. In addition, one or more auxiliary controls, for example, a select all control, a search control, a copy text control, a translate control, and a share control, may be further displayed in the extraction result display area 632. The one or more auxiliary controls may be used to assist the user in performing operations such as selecting all, searching, copying, translating, and sharing on extracted text content.

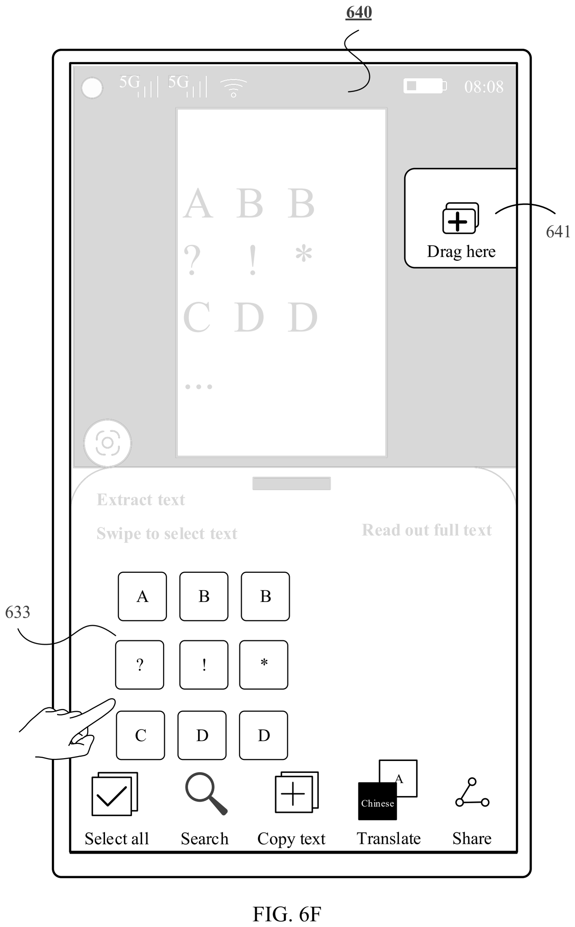

The electronic device 100 may receive a sliding operation whose start point is a right edge of the display and whose track is L-shaped on the display, and in response to the sliding operation, enable a drag mode, and display a drag mode interface 640 shown in FIG. 6F.

As shown in FIG. 6F, the drag mode interface 640 may include an interface element 633 and a transfer station icon 641. For specific content of the transfer station icon 641, refer to the related descriptions in the foregoing embodiment. For specific descriptions of the interface element 633, refer to the related descriptions in the foregoing embodiment shown in FIG. 6E. In some embodiments, the drag mode interface 640 may alternatively include all controls (including the interface element 633, the auxiliary control, and the like) in the extraction result display area 632.

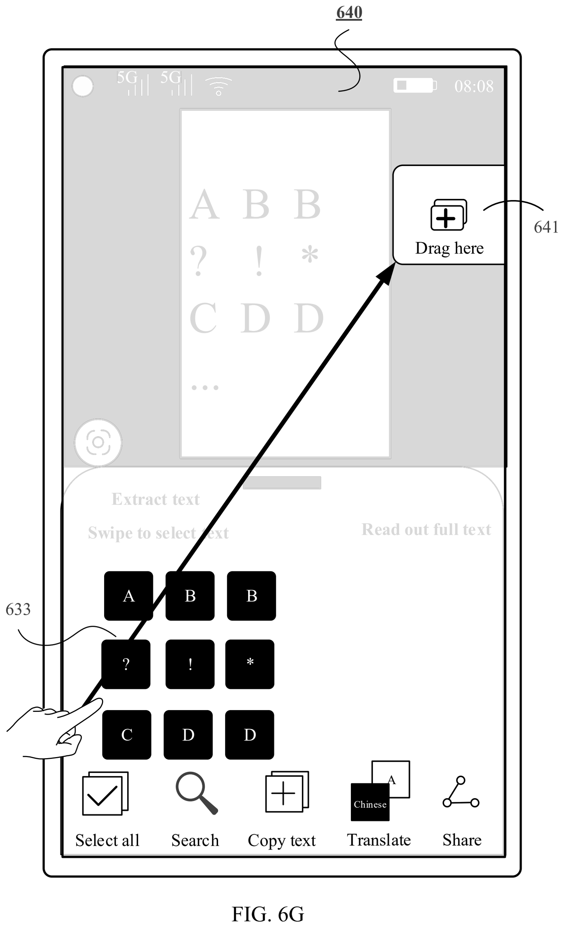

The electronic device 100 may receive a tap operation of the user for any text control (or the select all control) in the interface element 633, and display a check mark on the interface element 633 in response to the tap operation, as shown in FIG. 6G.

As shown in FIG. 6G, that the electronic device 100 displays the check mark on the interface element 633 may be that the electronic device 100 changes a display color of all text controls in the interface element 633 to another color, for example, changes the display color of the text controls from white to black or another color, and changes a font color of the text control from black to white or another color. This is not limited in this application. The electronic device 100 may indicate, to the user by using different display colors, that the interface element 633 is in a selected state. It may be understood that only an example of a check mark is provided herein. In this embodiment of this application, the electronic device 100 may alternatively use another check mark, for example, the check mark described in the embodiment shown in FIG. 5C or FIG. 5H. This is not limited in this application.

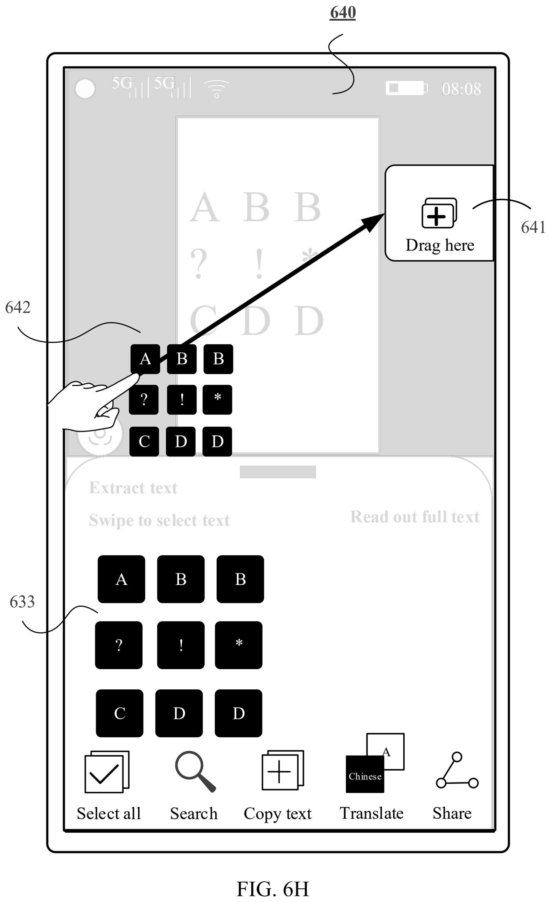

The electronic device 100 receives a touch-and-hold and drag operation of the user for any point on the drag mode interface 640, and displays a drag layer 642 on the drag mode interface 640 in response to the touch-and-hold and drag operation, as shown in FIG. 6H.

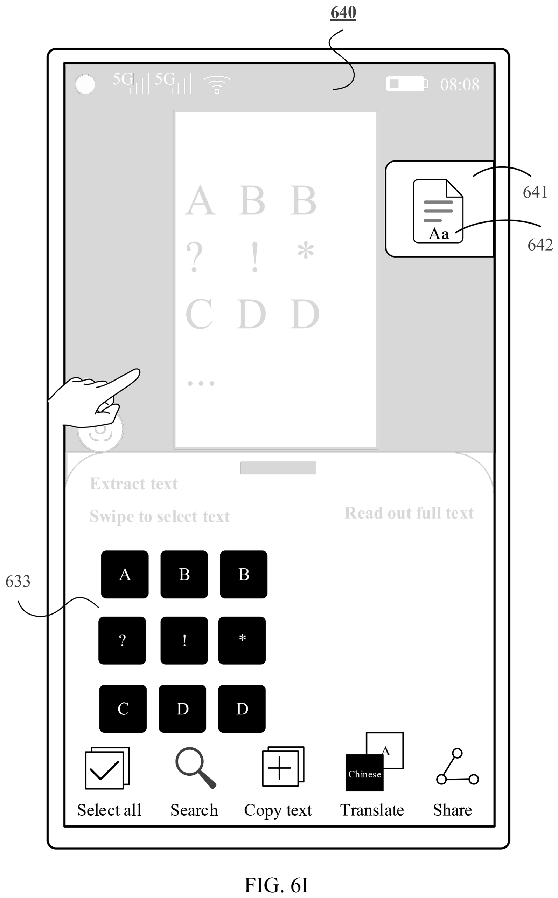

As shown in FIG. 6H, the drag layer 642 may be an image whose display content is the same as display content of the interface element 633 and whose display size is the same as or different from a display size of the interface element 633. The drag layer 642 may move along a track of dragging the drag mode interface 640 by the user. When the user drags the drag layer 642 to a position of the transfer station icon 641, and the electronic device 100 detects a release operation of the user, as shown in FIG. 6I, the electronic device 100 may disable displaying of the drag layer 642, and display a text thumbnail 643 on the transfer station icon 641.

As shown in FIG. 6I, the text thumbnail 643 may be a document pattern, and the text thumbnail 643 may indicate, to the user, that a control that is just dragged to the transfer station is a text control.

In this way, the electronic device 100 may drag an interface element that is on the interface 1 and that includes a plurality of controls to the transfer station.

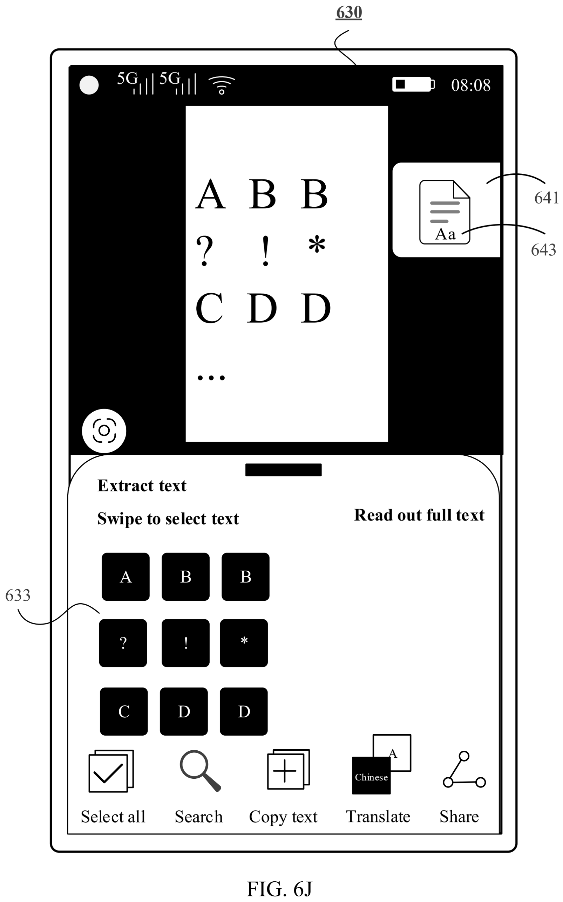

After the interface element 633 is dragged to the transfer station, the electronic device 100 may further receive a tap operation and a touch-and-hold and drag operation of the user for a control on the drag mode interface 640, and drag the control to the transfer station in response to the tap operation and the touch-and-hold and drag operation. For a specific manner, refer to the related descriptions in the foregoing embodiment. Details are not described herein again. In addition, the electronic device 100 may also receive a tap operation of the user for the drag mode interface 640, and in response to the tap operation, disable displaying of the drag mode interface 640, and redisplay the HiTouch interface 630, as shown in FIG. 6J.

As shown in FIG. 6J, the electronic device 100 displays the HiTouch interface 630. For specific descriptions of the HiTouch interface 630, refer to the related description in the embodiment shown in FIG. 6E. In addition, optionally, the transfer station icon 641 may be displayed on the HiTouch interface 630, and the text thumbnail 643 may be further displayed on the transfer station icon 641.

In this way, the electronic device 100 can exit the drag mode and return to a previous interface.

After the interface element including the plurality of controls is dragged to the transfer station, the electronic device 100 may store data of the interface element (for example, the quantity and arrangement layout of controls included in the interface element, and an image, a text, and a hyperlink of each control) in the transfer station. If the interface element includes only a text control, the electronic device 100 displays an interface 2 of the application 2, a transfer station sidebar is displayed on the interface 2, and a thumbnail of the interface element is displayed in the transfer station sidebar. In this case, the electronic device 100 may receive a touch-and-hold and drag operation of the user for the thumbnail, and display the interface element or display text content in the interface element on the interface 2 in response to the touch-and-hold and drag operation. The text content in the interface element is text content obtained after texts in all text controls in the interface element are spliced based on an arrangement layout of the text controls in the interface element.

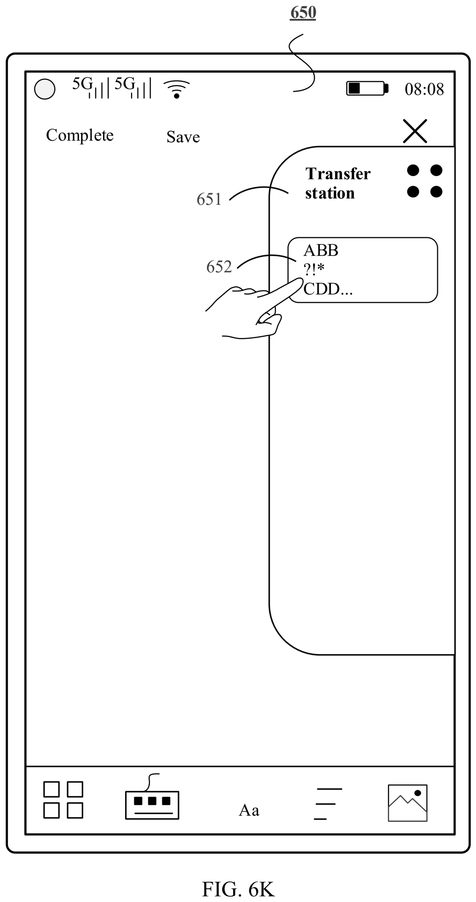

For example, as shown in FIG. 6K, the electronic device 100 displays a document editing interface 650. For a manner of starting the document editing interface 650, refer to the related descriptions in the embodiment shown in FIG. 3D to FIG. 3G, and for specific content of the document editing interface 650, refer to the related descriptions of the document editing interface 310 shown in FIG. 3G. In addition, a transfer station sidebar 651 is further displayed on the document editing interface 650, a thumbnail 652 is displayed in the transfer station sidebar 651, and the thumbnail 652 is a thumbnail corresponding to the interface element 633. In some embodiments, a part of text content of the interface element 633 may be displayed in the thumbnail 652. In some other embodiments, the thumbnail 652 may alternatively be an image whose display content is the same as display content of the interface element 633 and whose display size is different from a display size of the interface element 633.

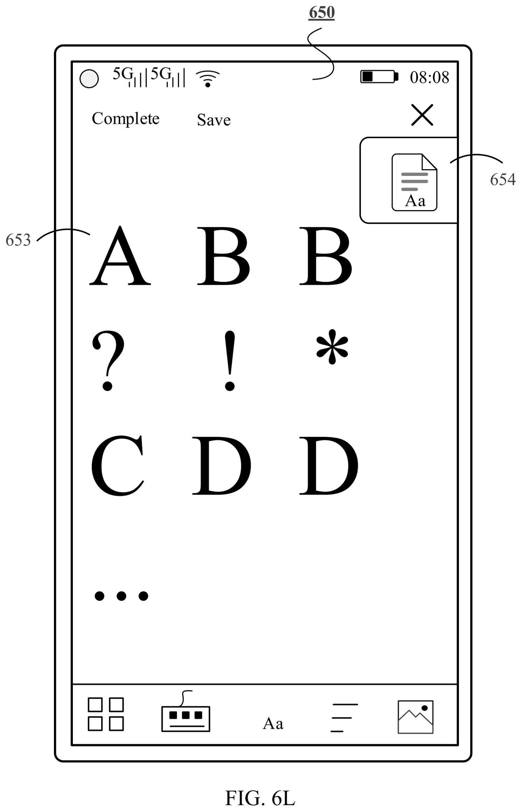

The electronic device 100 may receive a touch-and-hold and drag operation of the user for the thumbnail 652, and in response to the touch-and-hold and drag operation, display a drag layer of the thumbnail 652, and drag the drag layer to an area outside the transfer station sidebar 651. When detecting a release operation of the user, as shown in FIG. 6L, the electronic device 100 may display a text control 653 on the document editing interface 650, where text content in the text control 653 is the same as the text content in the interface element 633 shown in FIG. 6E. In addition, a transfer station icon 654 may be further displayed on the document editing interface 650, and a text thumbnail may be displayed on the transfer station icon 654.

In this way, the interface element including the plurality of controls may be transmitted to another application by using the transfer station.

It may be understood that the embodiment shown in FIG. 6A to FIG. 6L is merely an example. In this embodiment of this application, the application 1 may be another application (including a self-developed application and a third-party application) other than the gallery application, the application 2 may be another application other than the document application, and the interface element may include more or fewer controls. This is not limited in this application.

In some embodiments, if an interface element includes a plurality of image controls, the electronic device 100 may also transmit the interface element from an application 1 (for example, a gallery application) to an application 2 (for example, a Meitu application) by using the data transmission method provided in embodiments of this application.

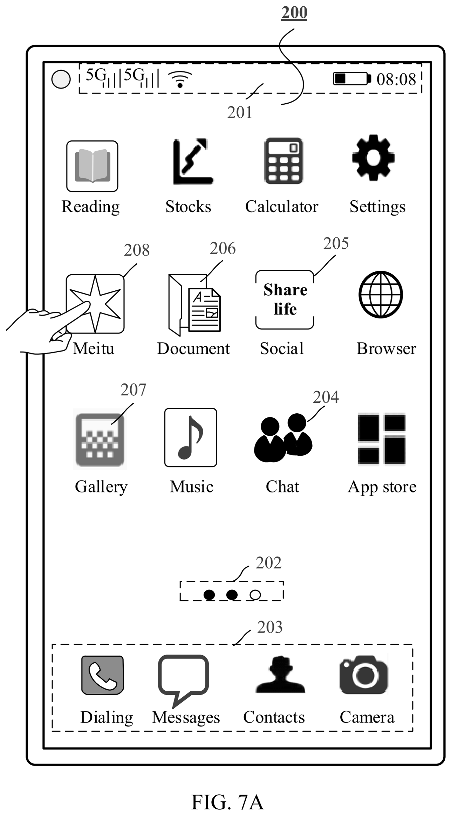

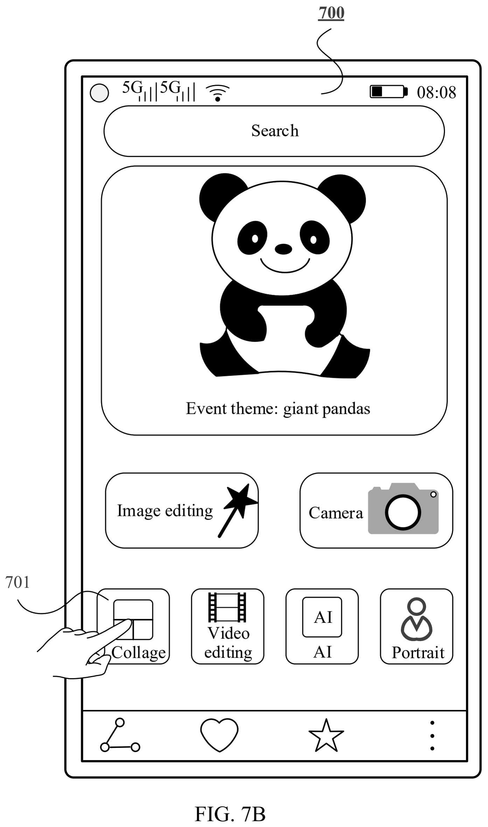

For example, as shown in FIG. 7A, the electronic device 100 displays a home screen 200. For specific descriptions of the home screen 200, refer to the specific descriptions in the embodiment shown in FIG. 2A. The electronic device 100 may receive a tap operation of a user for a Meitu application icon 208, and display, in response to the tap operation, a Meitu application interface 700 shown in FIG. 7B.

As shown in FIG. 7B, one or more editing controls, for example, an image editing control, a camera control, a collage control 701, a video editing control, an artificial intelligence (artificial intelligence, AI) control, and a portrait control, may be displayed on the Meitu application interface 700. Each of the one or more editing controls may be used to trigger the electronic device 100 to perform a corresponding editing operation on a selected video or image.

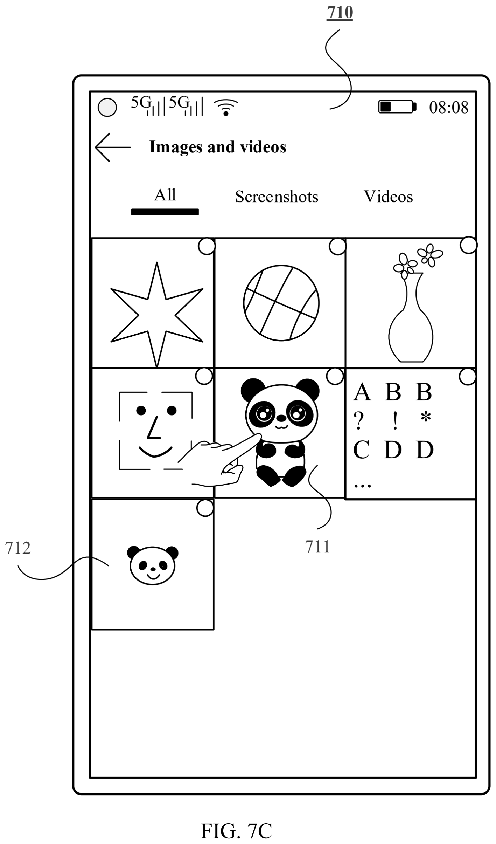

The electronic device 100 may receive a tap operation of the user for the collage control 701, and display, in response to the tap operation, an image selection interface 710 shown in FIG. 7C.

As shown in FIG. 7C, thumbnails of one or more images, for example, a thumbnail 711 and a thumbnail 712, may be displayed on the image selection interface 710. A selection identifier may be further displayed on each thumbnail, to indicate, to the user, whether the thumbnail is selected.

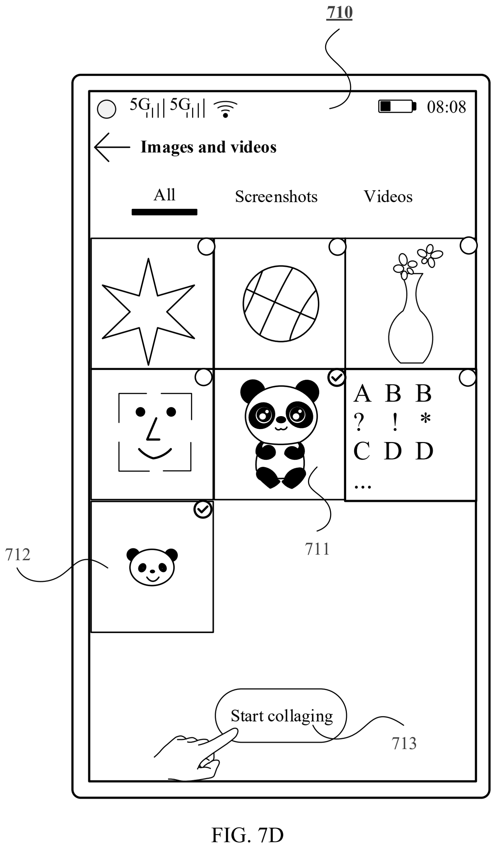

The electronic device 100 may sequentially receive a tap operation of the user for the thumbnail 711 and a tap operation of the user for the thumbnail 712, and display check marks in selection identifiers on the thumbnail 711 and the thumbnail 712 in response to the tap operations, as shown in FIG. 7D.

As shown in FIG. 7D, the check marks are displayed in the selection identifiers on the thumbnail 711 and the thumbnail 712, to indicate, to the user, that the thumbnail 711 and the thumbnail 712 are in a selected state. In addition, after detecting that a selected thumbnail exists, the electronic device 100 may display a start collaging control 713 on the image selection interface 710, and the start collaging control 713 is used to trigger the electronic device 100 to display a collage interface 720.

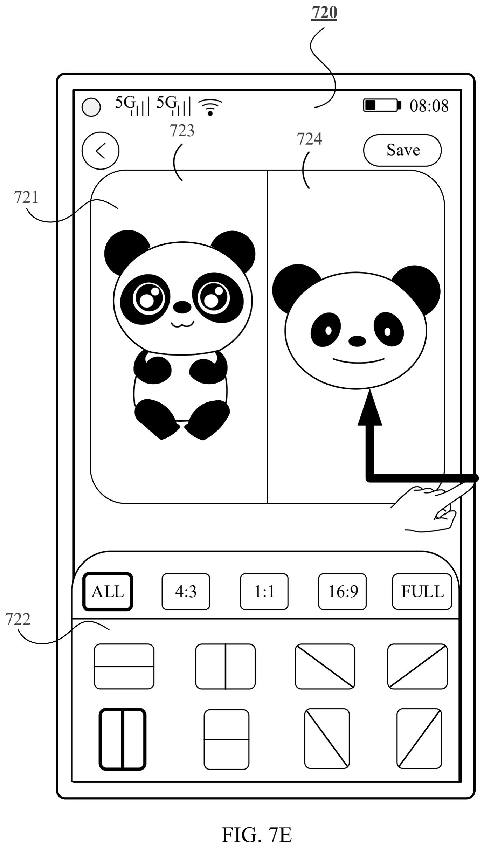

The electronic device 100 may receive a tap operation of the user for the start collaging control 713, and display, in response to the tap operation, the collage interface 720 shown in FIG. 7E.

As shown in FIG. 7E, the collage interface 720 may include an interface element 721, a save control, a return control, and a mode setting area 722, and one or more mode options may be displayed in the mode setting area 722. The interface element 721 may include a plurality of image controls, for example, an image control 723 and an image control 724. The mode option in the mode setting area 722 may be used to trigger the electronic device 100 to change a position relationship between two image controls in the interface element 721 or change a display size of the interface element 721.

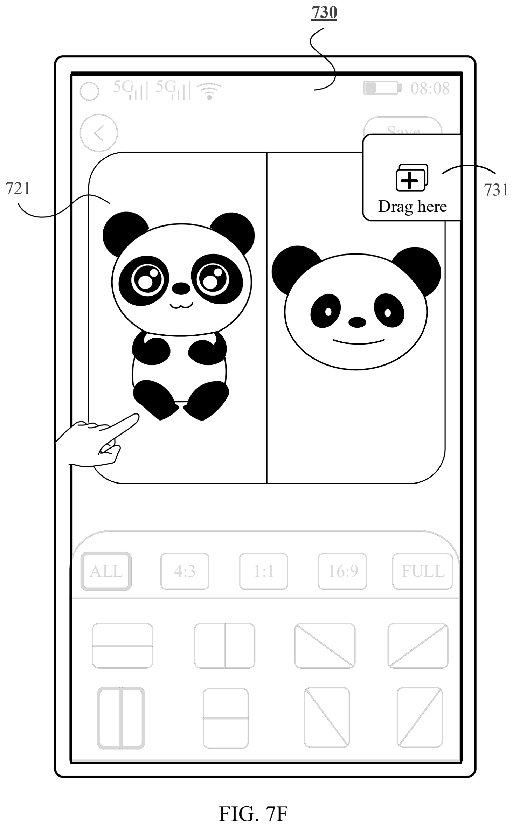

The electronic device 100 may receive a sliding operation whose start point is a right edge of a display and whose track is L-shaped on the display, and in response to the sliding operation, enable a drag mode, and display a drag mode interface 730 shown in FIG. 7F.

As shown in FIG. 7F, the drag mode interface 730 may include the interface element 721 and a transfer station icon 731. For specific content of the transfer station icon 731, refer to the related descriptions in the foregoing embodiment. For specific descriptions of the interface element 721, refer to the related descriptions in the foregoing embodiment shown in FIG. 7E.

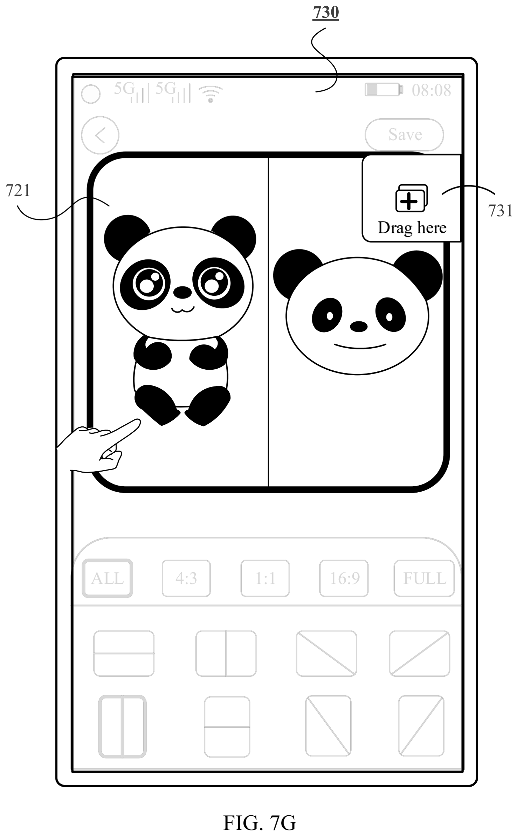

The electronic device 100 may receive a tap operation of the user for the interface element 721, and display a check mark on the interface element 721 in response to the tap operation, as shown in FIG. 7G.

As shown in FIG. 7G, that the electronic device 100 displays the check mark on the interface element 721 may be that the electronic device 100 highlights the interface element 721. In some embodiments, the electronic device 100 may alternatively indicate, to the user by using different display colors or different display brightness, that the interface element 721 is in a selected state. It may be understood that only an example of a check mark is provided herein. In this embodiment of this application, the electronic device 100 may alternatively use another check mark, for example, the check mark described in the embodiment shown in FIG. 5C or FIG. 5H. This is not limited in this application.

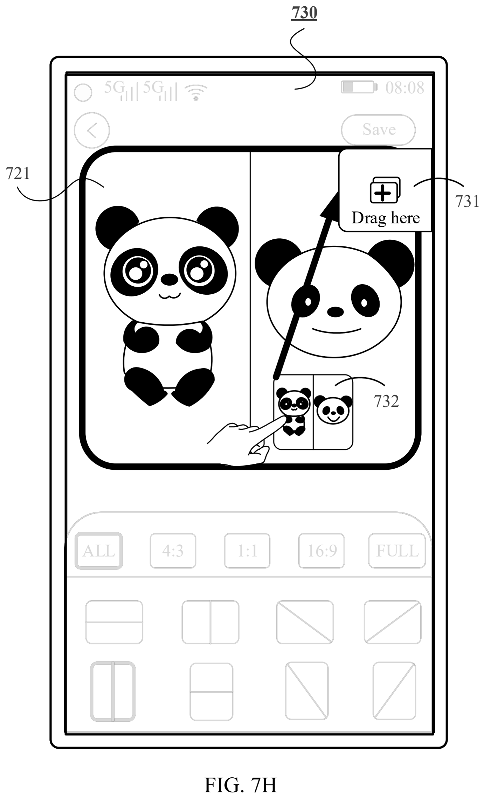

The electronic device 100 receives a touch-and-hold and drag operation of the user for any point on the drag mode interface 730, and displays a drag layer 732 on the drag mode interface 640 in response to the touch-and-hold and drag operation, as shown in FIG. 7H.

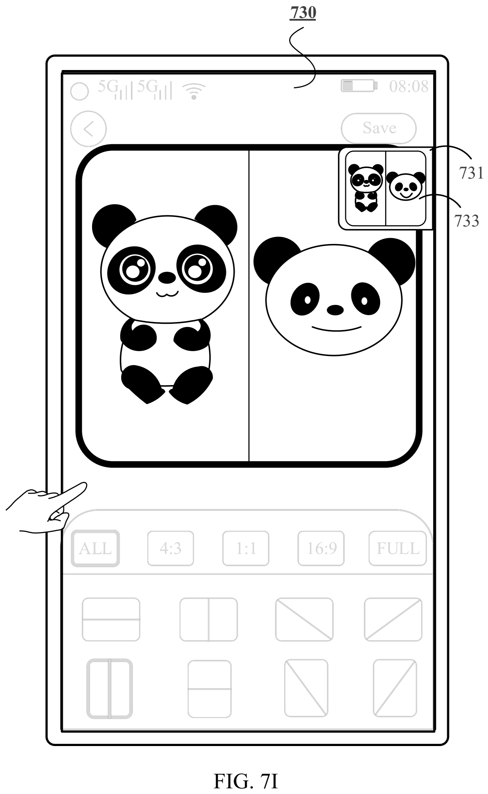

As shown in FIG. 7H, the drag layer 732 may be an image whose display content is the same as display content of the interface element 721 and whose display size is the same as or different from a display size of the interface element 721. The drag layer 732 may move along a track of dragging the drag mode interface 730 by the user. When the user drags the drag layer 7322 to a position of the transfer station icon 7311, and the electronic device 100 detects a release operation of the user, as shown in FIG. 7I, the electronic device 100 may disable displaying of the drag layer 732, and display a thumbnail 733 of the interface element 721 on the transfer station icon 731.

As shown in FIG. 7I, the thumbnail 733 may be an image whose display content is the same as display content of the interface element 721 and whose display size is less than a display size of the transfer station icon 731.

In this way, the electronic device 100 may drag an interface element that is on the interface 1 and that includes a plurality of image controls to the transfer station.

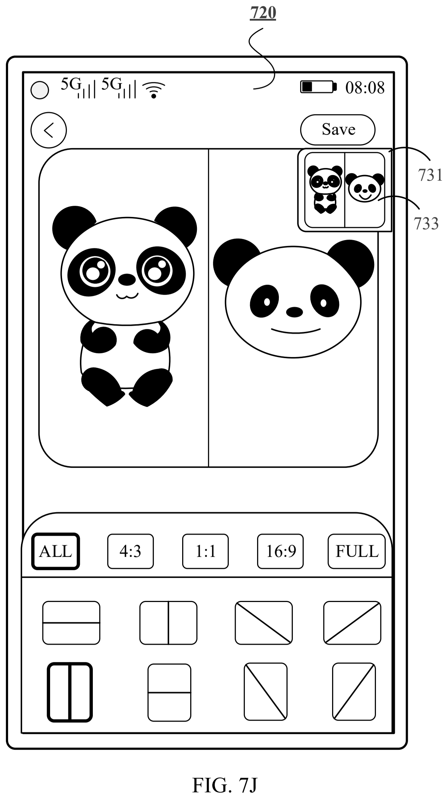

After the interface element 721 is dragged to a transfer station, the electronic device 100 may also receive a tap operation of the user for the drag mode interface 730, and in response to the tap operation, disable displaying of the drag mode interface 730, and redisplay the collage interface 720, as shown in FIG. 7J.

As shown in FIG. 7J, the electronic device 100 displays the collage interface 720. For specific descriptions of the collage interface 720, refer to the related descriptions in the embodiment shown in FIG. 7E. In addition, optionally, the transfer station icon 731 may be displayed on the collage interface 720, and the thumbnail 733 may be further displayed on the transfer station icon 731.

In this way, the electronic device 100 can exit the drag mode and return to a previous interface.

After the interface element including the plurality of controls is dragged to the transfer station, the electronic device 100 may store data of the interface element (for example, the quantity and arrangement layout of controls included in the interface element, and an image, a text, and a hyperlink of each control) in the transfer station. If the interface element includes only an image control, the electronic device 100 displays an interface 2 of the application 2, a transfer station sidebar is displayed on the interface 2, and a thumbnail of the interface element is displayed in the transfer station sidebar. In this case, the electronic device 100 may receive a touch-and-hold and drag operation of the user for the thumbnail, and display the interface element on the interface 2 in response to the touch-and-hold and drag operation.

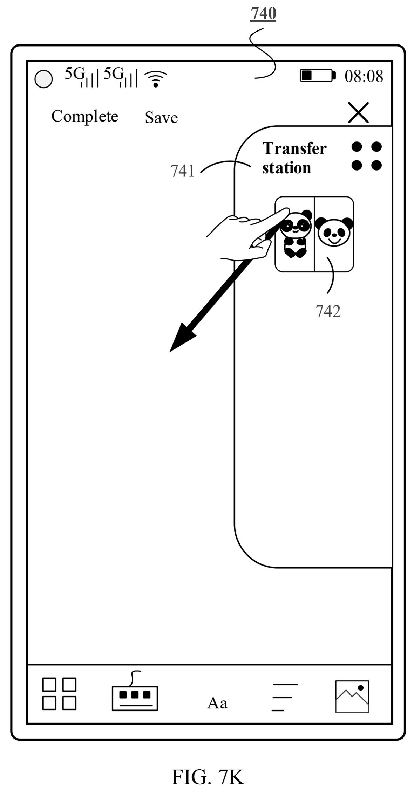

For example, as shown in FIG. 7K, the electronic device 100 displays a document editing interface 740. For a manner of starting the document editing interface 740, refer to the related descriptions in the embodiment shown in FIG. 3D to FIG. 3G, and for specific content of the document editing interface 740, refer to the related descriptions of the document editing interface 310 shown in FIG. 3G. In addition, a transfer station sidebar 741 is further displayed on the document editing interface 740, a thumbnail 742 is displayed in the transfer station sidebar 741, and the thumbnail 742 is a thumbnail corresponding to the interface element 721. In some embodiments, the thumbnail 742 may alternatively be an image whose display content is the same as the display content of the interface element 721 and whose display size is different from the display size of the interface element 721.

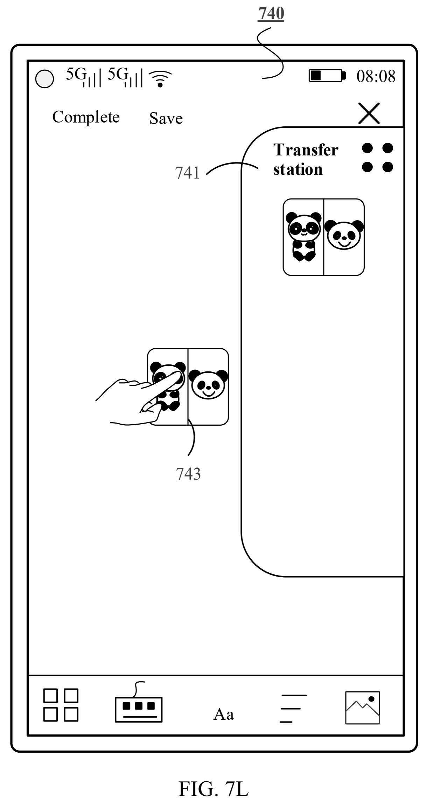

The electronic device 100 may receive a touch-and-hold and drag operation of the user for the thumbnail 742, and display a drag layer 743 of the thumbnail 742 in response to the touch-and-hold and drag operation, as shown in FIG. 7L.

As shown in FIG. 7L, the drag layer 743 may be an image whose display content is the same as display content of the thumbnail 742 and whose display size is the same as or different from a display size of the thumbnail 742. The drag layer 743 may move along a track of a drag operation of the user for the document editing interface 740.

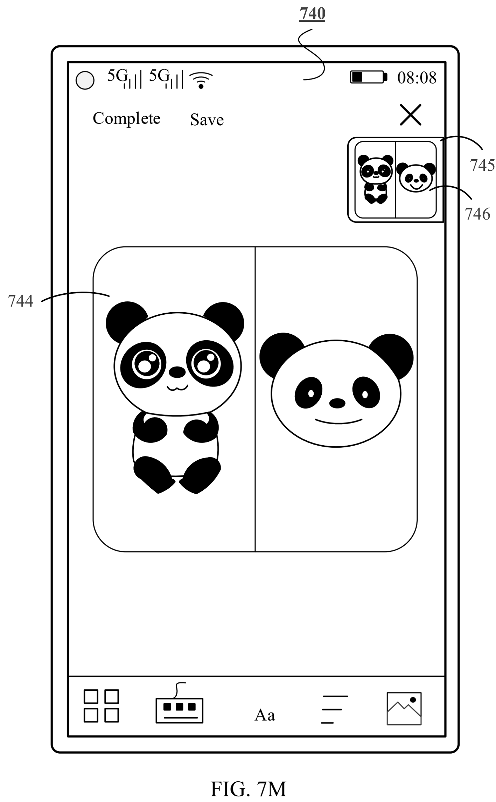

When the user drags the drag layer 743 to an area outside the transfer station sidebar 741, and a release operation of the user is detected, as shown in FIG. 7M, the electronic device 100 may display an interface element 744 on the document editing interface 740. The interface element 744 is the same as the interface element 721 in the embodiment shown in FIG. 7E. In addition, a transfer station icon 745 may be further displayed on the document editing interface 740, and a thumbnail 746 may be displayed on the transfer station icon 745. The thumbnail 746 may be the thumbnail of the interface element 721, or may be a thumbnail of another control in the transfer station.

It may be understood that the embodiment shown in FIG. 7A to FIG. 7M is merely an example. In this embodiment of this application, the application 1 may be another application (including a self-developed application and a third-party application) other than the Meitu application, the application 2 may be another application other than the document application, and the interface element may include more or fewer controls. This is not limited in this application.

The following describes a specific procedure of a data transmission method according to an embodiment of this application.

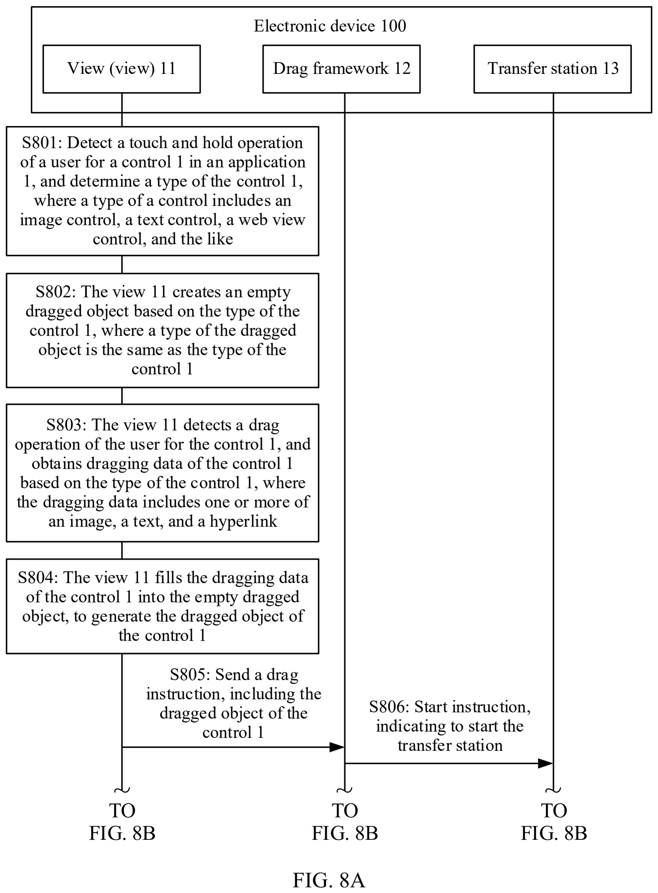

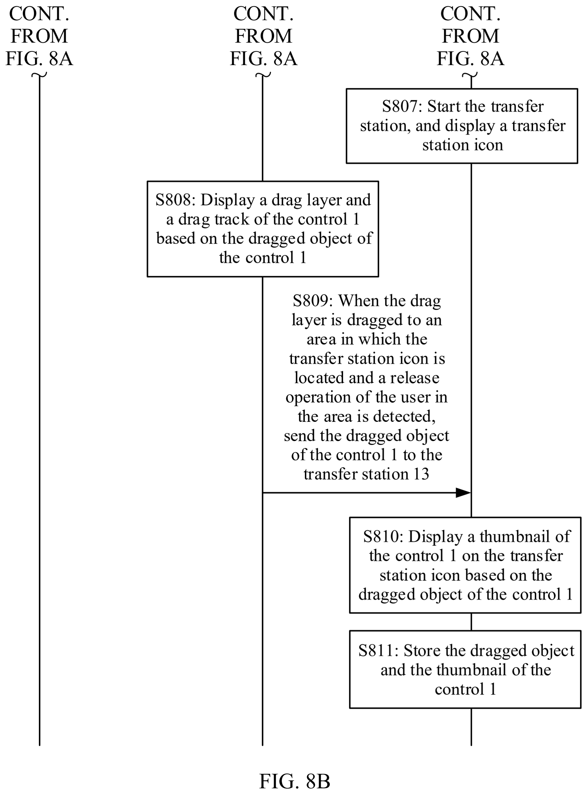

FIG. 8A and FIG. 8B are a diagram of a module interaction procedure of transmitting data in an application 1 to a transfer station according to an embodiment of this application.

As shown in FIG. 8A and FIG. 8B, the electronic device 100 may include a view (view) 11, a drag framework 12, and a transfer station 13. A specific procedure of transmitting data in the application 1 to the transfer station may include the following steps.

S801: The view 11 detects a touch and hold operation of a user for a control 1 in the application 1, and determines a type of the control 1, where a type of a control includes an image control, a text control, a web view control, and the like.

When an interface 1 of the application 1 is displayed and the interface 1 includes the control 1, the view 11 may receive a touch and hold operation of the user for the control 1, and in response to the touch and hold operation, after determining that an operation object of the touch and hold operation is the control 1, determine the type of the control 1 based on code of the control 1. The type of the control may include an image control, a text control, a web view control, and the like.

For example, the touch and hold operation for the control 1 may be the touch and hold operation for the image control 221 in the embodiment shown in FIG. 2C, or may be the touch and hold operation for the image control 222 in the embodiment shown in FIG. 2E, or may be the touch and hold operation for the text control 223 in the embodiment shown in FIG. 3A, or the touch and hold operation for the web view control 234 in the embodiment shown in FIG. 5A.

S802: The view 11 creates an empty dragged object based on the type of the control 1, where a type of the dragged object is the same as the type of the control 1.

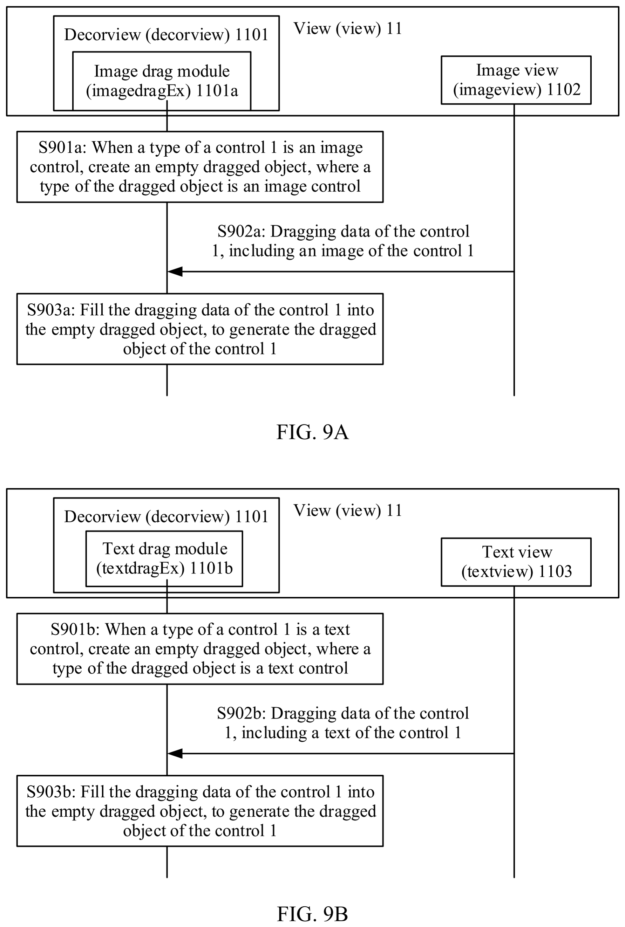

For specific content of creating the empty dragged object by the view 11, refer to related steps in the following embodiments shown in FIG. 9A to FIG. 9C. Details are not described herein.

S803: The view 11 detects a drag operation of the user for the control 1, and obtains dragging data of the control 1 based on the type of the control 1, where the dragging data includes one or more of an image, a text, and a hyperlink.

When detecting the drag operation of the user for the control 1, the view 11 may obtain the dragging data of the control 1 based on the type of the control 1. The type of the control may include any one or more of the following: an image control, a text control, a web view control, and the like. In some other embodiments, the view 11 may alternatively obtain dragging data of the control 1 in response to the touch and hold operation for the control 1 in step S801.

The dragging data includes one or more of an image, a text, and a hyperlink. In some embodiments, when the type of the control 1 is an image control, the dragging data may include an image of the control 1. When the type of the control 1 is a text control, the dragging data may include a text of the control 1. When the type of the control 1 is a web view control, the dragging data of the control 1 may include an image and a hyperlink of the control 1. If there is a text control in the web view control, the dragging data of the control 1 may further include a text of the text control.

In some embodiments, the dragging data of the control 1 may further include a drag permission of the control 1, and the drag permission indicates that the control 1 is a dragable control. For example, when determining that the dragging data of the control 1 includes the drag permission, the view 11 may determine that the control 1 is a dragable control, and perform the following steps. When determining that the dragging data of the control 1 does not include the drag permission, the view 11 determines that the control 1 is a non-dragable control, and may output a prompt, to indicate, to the user, that the control 1 cannot be dragged to the transfer station. In some other embodiments, the view 11 may further check a validity period of the drag permission, that is, determine whether the drag permission is valid based on the drag permission (for example, check the validity period of the drag permission and check a licensor of the drag permission), and a check result indicates whether the drag permission is valid. For example, when determining that the drag permission of the control 1 is valid, the view 11 determines that the control 1 is a dragable control, and performs the following steps. When determining that the drag permission of the control 1 is invalid, the view 11 determines that the control 1 is a non-dragable control, and outputs a prompt, to indicate, to the user, that the control 1 cannot be dragged to the transfer station. It may be understood that the dragging data of the control 1 may further include more or less content than that in the foregoing embodiment. This is not limited in this application.

The view 11 may obtain, based on the type of the control 1, the dragging data of the control 1 from a view module corresponding to the type. The view module may include an image view (imageview), a text view (textview), a web view (webview), and the like. For a specific process of obtaining the dragging data based on the type of the control 1 by the view 11 and a specific process of generating the dragged object of the control 1 in the subsequent step S804, refer to content in the following embodiments shown in FIG. 9A to FIG. 9C. Details are not described herein.

S804: The view 11 fills the dragging data of the control 1 into the empty dragged object, to generate the dragged object of the control 1.

After obtaining the dragging data of the control 1, the view 11 may fill the dragging data of the control 1 into the empty dragged object, to generate the dragged object of the control 1. For a specific procedure, refer to the following embodiments shown in FIG. 9A to FIG. 9C.

S805: The view 11 sends a drag instruction to the drag framework 12, where the drag instruction includes the dragged object of the control 1.

After generating the dragged object of the control 1, the view 11 may send the drag instruction to the drag framework 12, where the drag instruction includes the dragged object of the control 1. The drag instruction indicates the drag framework 12 to initiate dragging.

S806: The drag framework 12 sends a start instruction to the transfer station 13, to indicate to start the transfer station.

Step S806 is an optional step.

In some embodiments, the drag instruction is received, and in response to the drag instruction, when detecting that the transfer station 13 is not started, the drag framework 12 may send the start instruction to the transfer station 13, where the start instruction indicates to start the transfer station.

In some other embodiments, the drag instruction is received, and in response to the drag instruction, when detecting that the transfer station 13 is started, the drag framework 12 may perform the following step S809 and subsequent steps.

S807: The transfer station 13 starts the transfer station, and displays a transfer station icon.

The transfer station 13 receives the start instruction of the drag framework 12, and in response to the start instruction, starts the transfer station, and draws and displays the transfer station icon.

For example, the transfer station icon may be the transfer station icon 224 shown in FIG. 2D.

S808: The drag framework 12 displays a drag layer and a drag track of the control 1 based on the dragged object of the control 1.

After receiving the dragged object of the control 1, the drag framework 12 may draw and display the drag layer and the drag track of the control 1 based on the dragging data in the dragged object of the control 1.

The drag layer of the control 1 may be an image whose display content is the same as display content of the control 1, and a display size of the drag layer may be the same as or different from a display size of the control 1. For example, if the control 1 is the image control 221 in FIG. 2C, the drag layer of the control 1 may be the drag layer 225 shown in FIG. 2D. If the control 1 is the image control 234a in the web view control 234 shown in FIG. 4B, the drag layer of the control 1 may be the drag layer 237 shown in FIG. 4C. If the control 1 is the text control 223 shown in FIG. 3A, the drag layer of the control 1 may be the drag layer 229 shown in FIG. 3B.

The drag track may be drawn and displayed based on a track of an operation 1 of the user. It should be noted that, in the foregoing step S801, an action object of the operation 1 of the user is the control 1, but the drag layer of the control 1 moves along the track of the operation 1, and the control 1 is still displayed at an original position.

S809: When the drag layer is dragged to an area in which the transfer station icon is located and a release operation of the user in the area is detected, the drag framework 12 sends the dragged object of the control 1 to the transfer station 13.

After the transfer station 13 is started, when detecting that the user drags the drag layer to the area in which the transfer station icon is located, and when detecting the release operation of the user in the area, the drag framework 12 may send the dragged object of the control 1 to the transfer station 13.

S810: The transfer station 13 displays a thumbnail of the control 1 on the transfer station icon based on the dragged object of the control 1.

After receiving the dragged object of the control 1, the transfer station 13 may generate the thumbnail of the control 1 based on the dragging data in the dragged object or based on the type of the dragged object. The thumbnail of the control 1 may be an image whose display content is the same as the display content of the control 1 and whose display size is less than or equal to the display size of the control 1. It should be noted that the display size of the thumbnail displayed on the transfer station icon is less than a display size of the transfer station icon.

When the control 1 is an image control or a web view control, the transfer station 13 may obtain the image of the control 1 based on the dragged object of the control 1, and generate the thumbnail of the control 1. For example, if the control 1 is the image control 221 shown in FIG. 2C, the thumbnail of the control 1 may be the thumbnail 226 shown in FIG. 2E. For another example, if the control 1 is the image control 234a in the web view control 234 shown in FIG. 4B, the thumbnail of the control 1 may be the thumbnail 238 shown in FIG. 4D.

When the control 1 is a text control, the transfer station 13 may obtain a text of the control 1 from the dragged object, and generate the thumbnail of the control 1 based on the text. In some embodiments, the transfer station 13 may alternatively determine, based on the dragged object, that the control 1 is a text control, and generate a text thumbnail based on the type of the control 1. The text thumbnail indicates the type of the control 1. For example, the text thumbnail may be the text thumbnail 223a shown in FIG. 3A.

After generating the thumbnail of the control 1, the transfer station 13 may display the thumbnail of the control 1 on the transfer station icon.

S811: The transfer station 13 stores the dragged object and the thumbnail of the control 1.

After generating the thumbnail of the control 1, the transfer station 13 may store the thumbnail and the dragged object of the control 1 based on a correspondence.

For example, Table 1 shows a correspondence between a dragged object and a thumbnail that are stored in the transfer station 13.

**Table 1**

| Thumbnail | Dragged object |
|---|---|
| Image a | Dragged object a |
| Image b | Dragged object b |

As shown in Table 1, the transfer station 13 may store thumbnails and dragged objects that correspond to one or more controls. In addition, there is a mapping relationship between a thumbnail and a dragged object of a same control. It can be learned from Table 1 that the thumbnail corresponding to the dragged object a is the image a, and the thumbnail corresponding to the dragged object b is the image b.

It may be understood that the embodiment shown in Table 1 is merely an example. In this embodiment of this application, the transfer station 13 may alternatively store more or less data, or may alternatively store content different from that in the embodiment shown in Table 1. This is not limited in this application.

In some embodiments, the transfer station 13 may obtain the type and the dragging data of the control 1 from the dragged object. After generating the thumbnail of the control 1, the transfer station 13 may store the type, the thumbnail, and the dragging data of the control 1 based on a correspondence.

For example, Table 2 shows a correspondence among a control type, dragging data, and a thumbnail that are stored in the transfer station 13.

**Table 2**

| Thumbnail | Type | Dragging data |
|---|---|---|
| Image a | Image control | Image d |
| Image b | Text control | Text a |
| Image c | Web view control | Image e and hyperlink c |

As shown in Table 2, the transfer station 13 may store types, thumbnails, and dragging data that correspond to one or more controls. In addition, there is a mapping relationship among a thumbnail, a type, and dragging data of a same control. It can be learned from Table 2 that dragging data of an image control includes the image d, and a thumbnail of the image control is the image a. Dragging data of a text control includes the text a, and a thumbnail corresponding to the text control is the image b. Dragging data of a web view control includes the image e and the hyperlink c, and a thumbnail of the web view control is the image c.

It may be understood that the embodiment shown in Table 2 is merely an example. In this embodiment of this application, the transfer station 13 may alternatively store more or less data, or may alternatively store content different from that in the embodiment shown in Table 2. This is not limited in this application.

Cross-process data transmission can be implemented by using the data transmission method provided in embodiments of this application. An operation is simple. In addition, when a third-party application is not adapted, controls such as an image control, a text control, and a web view control in the third-party application may also be transmitted to the transfer station.

The following describes a schematic flowchart in which the view 11 obtains the dragging data of the control 1 based on the type of the control 1 and generates the dragged object.

FIG. 9A shows a specific procedure of obtaining dragging data of an image control and generating a dragged object of the image control according to an embodiment of this application.

As shown in FIG. 9A, when the control 1 is an image control, the view 11 may include a decorview (decorview) 1101 and an image view (imageview) 1102, where the decorview 1101 may include an image drag module (imagedragEx) 1101a. A specific process of obtaining the dragging data of the image control and generating the dragged object of the image control by the view 11 may include the following steps.

S901a: When the view 11 determines that the type of the control 1 is an image control, the image drag module 1101a creates the empty dragged object, where the type of the dragged object is an image control.

When it is determined that the control 1 is an image control, the image drag module 1101a may create the empty dragged object based on the type of the control 1, where the type of the dragged object is an image control.

S902a: The image drag module 1101a obtains the dragging data of the control 1 from the image view 1102, where the dragging data includes the image of the control 1.

S903a: The image drag module 1101a fills the dragging data of the control 1 into the empty dragged object, to generate the dragged object of the control 1.

In this way, when a touch-and-hold and drag operation of the user for the image control is detected, a drag response of the image view (imageview) 1102 may be invoked to obtain the image of the image control and generate the dragged object of the image control.

FIG. 9B shows a specific procedure of obtaining dragging data of a text control and generating a dragged object of the text control according to an embodiment of this application.

As shown in FIG. 9B, when the control 1 is a text control, the view 11 may include a decorview (decorview) 1101 and a text view (textview) 1103, and the decorview 1101 may include a text drag module (textdragEx) 1101b. A specific process of obtaining the dragging data of the text control and generating the dragged object of the text control by the view 11 may include the following steps.

S901b: When the view 11 determines that the type of the control 1 is a text control, the text drag module 1101b creates the empty dragged object, where the type of the dragged object is a text control.

When it is determined that the control 1 is a text control, the text drag module 1101b may create the empty dragged object based on the type of the control 1, where the type of the dragged object is a text control.

S902b: The text drag module 1101b obtains the dragging data of the control 1 from the text view 1103, where the dragging data includes the text of the control 1.

S903b: The text drag module 1101b fills the dragging data of the control 1 into the empty dragged object, to generate the dragged object of the control 1.

In this way, when a touch-and-hold and drag operation of the user for the text control is detected, a drag response of the text view (textview) 1103 may be invoked to obtain the text of the text control and generate the dragged object of the text control.

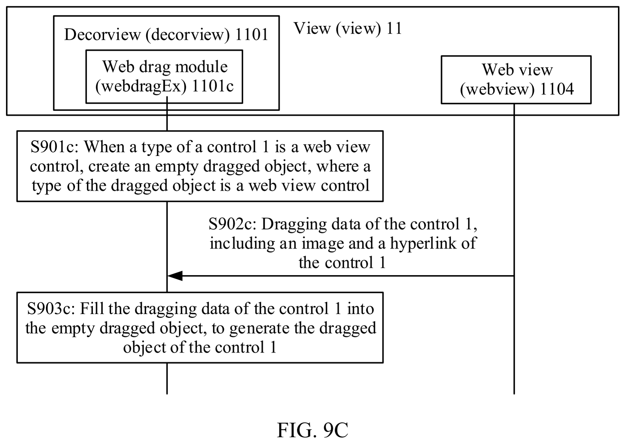

FIG. 9C shows a specific procedure of obtaining dragging data of a web view control and generating a dragged object of the web view control according to an embodiment of this application.

As shown in FIG. 9C, when the control 1 is a web view control, the view 11 may include a decorview (decorview) 1101 and a web view (webview) 1104, and the decorview 1101 may include a web drag module (webdragEx) 1101c. A specific procedure of obtaining the dragging data of the web view control and generating the dragged object of the web view control by the view 11 may include the following steps.

S901c: When the view 11 determines that the type of the control 1 is a web view control, the web drag module 1101c creates the empty dragged object, where the type of the dragged object is a web view control.

When it is determined that the control 1 is a web view control, the web drag module 1101c may create the empty dragged object based on the type of the control 1, where the type of the dragged object is a web view control.

S902c: The web drag module 1101c obtains the dragging data of the control 1 from the web view 1104, where the dragging data includes the image and the hyperlink of the control 1.

In some embodiments, the dragging data of the control 1 may further include the text of the control 1.

In some other embodiments, the dragging data of the control 1 may alternatively include only the image of the control 1, that is, the web view control is transmitted as an image.

S903c: The web drag module 1101c fills the dragging data of the control 1 into the empty dragged object, to generate the dragged object of the control 1.

In this way, when a touch-and-hold and drag operation of the user for the web view control is detected, a drag response of the web view (webview) 1104 may be invoked to obtain the dragging data of the web view control and generate the dragged object of the web view control.

In a possible implementation, when detecting the operation 1 of the user for the control 1, the view 11 may obtain the type and the dragging data of the control 1, and generate the dragged object of the control 1 based on the type and the dragging data of the control 1. In some embodiments, the operation 1 may be an operation, for example, a touch-and-hold and drag operation. In some other embodiments, the operation 1 may alternatively be a combined operation, including a touch and hold operation and a drag operation.

In some embodiments, when there is native logic of a touch and hold operation (or a touch operation) of the user for the control 1, the decorview (decorview) 1101 may determine execution logic of a next step by detecting whether a drag operation for the control 1 exists. The native logic of the control 1 means that, when the method in this application is not implemented, the electronic device 100 receives a touch and hold operation of the user for the control 1, and performs an event response in response to the touch and hold operation.

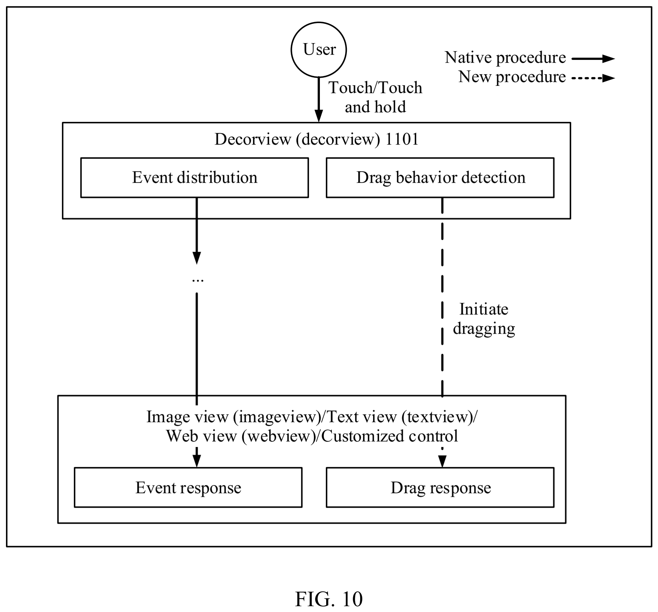

FIG. 10 is a diagram of determining the execution logic based on the drag operation of the user by the decorview 1101 according to an embodiment of this application.

As shown in FIG. 10, when receiving a touch operation or a touch and hold operation of the user for the control 1, the decorview 1101 may trigger drag behavior detection, and detect whether the user performs the drag operation for the control 1 after the touch operation or the touch and hold operation.

If the drag operation of the user for the control 1 is detected, the decorview 1101 may invoke a drag response of a corresponding view module (for example, an image view, a text view, a web view, or a customized control view), and perform the data transmission method provided in embodiments of this application, to transmit the dragging data of the control 1 to the transfer station.

If no drag operation of the user for the control 1 is detected, the decorview 1101 may trigger an event distribution procedure, and invoke, based on the native logic of the control 1, a corresponding view module to execute an original event response, for example, display a web view corresponding to the control 1.

The decorview 1101 may set a time period for drag behavior detection, that is, in the preset time period, detect whether to perform, based on whether the drag operation of the user for the control 1 is detected, the data transmission method provided in this application.

In some embodiments, the decorview 1101 may alternatively determine, by detecting duration of the touch and hold operation, whether to trigger drag behavior detection. For example, if it is detected that the duration of the touch and hold operation reaches preset time (for example, 1.5 seconds), drag behavior detection is triggered. If the duration of the touch and hold operation does not reach preset time, the event distribution procedure is triggered.

In some embodiments, the control 1 may alternatively be a control defined by a developer (also referred to as a customized control), for example, a customized text control. The transfer station 13 may also include an accessibility service. When the control 1 is a customized text control, the view 11 cannot obtain the text of the control 1 from the text view (textview) 1103. In this case, the transfer station 13 may enable the accessibility service, and obtain the text of the control 1 by using the accessibility service.

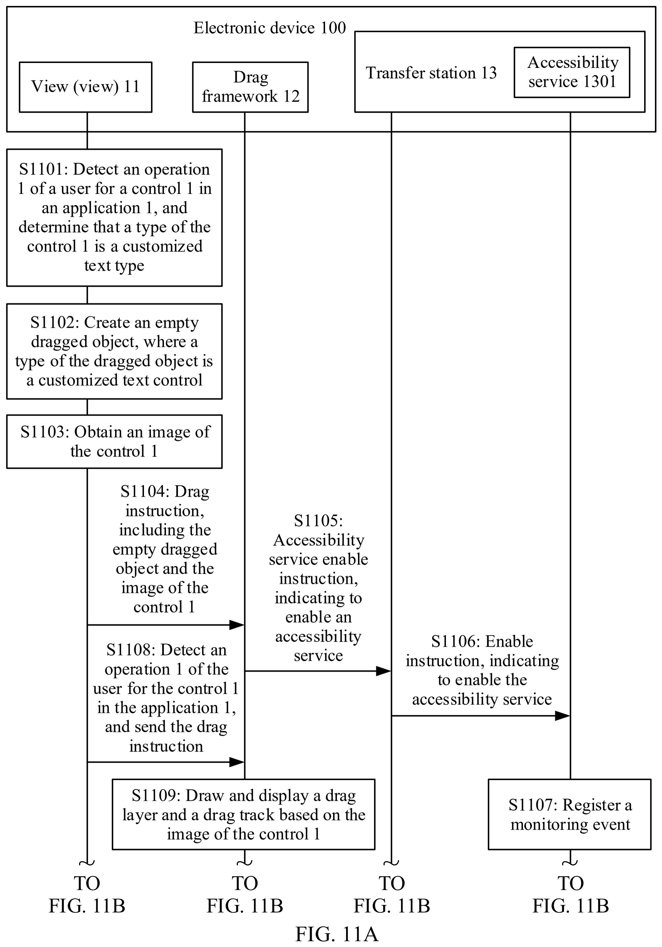

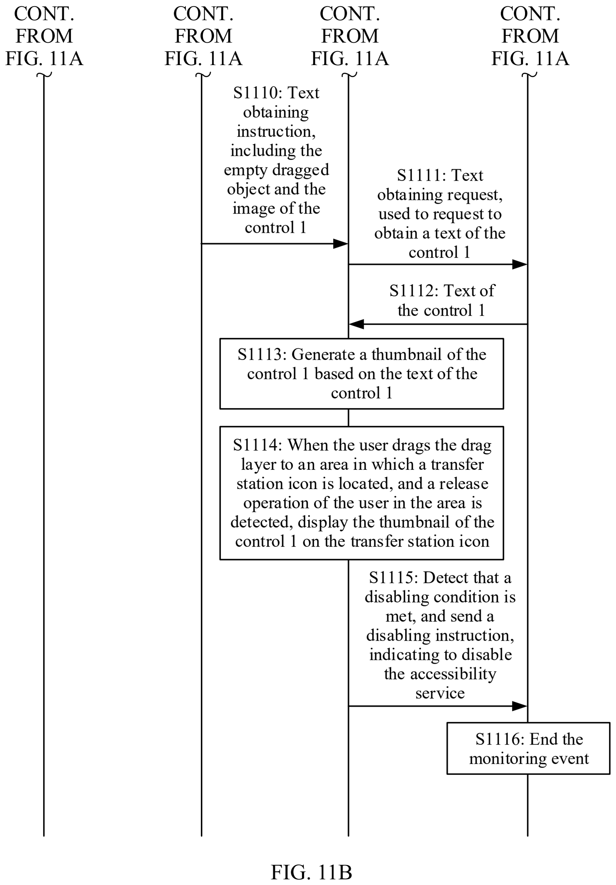

FIG. 11A and FIG. 11B show a specific procedure of transmitting, when the control 1 is a customized text control, data of the control 1 in the application 1 to the transfer station 13 according to an embodiment of this application.

As shown in FIG. 11A and FIG. 11B, the electronic device 100 may include the view (view) 11, the drag framework 12, and the transfer station 13, where the transfer station 13 may include an accessibility service 1301. When the control 1 is a customized text control, the specific procedure of transmitting the data of the control 1 in the application 1 to the transfer station 13 according to this embodiment of this application may include the following steps.

S1101: The view 11 detects the operation 1 of the user for the control 1 in the application 1, and determines that the type of the control 1 is a customized text type.

When the interface of the application 1 is displayed and the interface includes the control 1, the view 11 may detect the operation 1 of the user for the control 1 in the application 1, and determine the type of the control 1. The operation 1 may be an operation, for example, a touch-and-hold and drag operation, or may be a combined operation, for example, including a touch and hold operation and a drag operation. When the operation 1 includes the touch and hold operation and the drag operation, the view 11 may alternatively determine the type of the control 1 in response to the touch and hold operation, and perform the following step S1102. When the drag operation is detected, the following step S1103 and subsequent steps are performed.

The view 11 may store one or more customized text types, for example, a type A, a type B, and a type C. When determining that the type of the control 1 is the same as one of the customized text types stored in the view 11, the view 11 may determine that the type of the control 1 is a customized text type.

S1102: The view 11 creates an empty dragged object, where a type of the dragged object is a customized text control.

The dragged object can indicate the type of control 1.

S1103: The view 11 obtains the image of the control 1.

The image of the control 1 is an image that is of the control 1 and that is displayed on the interface.

S1104: The view 11 sends a drag instruction to the drag framework 12, where the drag instruction includes the empty dragged object and the image of the control 1.

The empty dragged object may indicate that the type of the control 1 is a customized text type, and may further indicate the drag framework 12 to send an accessibility service enable instruction to the transfer station 13.

In some embodiments, the empty dragged object in the drag instruction may also be replaced with the type of the control 1, namely, the customized text type, to indicate the drag framework 12 to send the accessibility service enable instruction to the transfer station 13.

S1105: The drag framework 12 sends the accessibility service enable instruction to the transfer station 13, to indicate the transfer station to enable the accessibility service.

The step S1105 is an optional step. After receiving the drag instruction, the drag framework 12 may detect whether the accessibility service is enabled. If the accessibility service is not enabled, the accessibility service enable instruction is sent to the transfer station 13. If the accessibility service is enabled, the following step S1110 and subsequent steps may be performed.

In some embodiments, if the drag framework 12 detects that the transfer station 13 is not started, the drag framework 12 may pull up the transfer station. For specific content, refer to the foregoing step S806 and step S807. Details are not described herein again.

S1106: The transfer station 13 sends an enable instruction to the accessibility service 1301, to indicate to enable the accessibility service.

The enable instruction may include the operation 1, for example, the touch-and-hold and drag operation. The enable instruction may indicate the accessibility service 1301 to register a monitoring event, where the event is a touch and hold operation, a touch-and-hold and drag operation, or the like of the user for the electronic device 100.

S1107: The accessibility service 1301 registers the monitoring event.

After being enabled, the accessibility service 1301 may register the monitoring event, and monitor the operation 1, for example, the touch-and-hold and drag operation, of the user for the electronic device 100, or may monitor the touch and hold operation. After the monitoring event is registered, when the view 11 detects the operation 1 for the control 1, the accessibility service 1301 may obtain the image of the control 1 by using the view 11, and obtain the text of the control 1 by analyzing the obtained image of the control 1.

S1108: The view 11 detects the operation 1 of the user for the control 1, and sends the drag instruction to the drag framework 12.

The drag instruction includes the empty dragged object and the image of the control 1.

S1109: The drag framework 12 draws and displays the drag layer and the drag track of the control 1 based on the image of the control 1.

S1110: The drag framework 12 sends a text obtaining instruction to the transfer station 13, where the text obtaining instruction includes the empty dragged object and the image of the control 1.

The empty dragged object indicates that the type of the control 1 is a customized text type, and may further indicate the transfer station 13 to obtain the text of the control 1 based on the image of the control 1. In some embodiments, the empty dragged object in the text obtaining instruction may also be replaced with the type of the control 1, namely, the customized text type, to indicate the transfer station 13 to obtain the text of the control 1 based on the image of the control 1.

S1111: The transfer station 13 sends a text obtaining request to the accessibility service 1301, to request to obtain the text of the control 1.

The text obtaining request may include the image of the control 1.

S1112: The accessibility service 1301 sends the text of the control 1 to the transfer station 13.

The accessibility service 1301 may invoke an accessibility framework to analyze the text of the control 1 based on the image of the control 1, and send the text of the control 1 to the transfer station 13.

S1113: The transfer station 13 generates the thumbnail of the control 1 based on the text of the control 1.

The transfer station 13 may generate the thumbnail based on the text of the control 1. In some embodiments, the transfer station 13 may alternatively generate a text thumbnail based on the type of the control 1.

After the transfer station 13 generates the thumbnail based on the text of the control 1, the transfer station 13 may also store a correspondence among a thumbnail, text content, and a control type (the customized text control). For a specific storage manner, refer to related content in step S811 shown in FIG. 8A and FIG. 8B. Details are not described herein again. In some other embodiments, the transfer station 13 may alternatively generate the dragged object of the control 1 based on the text of the control 1 and the empty dragged object, and store a correspondence between the thumbnail and the dragged object of the control 1.

S1114: When the user drags the drag layer to the area in which the transfer station icon is located, and the release operation of the user in the area is detected, display the thumbnail of the control 1 on the transfer station icon.

S1115: When detecting that a disabling condition is met, the transfer station 13 sends a disable instruction to the accessibility service 1301, to indicate to disable the accessibility service.

Step S1115 and step S1116 are optional steps.

The disabling condition may include any one or more of the following: detecting that the accessibility service is not used within preset duration, receiving an operation of disabling the accessibility service by the user, and the like.

In some embodiments, the accessibility service may not be disabled.

S1116: The accessibility service 1301 ends the monitoring event.

After receiving the disable instruction, the accessibility service 1301 may end the monitoring event and stop monitoring the operation 1.

According to the data transmission method provided in embodiments of this application, the text of the customized text control may be obtained by using the accessibility service, and the text of the customized text control is transmitted to the transfer station.

In some embodiments, data in the transfer station 13 may also be transmitted to another application.

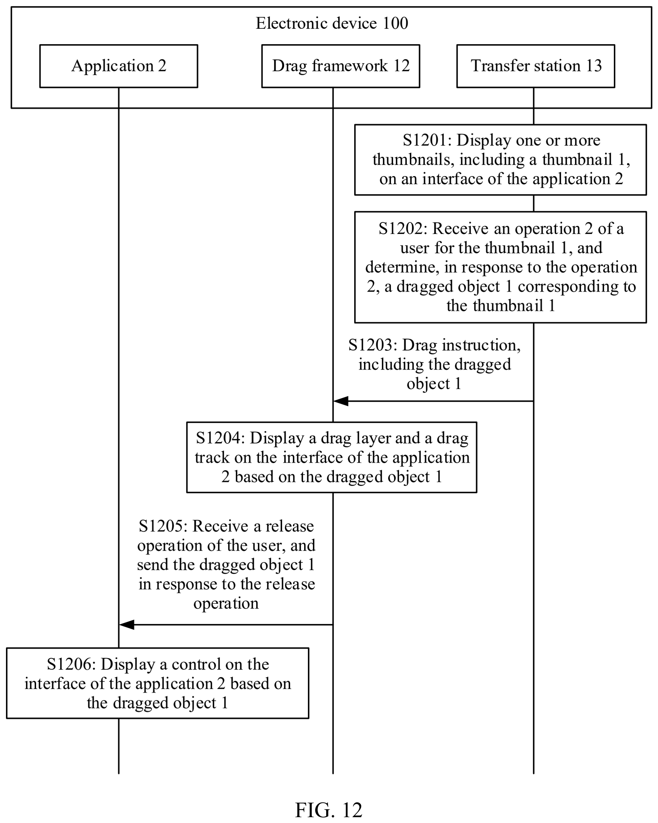

FIG. 12 shows a specific procedure of transmitting the data in the transfer station 13 to an application 2 according to an embodiment of this application.

As shown in FIG. 12, the electronic device 100 may include the application 2, the drag framework 12, and the transfer station 13. The specific procedure of transmitting the data in the transfer station 13 to the application 2 may include the following steps.

S1201: The transfer station 13 displays one or more thumbnails, including a thumbnail 1, on an interface of the application 2.

It can be learned from step S811 shown in FIG. 8A and FIG. 8B that, after the control 1 of the application 1 is dragged to the transfer station 13, the transfer station 13 stores thumbnails of the one or more controls and corresponding dragged objects.

When the electronic device 100 displays the interface of the application 2, the transfer station 13 may display the one or more thumbnails on the interface of the application 2. The one or more thumbnails may include the thumbnail 1.

For example, the interface of the application 2 may be the document editing interface 310 shown in FIG. 3I. The one or more thumbnails may be the one or more thumbnails, namely, the thumbnail 321, the thumbnail 322, and the thumbnail 323, displayed in the transfer station sidebar 320 shown in FIG. 3I. The thumbnail 1 may be the thumbnail 321.

For another example, the interface of the application 2 may alternatively be the image and text editing interface 240 shown in FIG. 2K, and the thumbnail 1 may be the thumbnail 242 shown in FIG. 2K.

It should be noted that a display size of the thumbnail displayed in step S1201 may be the same as or different from the display size of the thumbnail in step S810.

S1202: The transfer station 13 receives an operation 2 of the user for the thumbnail 1, and determines, in response to the operation 2, a dragged object 1 corresponding to the thumbnail 1.

The operation 2 may be a touch-and-hold and drag operation.

The operation 2 of the user for the thumbnail 1 may be the touch-and-hold and drag operation of the user for the thumbnail 321 in the embodiment shown in FIG. 3I, or may be the touch-and-hold and drag operation of the user for the transfer station icon 241 (where the thumbnail 242 is displayed on the transfer station icon 241) in the embodiment shown in FIG. 2K.

When it is determined that an object of the operation 2 includes the thumbnail 1, the transfer station 13 may determine, based on a stored relationship between a thumbnail and a dragged object, the dragged object 1 corresponding to the thumbnail 1.

S1203: The transfer station 13 sends a drag instruction to the drag framework 12, where the drag instruction includes the dragged object 1.

The drag instruction is used to initiate dragging to the drag framework 12.

S1204: The drag framework 12 displays a drag layer and a drag track on the interface of the application 2 based on the dragged object 1.

After receiving the dragged object 1, the drag framework 12 may draw and display the drag layer and the drag track based on the dragged object 1.

In some embodiments, display content of the drag layer may be the same as display content of the thumbnail 1. For example, if the thumbnail 1 is the thumbnail 321 shown in FIG. 3I, the drag layer may be the thumbnail 321 shown in FIG. 3J. If the thumbnail 1 is the thumbnail 421 shown in FIG. 4I, the drag layer may be the thumbnail 421 shown in FIG. 4J.

In some other embodiments, if the object of the touch-and-hold and drag operation of the user is the transfer station icon, the drag layer may be the transfer station icon. For example, if the thumbnail 1 is the thumbnail 242 on the transfer station icon 241 shown in FIG. 2K, the drag layer may be the transfer station icon 241 shown in FIG. 2L.

The drag track can be drawn and displayed based on a track of a drag operation of the user.

S1205: The drag framework 12 receives a release operation of the user, and sends the dragged object 1 to the application 2 in response to the release operation.

S1206: The application 2 displays a control on the interface of the application 2 based on the dragged object 1.

After receiving the dragged object 1, the application 2 may draw and display the control on the interface of the application 2 based on the dragged object 1. If the dragged object 1 is of an image type, the control may be an image control, and an image of the image control is an image in the dragged object 1. If the dragged object 1 is of a text type, the control may be a text control, and a text of the text control is a text in the dragged object 1. If the dragged object 1 is of a web view control type, the control may be a web view control, and the web view control may include an image and a hyperlink in the dragged object 1.

For example, the interface of the application 2 may be the image and text editing interface 240 shown in FIG. 2M, and controls displayed based on the dragged object 1 may include the image control 243 and the image control 244. The interface of the application 2 may be the document editing interface 310, and the control displayed based on the dragged object 1 may be the text control 315. The interface of the application 2 may be the chat interface 410 shown in FIG. 4K, and the control displayed based on the dragged object 1 may be the web view control 414 shown in FIG. 4K.

According to the data transmission method provided in embodiments of this application, the data in the transfer station may be transmitted to another application. In this way, data in one application may be transmitted to another application by using the transfer station. An operation step is simple, efficiency is high, and adaptation of a third-party application is not required.

In some embodiments, the electronic device 100 may further have a drag mode. In the drag mode, the electronic device 100 may simultaneously transmit, by using the transfer station, a plurality of controls in the application 1 to the application 2 by using the data transmission method provided in embodiments of this application.

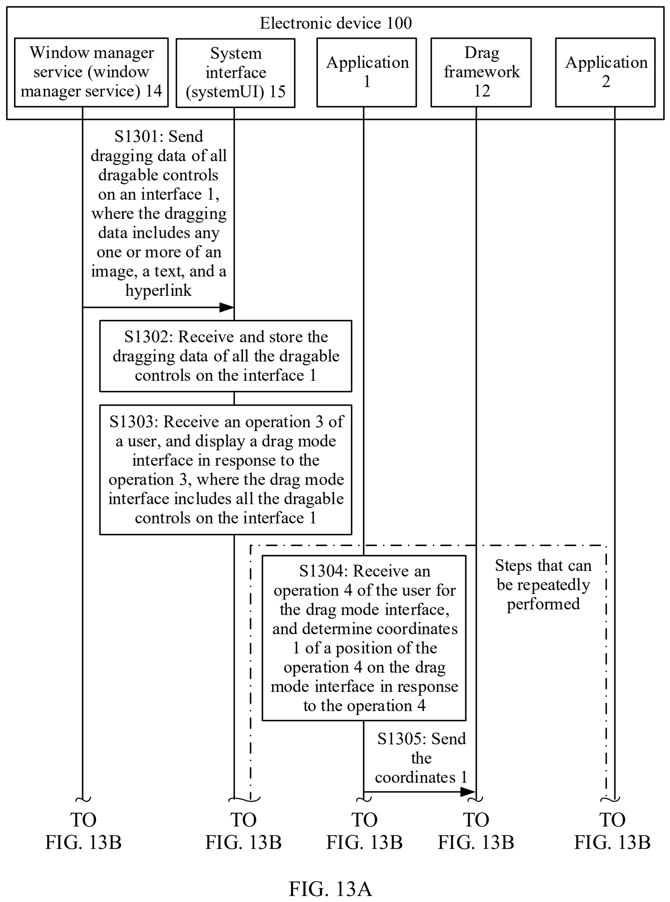

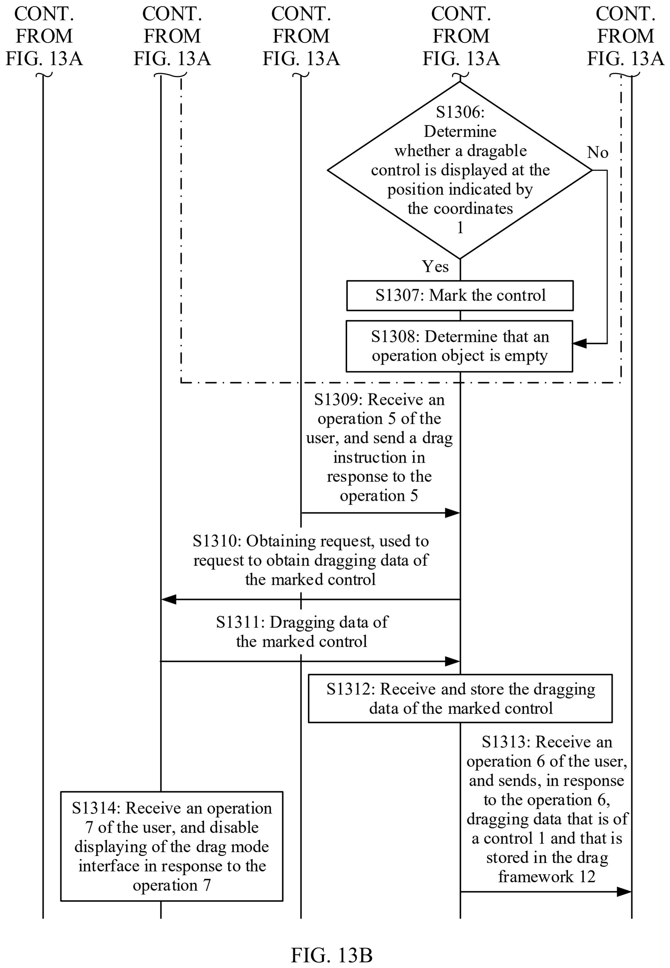

FIG. 13A and FIG. 13B are a schematic flowchart of simultaneously dragging a plurality of controls by using the data transmission method according to an embodiment of this application.

As shown in FIG. 13A and FIG. 13B, the electronic device 100 may include an application 1, an application 2, a drag framework 12, a window manager service (windowmanagerservice) 14, and a system interface (systemUI) 15. When the electronic device 100 displays an interface 1 of the application 1, a specific procedure of simultaneously dragging a plurality of controls by using the data transmission method may include the following steps.

S1301: The window manager service 14 sends dragging data of all dragable controls on the interface 1 to the system interface 15, where the dragging data includes any one or more of an image, a text, and a hyperlink.

All the dragable controls on the interface 1 may include any one or more of an image control, a text control, and a web view control. Dragging data of each control may include any one or more of an image, a text, and a hyperlink. For example, the dragging data of the image control may include an image of the image control, the dragging data of the text control may include a text of the text control, and the dragging data of the web view control may include a hyperlink and an image of the web view control, and optionally, may further include a text of the web view control. For example, the interface 1 may be the group chat interface 220 shown in FIG. 5A. In this case, the dragable controls on the interface 1 may include the image control 221, the image control 222, and the text control 223 shown in FIG. 5A.

When dragging data of a control is sent to the system interface 15, an identifier of the control is further carried, where the identifier of the control is used to identify the control, and is also used to identify dragging data belonging to the same control. The identifier of the control may include any one or more of the following: an identifier (id), a name (name), a link text (LinkText), a class (class), CSS information, Xpath information, and the like.

S1302: The system interface 15 receives and stores the dragging data of all the dragable controls on the interface 1.

After receiving the dragging data of all the dragable controls on the interface 1, the system interface 15 may store a correspondence between an identifier and the dragging data of each control in all the dragable controls on the interface 1. For example, Table 3 shows a correspondence that is between an identifier and dragging data of a control and that is stored in the system interface 15.

**Table 3**

| Identifier of a control | Type | Dragging data |
|---|---|---|
| Control 1 | Image control | Image f |
| Control 2 | Text control | Text b |
| Control 3 | Web view control | Image g and hyperlink d |

As shown in Table 3, the system interface 15 may store a correspondence between identifiers and dragging data of one or more controls, and optionally, may further store a correspondence between identifiers of one or more controls and types of the controls. It can be learned from Table 3 that a type of a control whose identifier is the control 1 is the image control, and dragging data is the image f. A type of a control whose identifier is the control 2 is the text control, and dragging data is the text b. A type of a control whose identifier is the control 3 is the web view control, and dragging data is the image g and the hyperlink d.

It may be understood that the embodiment shown in Table 3 is merely an example. In this embodiment of this application, the system interface 15 may further store more or less data, or may store content different from that in the embodiment shown in Table 3. This is not limited in this application.

S1303: The system interface 15 receives an operation 3 of a user, and displays a drag mode interface in response to the operation 3, where the drag mode interface includes all the dragable controls on the interface 1.

The operation 3 is used to enable a drag mode. The operation 3 may be a sliding operation whose start point is an edge of a display and whose track is L-shaped on the display, or may be a sliding operation from an edge of a display to a left direction, an up direction, or the like and a touch and hold operation after the sliding operation, or may be another customized operation gesture or the like. This is not limited in this application.

The drag mode interface may include all the dragable controls on the interface 1. The system interface 15 may display the drag mode interface based on the dragging data that is of all the dragable controls on the interface 1 and that is obtained in step S1301. For example, the drag interface may be the drag mode interface 500 shown in FIG. 5B.

S 1304: The application 1 receives an operation 4 of the user for the drag mode interface, and determines coordinates 1 of a position of the operation 4 on the drag mode interface in response to the operation 4.

The operation 4 may be a tap operation of the user for any point on the drag mode interface, for example, the tap operation of the user for the image control 221, the tap operation of the user for the image control 222, or the tap operation of the user for the text control 223 in the embodiment shown in FIG. 5B.

The coordinates 1 indicate the position of the operation 4 on the drag mode interface.

S1305: The application 1 sends the coordinates 1 to the drag framework 12.

After the coordinates 1 are determined, the application 1 may send the coordinates 1 to the drag framework 12.

S1306: The drag framework 12 determines whether a dragable control is displayed at the position indicated by the coordinates 1.

After receiving the coordinates 1, the drag framework may determine whether a dragable control is displayed at the position that is on the drag mode interface and that is indicated by the coordinates 1.

If a dragable control is displayed at the position indicated by the coordinates 1, the drag framework 12 performs the following step S1307 to mark the control.

If no dragable control is displayed at the position indicated by the coordinates 1, the drag framework 12 performs the following step S1308, to determine that an operation object of this operation 4 is empty.

S1307: The drag framework 12 marks the control.

If a dragable control is displayed at the position indicated by the coordinates 1, and the drag framework 12 determines that the operation object of the operation 4 is a dragable control, the drag framework 12 may mark the control.

In some embodiments, the drag framework 12 may further display a check mark on the control on the drag mode interface. The check mark may be a mark in the selection identifier 502 shown in FIG. 5C, or may be a pattern of another shape. In addition, in some embodiments, the check mark may be alternatively used to display the control in different colors, different brightness, or the like. For example, refer to related descriptions in the embodiment shown in FIG. 5H. This is not limited in this application.

S1308: The drag framework 12 determines that the operation object is empty.

It should be noted that, in this embodiment of this application, step S1304 to step S1308 are steps that can be repeatedly performed, and a quantity of times of repetition is the same as a quantity of times of performing the operation 4 by the user for the drag mode interface.

S1309: The application 1 receives an operation 5 of the user for the drag mode interface, and sends a drag instruction to the drag framework 12 in response to the operation 5.

The operation 5 may be a touch-and-hold and drag operation of the user for any point on the drag mode interface.

The drag instruction may indicate the drag framework 12 to drag all marked controls.

S1310: The drag framework 12 sends an obtaining request to the system interface 15, to request to obtain dragging data of the marked controls.

The obtaining request may include identifiers of the marked controls. The marked controls may include one or more controls, and the identifiers of the marked controls may include identifiers of the one or more controls.

S1311: The system interface 15 sends the dragging data of the marked controls to the drag framework 12.

After receiving the obtaining request, the system interface 15 may determine the dragging data of the marked controls from the stored dragging data of the plurality of dragable controls based on the identifiers of the marked controls in the obtaining request, and send the dragging data of the marked controls to the drag framework 12.

S1312: The drag framework 12 receives and stores the dragging data of the marked controls.

After receiving the dragging data of the marked controls, the drag framework 12 may store a correspondence between an identifier and dragging data of each control in the marked controls. For a specific storage manner, refer to the content in the embodiment shown in Table 3. Details are not described herein again. The drag framework 12 stores the correspondence between the identifier and the dragging data of each control in the marked controls, and the correspondence may be stored by the drag framework 12. In some other embodiments, the correspondence may be sent by the drag framework 12 to the transfer station 13 and stored by the transfer station 13. For specific operation steps, refer to the related steps in FIG. 8A to FIG. 12.

S1313: The drag framework 12 receives an operation 6 of the user, and sends, in response to the operation 6, the dragging data that is of the control 1 and that is stored in the drag framework 12 to the application 2.

The operation 6 is used to send the dragging data that is of the control 1 and that is stored in the drag framework 12 (or the transfer station 13) to the application 2.

In some embodiments, the operation 6 may be a touch-and-hold and drag operation for a transfer station icon, or may be a touch-and-hold and drag operation for a thumbnail in a transfer station sidebar, for example, the touch-and-hold and drag operation for the thumbnail 321 in the embodiment shown in FIG. 3I, or the touch-and-hold and drag operation for the thumbnail 421 in the embodiment shown in FIG. 4I.

S1314: The system interface 15 receives an operation 7 of the user, and disables displaying of the drag mode interface in response to the operation 7.

The operation 7 is used to exit the drag mode and disable displaying the drag mode interface. The operation 7 may be the tap operation for any point on the drag mode interface 500, or a tap operation for an area in which no dragable control is displayed on the drag mode interface 500 in the embodiment shown in FIG. 5E. In some embodiments, the operation 7 may alternatively be another gesture, a customized gesture operation, or the like. This is not limited in this application.

In this way, after the drag mode is enabled, a plurality of controls in the application 1 may be simultaneously transmitted to the application 2 by using the drag framework 12 (or by using the drag framework 12 and the transfer station 13). An operation is simple, and efficiency of dragging a plurality of controls is improved.

It should be noted that, after the drag mode is enabled, the transfer station icon may be displayed on the drag mode interface, the drag layer and the drag track may be displayed in a drag process, or the dragging data of the marked controls may be sent to the transfer station 13, and the transfer station 13 stores the dragging data of the marked controls and displays thumbnails on the transfer station icon. For specific steps, refer to related steps in the embodiment shown in FIG. 8A and FIG. 8B. Details are not described herein again.

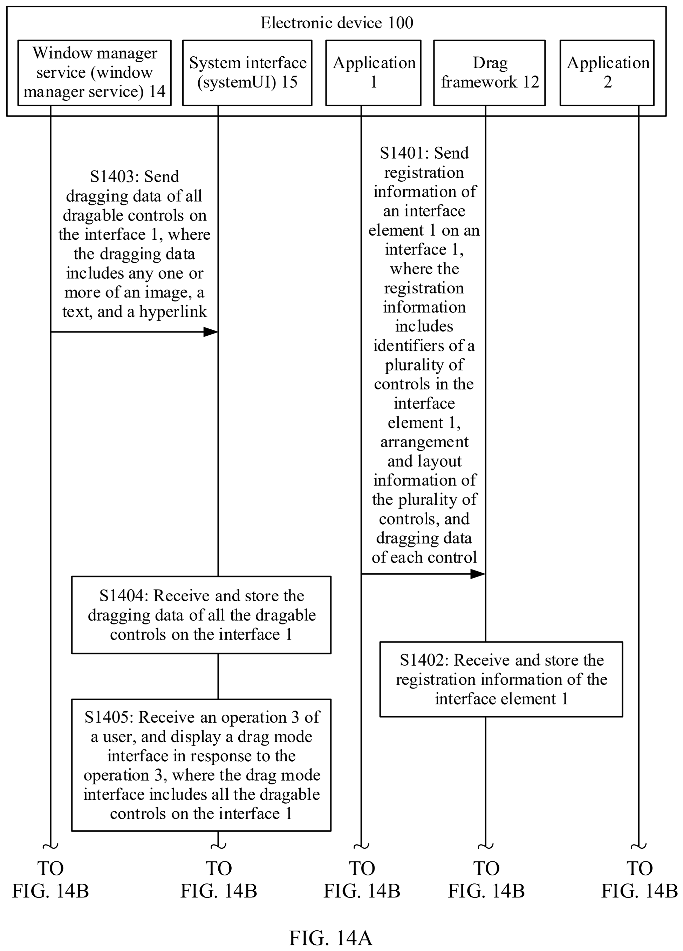

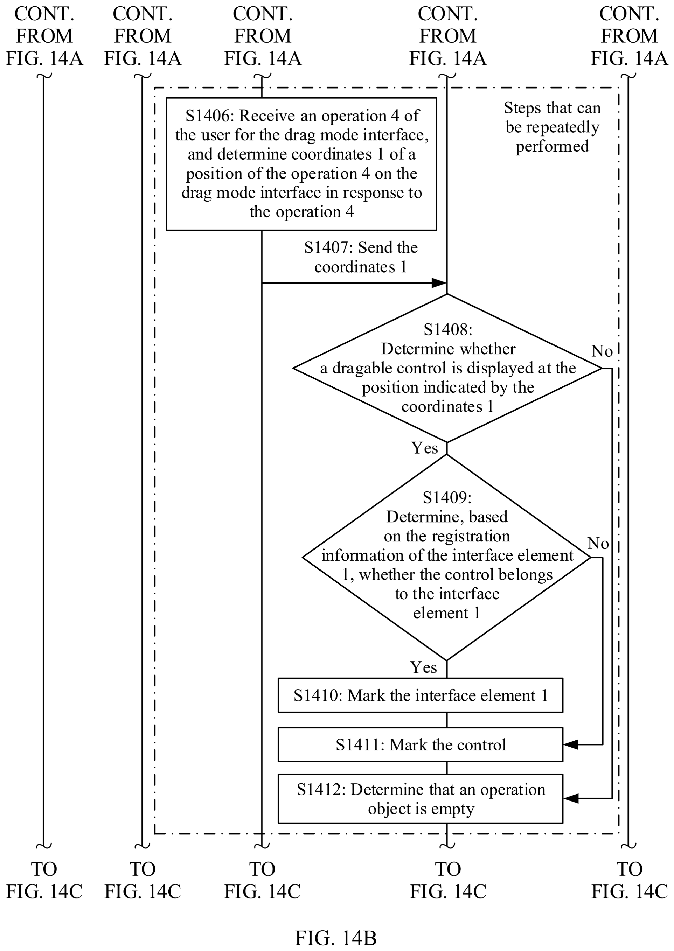

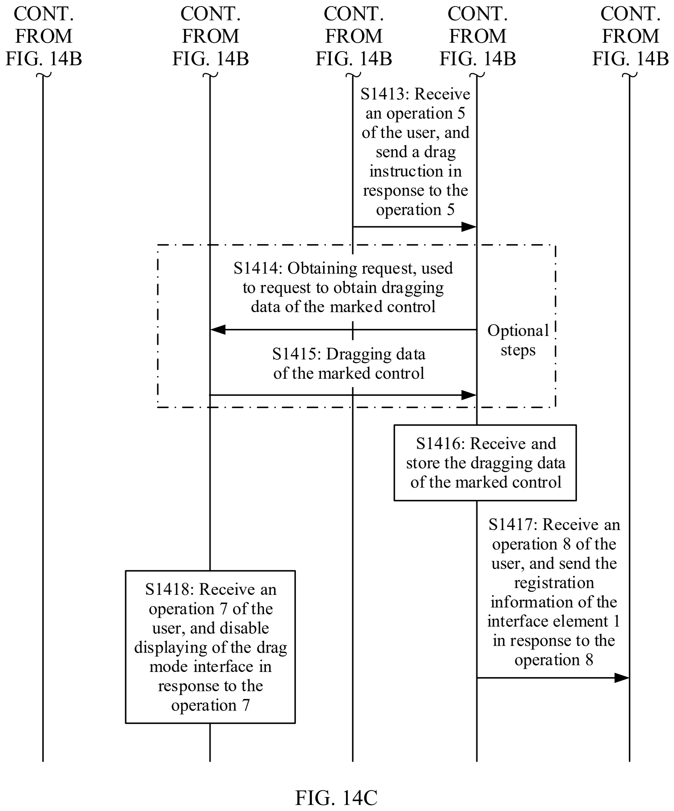

FIG. 14A to FIG. 14C are a schematic flowchart of dragging an interface element including a plurality of controls by using a data transmission method according to an embodiment of this application.

As shown in FIG. 14A to FIG. 14C, the electronic device 100 may include an application 1, an application 2, a drag framework 12, a window manager service (windowmanagerservice) 14, and a system interface (systemUI) 15. When the electronic device 100 displays an interface 1 of the application 1, and an interface element 1 including a plurality of controls is displayed on the interface 1, a specific procedure of dragging the interface element including the plurality of controls by using the data transmission method may include the following steps.

S1401: The application 1 sends registration information of the interface element 1 on the interface 1 to the drag framework 12, where the registration information includes identifiers of the plurality of controls in the interface element 1, arrangement and layout information of the plurality of controls, and dragging data of each control.

For an identifier of a control and dragging data of the control, refer to the related descriptions of the dragging data in step S1301 shown in FIG. 13A and FIG. 13B. The arrangement and layout information of the plurality of controls in the interface element 1 may be a relative position relationship of the plurality of controls, or may be coordinate information of each of the plurality of controls in a same coordinate system. The coordinate system may be a two-dimensional coordinate system constructed on the interface 1 by using any point on the interface 1 as an origin. In some embodiments, the arrangement and layout information of the plurality of controls may alternatively be other information that may indicate a position relationship of the plurality of controls in the interface element 1. This is not limited in this application.

In some embodiments, when detecting that the interface element 1 including the plurality of controls exists on the currently displayed interface 1, the application 1 may send the registration information of the interface element 1 to the drag framework 12. In some other embodiments, the application 1 may alternatively receive a preset specific operation, and send the registration information of the interface element 1 to the drag framework 12 in response to the preset specific operation. It may be understood that if the interface 1 further includes one or more other interface elements including a plurality of controls, the application 1 may also send registration information of the one or more interface elements to the drag framework 12. This is not limited in this application.

S1402: The drag framework 12 receives and stores the registration information of the interface element 1.

The drag framework 12 may store the registration information of the interface element 1. For example, Table 4 shows the registration information of the interface element 1 stored in the drag framework 12.

**Table 4**

| Identifier of a control | Type | Dragging data | Arrangement and layout information |
|---|---|---|---|
| Control 1 | Image control | Image f | Upper left |
| Control 2 | Text control | Text b | Lower part |
| Control 4 | Image control | Image h | Upper right |

As shown in Table 4, the registration information of the interface element 1 stored in the drag framework may include a correspondence among the identifiers, the dragging data, and the arrangement layout information of the plurality of controls, and optionally, may further include types of the plurality of controls.

It can be learned from Table 4 that the interface element 1 may include three controls, and identifiers of the three controls are respectively the control 1, the control 2, and the control 4. A type of the control whose identifier is the control 1 is an image control, dragging data is the image f, and the control is located on the upper left corner of the interface element 1. A type of the control whose identifier is the control 2 is a text control, dragging data is the text b, and the control is located on the upper right corner of the interface element 1. A type of the control whose identifier is the control 4 is an image control, dragging data is the image h, and the control is located on the lower part of the interface element 1.

It may be understood that the embodiment shown in Table 4 is merely an example. In this embodiment of this application, the registration information of the interface element 1 may further include more or less data, or may store content different from that in the embodiment shown in Table 4. This is not limited in this application.

S1403: The window manager service (windowmanagerservice) 14 sends dragging data of all dragable controls on the interface 1 to the system interface (systemUI) 15, where the dragging data includes any one or more of an image, a text, and a hyperlink.

S1404: The system interface 15 receives and stores the dragging data of all the dragable controls on the interface 1.

S1405: The system interface 15 receives an operation 3 of a user for enabling a drag mode, and displays a drag mode interface in response to the operation 3, where the drag mode interface includes all the dragable controls on the interface 1.

S1406: The application 1 receives an operation 4 of the user for the drag mode interface, and determines coordinates 1 of a position of the operation 4 on the drag mode interface in response to the operation 4.

S1407: The application 1 sends the coordinates 1 to the drag framework 12.

For specific content of step S1403 to step S1407, refer to the related content of step S1301 to step S1305 in the embodiment shown in FIG. 13A and FIG. 13B. Details are not described herein again.

S1408: The drag framework 12 determines whether a dragable control is displayed at the position indicated by the coordinates 1.

If a dragable control is displayed at the position indicated by the coordinates 1, the drag framework 12 performs the following step S1409 to mark the control.

If no dragable control is displayed at the position indicated by the coordinates 1, the drag framework 12 performs the following step S1412, to determine that an operation object of this operation 4 is empty.

S1409: The drag framework 12 determines, based on the registration information of the interface element 1, whether the control belongs to the interface element 1.

If the control belongs to the interface element 1, the drag framework 12 performs the following step S1410.

If the control does not belong to the interface element 1, the drag framework 12 performs the following step S1411.

S1410: The drag framework 12 marks the interface element 1.

S1411: The drag framework 12 marks the control.

S1412: The drag framework 12 determines that the operation object is empty.

It should be noted that, in this embodiment of this application, step S1405 to step S1412 are steps that can be repeatedly performed, and a quantity of times of repetition is the same as a quantity of times of performing the operation 4 by the user for the drag mode interface.

S1413: The application 1 receives an operation 5 of the user for the drag mode interface, and sends a drag instruction to the drag framework 12 in response to the operation 5.

S1414: The drag framework 12 sends an obtaining request to the system interface 15, to request to obtain dragging data of the marked controls.

S1415: The system interface 15 sends the dragging data of the marked controls to the drag framework 12.

It should be noted that the step S1414 and the step S1415 are optional steps. If there is no marked control other than the interface element 1, the two steps do not need to be performed. If there is a marked control other than the interface element 1, the dragging data of the marked control may be obtained by performing the two steps.

S1416: The drag framework 12 receives and stores the dragging data of the marked control.

S1417: The drag framework 12 receives an operation 8 of the user, and sends, in response to the operation 8, the registration information that is of the interface element 1 and that is stored in the drag framework 12 to the application 2.

The operation 8 is used to send the registration information of the interface element 1 to the application 2.

In some embodiments, the operation 8 may be a touch-and-hold and drag operation for a transfer station icon, or may be a touch-and-hold and drag operation for a thumbnail in a transfer station sidebar, for example, the touch-and-hold and drag operation for the thumbnail 652 in the embodiment shown in FIG. 6K, or the touch-and-hold and drag operation for the thumbnail 742 in the embodiment shown in FIG. 7K.

S1418: The system interface 15 receives an operation 7 of the user, and disables displaying of the drag mode interface in response to the operation 7.

For other specific content of step S1411 to step S1418, refer to the related descriptions of step S1307 to step S1314 in the embodiment shown in FIG. 13A and FIG. 13B. Details are not described herein again.

The following describes a software architecture of the electronic device 100 according to an embodiment of this application.

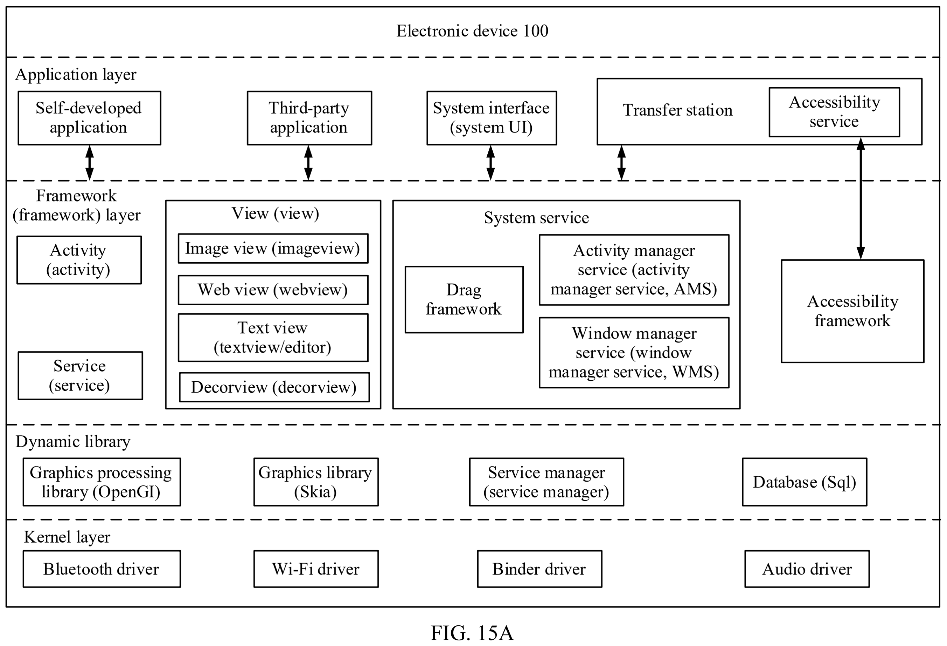

A software system of the electronic device 100 may use a layered architecture, an event-driven architecture, a microkernel architecture, a micro service architecture, or a cloud architecture. In the layered architecture, software is divided into several layers, and each layer has a clear role and task. The layers communicate with each other through a software interface. In this embodiment of the present invention, a software structure of the electronic device 100 is described as an example with reference to FIG. 15A.

As shown in FIG. 15A, the electronic device 100 may include an application layer, a framework layer (framework), a dynamic library, and a kernel layer.

The application layer may include a series of application packages. The series of application packages may include a self-developed application, for example, a gallery application, or may include a third-party application, for example, a social application. The application layer may further include a transfer station. In some embodiments, the transfer station may include an accessibility service. In some embodiments, the application layer may further include a system interface (systemUI), and the system interface may be used to display a drag mode interface.

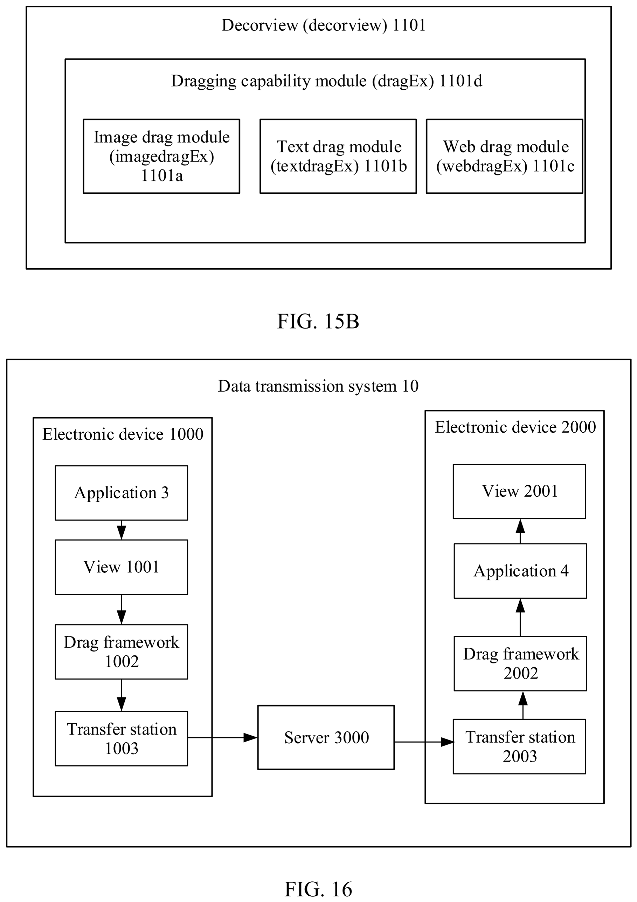

The framework layer provides an application programming interface (application programming interface, API) and a programming framework for application programs at the application layer. The framework layer may include an activity (activity), a service (service), a view (view), and a system service (systemservice). The view may include a decorview (decorview), and may further include one or more view modules of different types, for example, an image view (imageview), a web view (webview), and a text view (textview). The decorview may further include a plurality of different types of drag modules. For details, refer to the following descriptions in the embodiment shown in FIG. 15B. The system service may include a drag framework, an activity manager service (activitymanagerservice, AMS), and a window manager service (windowmanagerservice, WMS). The WMS is used to manage a window program. The window manager may obtain a size of a display, determine whether there is a status bar, perform screen locking, take a screenshot, and the like. The view may be used to construct an application. A display interface may include one or more views. For example, a display interface including a notification icon of Messages may include a text display view and an image display view. In some embodiments, the framework layer may further include an accessibility framework, and the accessibility framework may monitor an event, obtain a text, and send the obtained text to the accessibility service.

The dynamic library may include a graphics processing library (for example, OpenGL), a graphics library (for example, Skia), a service manager (servicemanager), a database (for example, SQL), and the like.

The kernel layer is a layer between hardware and software. The kernel layer may include one or more drivers, for example, a Bluetooth driver, a Wi-Fi driver, a binder driver, and an audio driver.

In the embodiment shown in FIG. 15A, both the self-developed application and the third-party application may be used as transmit ends of data transmission, for example, the application 1 in the foregoing embodiment, or may be used as receive ends of data transmission, for example, the application 2 in the foregoing embodiment. The view may be the view 11 in the embodiments shown in FIG. 8A to FIG. 12. The decorview may be the decorview 1101 in the foregoing embodiment. The image view may be the image view 1102 in the foregoing embodiment. The text view may be the text view 1103 in the foregoing embodiment. The web view may be the web view 1104 in the foregoing embodiment. The drag framework may be the drag framework 12 in the foregoing embodiment. The transfer station may be the transfer station 13 in the foregoing embodiment. The system interface may be the system interface 15 in the foregoing embodiment. For functions of the foregoing modules, refer to the related descriptions in the embodiments shown in FIG. 8A to FIG. 12. Details are not described herein again.

It may be understood that the embodiment shown in FIG. 15A is merely an example. In some embodiments, the electronic device 100 may include more or fewer modules than those in the embodiment shown in FIG. 15A. This is not limited in this application.

FIG. 15B is a diagram of a structure of the decorview (decorview) 1101.

As shown in FIG. 15B, the decorview 1101 may include a drag capability module (dragEx) 1101d, and the drag capability module 1101d may include one or more drag modules of different types, for example, the image drag module (imagedragEx) 1101a, the text drag module (textdragEx) 1101b, and the web drag module (webdragEx) 1101c.

The image drag module 1101a may create a dragged object of an image type, and may obtain data such as an image of an image control. The text drag module 1101b may create a dragged object of a text type, and may obtain data such as a text of a text control. The web drag module 1101c may create a dragged object of a web view control type, and may obtain data such as a hyperlink, an image, and a text of a web view control.

It may be understood that the embodiment shown in FIG. 15B is merely an example. In some embodiments, the decorview 1101 may include more or fewer modules than those in the embodiment shown in FIG. 15B. This is not limited in this application.

In some application scenarios, data in the electronic device 100 may also be transmitted to another electronic device by using the data transmission method provided in embodiments of this application.

For example, FIG. 16 is a diagram of a structure of a data transmission system 10 according to an embodiment of this application.

As shown in FIG. 16, the data transmission system 10 may include an electronic device 1000, an electronic device 2000, and a server 3000. The electronic device 1000 may include an application 3, a view 1001, a drag framework 1002, and a transfer station 1003. The electronic device 2000 may include an application 4, a view 2001, a drag framework 2002, and a transfer station 2003. A communication connection is established between the electronic device 1000 and the server 3000, and a communication connection is established between the electronic device 2000 and the server 3000. The electronic device 1000 and the electronic device 2000 have a same user identifier. For example, the electronic device 1000 and the electronic device 2000 may be logged in with a same account. The user identifier may include an identifier used to identify a user identity, for example, an ID or an account of a user.

In the data transmission system 10, when detecting an operation 1 of the user for a control 1, the electronic device 1000 may transmit, by using the view 1001 and the drag framework 1002, a dragged object (or a drag type and dragging data) of the control 1 in an application 3 to the transfer station 1003 in the manner shown in any one of the embodiments in FIG. 8A, FIG. 8B, FIG. 9, and FIG. 11A to FIG. 14C, and store the dragged object in the transfer station 1003. The electronic device 1000 may upload the dragged object of the control 1 stored in the transfer station to the server 3000. In addition, the electronic device 1000 may further send the user identifier to the server 3000.

The server 3000 may receive the dragged object that is of the control 1 and that is sent by the electronic device 1000, and store the dragged object of the control 1 based on the user identifier sent by the electronic device 1000.

The electronic device 2000 may obtain the dragged object of the control 1 from the server 3000 based on a user identifier that is the same as the user identifier of the electronic device 1000, and store the dragged object in the transfer station 2003 of the electronic device 2000. Then, the electronic device 2000 may also transmit, by using modules such as the transfer station 2003 and the drag framework 2002, the dragged object of the control 1 in the transfer station to an application 2 on the electronic device 2000 in the manner shown in FIG. 12.

It may be understood that, in some embodiments, the electronic device 1000 and/or the electronic device 2000 may further include a system interface module, and the system interface module may perform a function performed by the system interface 15 in the foregoing embodiment.

In this way, cross-device transmission of a control may be implemented by using a transfer station. In addition, with reference to the foregoing embodiment of dragging a plurality of controls at the same time, the data transmission method may also be applied to a mobile phone cloning scenario.

It should be noted that, in the data transmission system shown in FIG. 16, for hardware structures and software architectures of the electronic device 1000 and the electronic device 2000, refer to the hardware structure and the software architecture of the electronic device 100 shown in the foregoing embodiment. For a hardware structure of the server 3000, refer to the embodiment shown in FIG. 1B.

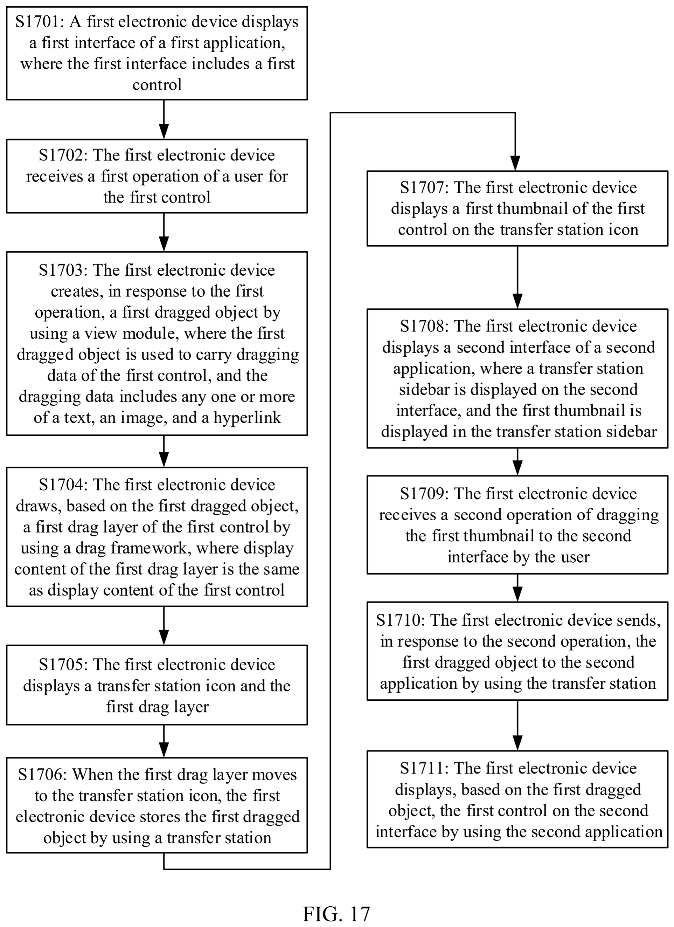

FIG. 17 is a schematic flowchart of a data transmission method according to an embodiment of this application.

As shown in FIG. 17, a specific procedure of the data transmission method may include the following steps.

S1701: A first electronic device displays a first interface of a first application, where the first interface includes a first control.

The first electronic device may be the electronic device 100 in the foregoing embodiment, the first application may be the application 1 in the embodiment shown in FIG. 8A and FIG. 8B, and the first control may be the control 1 in the embodiment shown in FIG. 8A and FIG. 8B.

S1702: The first electronic device receives a first operation of a user for the first control.

The first operation may be the touch-and-hold and drag operation of the user for the control 1 in the foregoing embodiment. In some embodiments, the first operation may alternatively be a combined operation, for example, including a touch and hold operation and a drag operation for the control 1.

S1703: The first electronic device creates, in response to the first operation, a first dragged object by using a view module, where the first dragged object is used to carry dragging data of the first control, and the dragging data includes any one or more of a text, an image, and a hyperlink.

The view module may be the view (view) 11 in the foregoing embodiment, and the first dragged object may be the dragged object of the control 1 in the embodiments shown in FIG. 8A to FIG. 9C.

In some embodiments, the first electronic device may alternatively create the first dragged object of the first control by using another module at a framework layer. This is not limited in this application.

For specific content of creating the first dragged object by the first electronic device by using the view module, refer to the related content in steps S801 to S804 in the embodiment shown in FIG. 8A and FIG. 8B and the related content in FIG. 9A to FIG. 9C.

S1704: The first electronic device draws, based on the first dragged object, a first drag layer of the first control by using a drag framework, where display content of the first drag layer is the same as display content of the first control.

The drag framework may be the drag framework 12 in the foregoing embodiment.

The first drag layer of the first control may be the drag layer of the control 1 in the embodiment shown in FIG. 8A and FIG. 8B.

S1705: The first electronic device displays a transfer station icon and the first drag layer.

After displaying the first drag layer, the first electronic device may further draw and display a drag track of the first drag layer based on a track of the drag operation of the user.

S1706: When the first drag layer moves to the transfer station icon, the first electronic device stores the first dragged object by using a transfer station.

The transfer station may be the transfer station 13 in the foregoing embodiment.

For specific content of this step, refer to step S811 in the embodiment shown in FIG. 8A and FIG. 8B.

S1707: The first electronic device displays a first thumbnail of the first control on the transfer station icon.

The first thumbnail of the first control may be the thumbnail of the control 1 in the foregoing embodiment.

S1708: The first electronic device displays a second interface of a second application, where a transfer station sidebar is displayed on the second interface, and the first thumbnail is displayed in the transfer station sidebar.

The second application may be the application 2 in the embodiment shown in FIG. 12, and the second interface may be the interface 2 in the embodiment shown in FIG. 12.

S1709: The first electronic device receives a second operation of dragging the first thumbnail to the second interface by the user.

The second operation may be the operation 2 for the thumbnail 1 in the embodiment shown in FIG. 12.

S1710: The first electronic device sends, in response to the second operation, the first dragged object to the second application by using the transfer station.

S1711: The first electronic device displays, based on the first dragged object, the first control on the second interface by using the second application.

For specific content of step S1708 to step S1711, refer to the related content in the embodiment shown in FIG. 12.

In some embodiments, if the first control is a web view control, the first dragged object may include a hyperlink of the first control. After the first electronic device displays, based on the first dragged object, the first control on the second interface by using the second application, the first electronic device may also receive a tap operation of the user for the first control, and display, in response to the tap operation, a third interface corresponding to the hyperlink. The third interface is the same as an interface that is displayed by the first electronic device by triggering by the first control on the first interface.

In some other embodiments, the first electronic device may further form a data transmission system with a second electronic device and a server, and implement cross-device data transmission by using the transfer station. The second electronic device may be the electronic device 2000 in the foregoing embodiment, and the server may be the server 3000 in the foregoing embodiment. For specific functions of each electronic device and the server, refer to the data transmission system 10 in the embodiment shown in FIG. 16.

Implementations of this application may be randomly combined to achieve different technical effect.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. A computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely example embodiments of the technical solutions of the present invention, and are not intended to limit the protection scope of the present invention. Any modification, equivalent replacement, or improvement made according to the disclosure of the present invention shall fall within the protection scope of the present invention.

## Claims

1. A data transmission method, applied to a first electronic device, wherein the method comprises:
displaying a first interface of a first application, wherein the first interface comprises a first control;
receiving a first operation of a user for the first control;
creating, in response to the first operation, a first dragged object by using a view module, wherein the first dragged object is used to carry dragging data of the first control, and the dragging data comprises any one or more of a text, an image, and a hyperlink;
drawing, based on the first dragged object, a first drag layer of the first control by using a drag framework, wherein display content of the first drag layer is the same as display content of the first control;
displaying a transfer station icon and the first drag layer;
when the first drag layer moves to the transfer station icon, storing the first dragged object by using a transfer station;
displaying a first thumbnail of the first control on the transfer station icon;
displaying a second interface of a second application, wherein a transfer station sidebar is displayed on the second interface, and the first thumbnail is displayed in the transfer station sidebar;
receiving a second operation of dragging the first thumbnail to the second interface by the user;
sending, in response to the second operation, the first dragged object to the second application by using the transfer station; and
displaying, based on the first dragged object, the first control on the second interface by using the second application.

2. The method according to claim 1, wherein creating the first dragged object by using the view module specifically comprises:
obtaining a type of the first control by using the view module;
obtaining, based on the type of the first control, the dragging data of the first control by using the view module; and
generating, based on the type of the first control and the dragging data of the first control, the first dragged object by using the view module, wherein a type of the first dragged object is the same as the type of the first control.

3. The method according to claim 2, wherein the view module comprises a first module and a second module; and
generating, based on the type of the first control and the dragging data of the first control, the first dragged object by using the view module specifically comprises:
when the type of the first control is a first type, generating, based on the first type and the dragging data of the first control, the first dragged object by using the first module; or
when the type of the first control is a second type, generating, based on the second type and the dragging data of the first control, the first dragged object by using the second module.

4. The method according to claim 3, wherein obtaining the dragging data of the first control by using the view module specifically comprises:
when the type of the first control is the first type, obtaining the dragging data of the first control by using the first module; or
when the type of the first control is the second type, obtaining the dragging data of the first control by using the second module.

5. The method according to claim 1, wherein the first operation is a combined operation, and the first operation comprises a third operation and a fourth operation; and
creating, in response to the first operation, the first dragged object by using the view module specifically comprises:
obtaining, in response to the third operation, a type of the first control by using the view module;
creating, based on the type of the first control, an empty dragged object by using the view module, wherein a type of the empty dragged object is the same as the type of the first control;
obtaining, in response to the fourth operation, the dragging data of the first control by using the view module; and
filling, by using the view module, the dragging data of the first control into the empty dragged object, to obtain the first dragged object.

6. The method according to any one of claims 1 to 5, wherein the first control is a web view (webview) control; and before displaying the second interface of the second application, the method further comprises:
receiving a fifth operation of the user for the first control; and
displaying the third interface in response to the fifth operation; and
after displaying, based on the first dragged object, the first control on the second interface by using the second application, the method further comprises:
receiving a sixth operation of the user for the first control; and
displaying the third interface in response to the sixth operation, wherein the fifth operation is the same as the sixth operation.

7. The method according to any one of claims 1 to 6, wherein storing the first dragged object by using the transfer station specifically comprises:
storing, based on a correspondence between the first dragged object and the first thumbnail, the first dragged object by using the transfer station.

8. The method according to claim 1, wherein a type of the first control is a third type; a type of the first dragged object is the third type, and the first dragged object is empty; and the method further comprises:
obtaining, in response to the first operation, an image of the first control by using the view module;
drawing, based on the first dragged object, the first drag layer of the first control by using the drag framework specifically comprises:
drawing, based on the first dragged object and the image of the first control, the first drag layer of the first control by using the drag framework;
after displaying the transfer station icon and the first drag layer, the method further comprises:
obtaining, based on the image of the first control, a text of the first control by using the transfer station; and
storing the first dragged object by using the transfer station specifically comprises:
storing, based on a relationship between the first thumbnail and the text of the first control, the text of the first control and the first dragged object by using the transfer station.

9. A data transmission system, comprising a first electronic device, a server, and a second electronic device, wherein
the first electronic device is configured to display a first interface of a first application, wherein the first interface comprises a first control;
the first electronic device is configured to receive a first operation of a user for the first control; the first electronic device is configured to create, in response to the first operation, a first dragged object by using a view module, wherein the first dragged object is used to carry dragging data of the first control, and the dragging data comprises any one or more of a text, an image, and a hyperlink;
the first electronic device is configured to draw, based on the first dragged object, a first drag layer of the first control by using a drag framework, wherein display content of the first drag layer is the same as display content of the first control;
the first electronic device is configured to display a transfer station icon and the first drag layer;
when the first drag layer moves to the transfer station icon, the first electronic device is configured to store the first dragged object by using a transfer station;
the first electronic device is configured to display a first thumbnail of the first control on the transfer station icon;
after storing the first dragged object by using the transfer station, the first electronic device is configured to send the first dragged object to the server by using the transfer station;
the server is configured to receive and store the first dragged object sent by the first electronic device;
the second electronic device is configured to obtain the first dragged object from the server by using a transfer station of the second electronic device;
the second electronic device is configured to display a fourth interface of a third application, wherein a transfer station sidebar is displayed on the fourth interface, and the first thumbnail is displayed in the transfer station sidebar;
the second electronic device is configured to receive a seventh operation of dragging the first thumbnail to the fourth interface by the user;
the second electronic device is configured to send, in response to the seventh operation, the first dragged object to the third application by using the transfer station of the second electronic device; and
the second electronic device is configured to display, based on the first dragged object, the first control on the second interface by using the third application.

10. An electronic device, wherein the electronic device is a first electronic device and comprises one or more processors and one or more memories, wherein the one or more memories are coupled to the one or more processors, the one or more memories are configured to store computer program code, the computer program code comprises computer instructions, and when the one or more processors execute the computer instructions, the first electronic device is enabled to perform the method according to any one of claims 1 to 8.

11. A computer-readable storage medium, comprising computer instructions, wherein when the computer instructions are run on an electronic device, the electronic device is enabled to perform the method according to any one of claims 1 to 8.
